# EUROPÄISCHE PATENTSCHRIFT

(11) **EP 2 976 547 B1**
(45) Veröffentlichungstag und Bekanntmachung des Hinweises auf die Patenterteilung: **28.03.2018**
(21) Anmeldenummer: 14705350.8
(22) Anmeldetag: 19.02.2014
(51) Int. Cl.: F16F 15/14

(54) **TILGERSCHWINGUNGSDÄMPFER**
ABSORBER-TYPE VIBRATION DAMPER
AMORTISSEUR D'OSCILLATIONS À ABSORBEUR

(30) Priorität: 18.03.2013 DE 102013204711
(43) Veröffentlichungstag der Anmeldung: 27.01.2016
(73) Patentinhaber: ZF Friedrichshafen AG, 88046 Friedrichshafen (DE)
(72) Erfinder: SIEMENS, Kyrill, 97084 Würzburg (DE); WIRACHOWSKI, Michael, 97078 Würzburg (DE)
(86) Internationale Anmeldenummer: PCT/EP2014/053206
(87) Internationale Veröffentlichungsnummer: WO 2014/146850

(56) Entgegenhaltungen:
- DE-A1- 19 911 560
- DE-A1-102012 214 214

## Beschreibung

Ausführungsbeispiele beziehen sich auf einen Tilgerschwingungsdämpfer, wie er beispielsweise bei einem Antriebsstrang eines Kraftfahrzeugs, also beispielsweise im Rahmen eines Anfahrelements eines Kraftfahrzeugs, zur Dämpfung eines Schwingungsanteils einer Drehbewegung eingesetzt werden kann.

In vielen Bereichen des Maschinen-, Anlagen- und Fahrzeugbaus treten bei der Übertragung von Drehbewegungen Drehungleichförmigkeiten auf, die beispielsweise bereits bei einer Einkopplungen einer solchen Drehbewegung in eine Welle oder auch aufgrund sich ändernde Energie- bzw. Drehmomententnahmen aus der Welle und ihrer Drehbewegung ergeben können.

Ein Beispiel hierfür stellen Antriebsstränge von Kraftfahrzeugen, also beispielsweise von Personenkraftwagen, Lastkraftwagen oder andere Nutzfahrzeugen dar, bei denen als Antriebsmotor ein Verbrennungsmotor zum Einsatz kommt. Ein solcher Motor weist häufig aufgrund seines Arbeitsprinzips stoßartige Drehmomentspitzen auf, die in seine Kurbelwelle oder eine entsprechende andere Welle eingekoppelt werden und dort gegebenenfalls zu Abweichungen hinsichtlich eines zeitlichen Verlaufs des Drehmoments und/oder der Drehzahl führen können. Solche Drehungleichförmigkeiten können sich beispielsweise als Schwingungsanteile einer Drehbewegung niederschlagen.

Um solche Drehungleichförmigkeiten oder Schwingungsanteile einer Drehbewegung jedoch von anderen Komponenten eines komplexen mechanischen Systems, wie es ein Antriebsstrang eines Kraftfahrzeugs beispielsweise darstellt, fernzuhalten, werden Schwingungsdämpfer eingesetzt. Diese sollen die Schwingungsanteile eliminieren, zumindest jedoch hinsichtlich ihrer Amplitude reduzieren. So werden beispielsweise bei einem Antriebsstrang eines Kraftfahrzeugs im Rahmen eines Anfahrelements, welches typischerweise zwischen dem Verbrennungsmotor und einem nachfolgenden Getriebe integriert ist, um ein Weiterlaufen des Verbrennungsmotors auch während des Stillstands des Fahrzeugs, bei dem die Getriebeeingangswelle ebenso steht, zu ermöglichen.

Bei Schwingungsdämpfern werden hierbei häufig Energiespeicherelemente eingesetzt, die eine kurzzeitige Aufnahme und damit Zwischenspeicherung von Energiespitzen der Drehbewegung ermöglichen, die dann zu einem späteren Zeitpunkt wieder in die Drehbewegung eingekoppelt werden können. Bei vielen Drehschwingungsdämpfern sind hierbei die häufig als Federelemente ausgestalteten Energiespeicher in den eigentlichen Drehmomentfluss, also den Pfad der Drehbewegung derart eingeschaltet, dass die Drehbewegung über die Energiespeicherelemente transferiert wird.

Bei Tilgerschwingungsdämpfern erfolgt im Unterschied hierzu gerade keine Übertragung der Drehbewegung über die Energiespeicherelemente. Bei diesen handelt es sich bei einem Tilgerschwingungsdämpfer typischerweise um eine oder mehrere Tilgermassen, die in einem Kraftfeld Schwingungen ausführen können, um einen zu dämpfenden Schwingungsanteil der Drehbewegung zu dämpfen. Das Kraftfeld wird hierbei durch die auf die Tilgermassen einwirkenden Kräfte gebildet, zu denen neben der Gewichtskraft insbesondere auch eine Fliehkraft bzw. Zentrifugalkraft zählt.

Hierbei werden zum Teil stark unterschiedliche Anforderungen an entsprechende Tilgerschwingungsdämpfer sowie die diese umfassenden Komponenten gestellt. Neben einer möglichst effizienten Funktion stehen hierbei beispielsweise der zu Verfügung stehende Bauraum, eine möglichst einfache Herstellung und eine möglichst geringe Belästigung durch eine Geräuschentwicklung im Vordergrund, um nur einige Aspekte zu nennen. So stellen die den Tilgerschwingungsdämpfer umgebenden Komponenten diesem typischerweise nur einen beschränkten Bauraum zur Verfügung, den dieser unter allen Betriebszuständen einnehmen darf. Auch soll dieser möglichst einfach herstellbar sein. Betriebsbedingt können bei Tilgerschwingungsdämpfern auch Geräusche auftreten, wenn beispielsweise die sich auf die Tilgermassen einwirkenden Kräfte ändern. Hierdurch kann es geschehen, dass die Tilgermassen des Tilgerschwingungsdämpfers nunmehr nicht mehr im Wesentlichen hinsichtlich ihrer Bewegung von den Fliehkräften, sondern von der auf sie einwirkenden Gewichtskraft geleitet werden, wenn beispielsweise eine Drehzahl der Drehbewegung und damit der Einfluss der Fliehkräfte abnimmt. Hierdurch können dann Geräusche entstehen, wenn die Tilgermassen aneinander oder an andere Komponenten, beispielsweise an Bahnenden ihrer Führungsbahnen, stoßen.

Solche häufig metallischen Geräusche können sowohl vom Fahrer bzw. den Passagieren des Kraftfahrzeugs wie auch außerhalb des Kraftfahrzeugs wahrgenommen werden. Diese Geräusche werden beispielsweise schon deshalb häufig von Personen als störend empfunden, da diese nicht mit dem Auftreten dieser metallischen Geräusche rechnen. Entwickler haben daher auch hier die Bestrebung, eine Geräuschentwicklung eines Tilgerschwingungsdämpfers zu reduzieren.

Die DE 10 2011 100 895 A1 bezieht sich auf ein Fliehkraftpendel mit einem um eine Drehachse verdrehbaren Pendelflansch und einer Mehrzahl von über den Umfang verteilt auf beiden Seiten des Pendelflansches angeordneten Pendelmassen. Jeweils zwei axial gegenüberliegende Pendelmassen sind mithilfe eines den Pendelflansch durchgreifenden Verbindungsmittels miteinander zu Pendelmassenpaaren verbunden. Um eine elastische Begrenzung der Pendelmassen unter Verzicht von Anschlagspuffern und deren Ausschnitten in dem Pendelflansch zu erzielen, wird hier eine elastische Begrenzung einer Schwenkbewegung der Pendelmassen mittels einer radial innerhalb der Pendelmassen integrierten Ringfeder vorgenommen.

Die DE 199 11 560 A1 bezieht sich auf eine Schwingungsdämpfungsvorrichtung mit einem um eine Drehachse drehbaren Grundkörper angeordneten Auslenkungsmassenanordnung mit wenigstens einer Auslenkungsmasse und einer der wenigstens einen Auslenkungsmasse zugeordneten Auslenkungsbahn, entlang welche die Auslenkungsmasse bei Drehung des Grundkörpers um die Drehachse sich bewegen kann. Die Auslenkungsbahn weist einen Scheitelbereich und beiderseits des Scheitelbereichs jeweils Auslenkungsbereiche auf, wobei die Auslenkungsbereiche ausgehend vom Scheitelbereich zu ihren Endbereichen hin einen abnehmenden Abstand zur Drehachse aufweisen, sowie eine in den Endbereichen der Auslenkungsbereiche wirksame Bremsanordnung, durch welche die Bewegung der wenigstens einen Auslenkungsmasse bei Annäherung oder Erreichen eines jeweiligen Endbereichs einer Auslenkungsbahn allmählich verlangsamt wird.

Die DE 10 2012 214 214 A1 bezieht sich auf ein Fliehkraftpendel auf einem Flansch, bei dem ein Anschlagselement als Ring ausgebildet ist. Das Anschlagelement kann sich in einem Beispiel in Umfangsrichtung relativ zu dem Flansch bewegen.

Hierbei soll dies mit möglichst konstruktiv einfachen Mitteln geschehen, um nicht zuletzt ein zur Verfügung stellen der notwendigen Bauteile, jedoch auch einen Zusammenbau derselben zu dem Tilgerschwingungsdämpfer und der diesen umfassenden Komponente möglichst einfach zu gestalten.

Es besteht daher ein Bedarf daran, einen Kompromiss hinsichtlich einer Funktionsweise eines Tilgerschwingungsdämpfers, einer effizienten Ausnutzung des Bauraums, einer Reduzierung entstehender Geräusche und einer möglichst einfachen Herstellung desselben zu verbessern. Diesem Bedarf trägt ein Tilgerschwingungsdämpfer gemäß Patentanspruch 1 Rechnung.

Ein Tilgerschwingungsdämpfer gemäß einem Ausführungsbeispiel zur Dämpfung eines Schwingungsanteils einer Drehbewegung, der beispielsweise bei einem Antriebsstrang eines Kraftfahrzeugs eingesetzt werden kann, umfasst wenigstens drei Tilgermassen, die derart ausgebildet sind, um in Abhängigkeit von der Drehbewegung eine Schwingung auszuführen, um den Schwingungsanteil derselben zu dämpfen. Er umfasst ferner wenigstens ein Führungsbauteil, das ausgebildet ist, um die wenigstens drei Tilgermassen derart beweglich zu führen, dass die Tilgermassen entlang einer zu einer Drehachse der Drehbewegung senkrechten Umfangsrichtung versetzt angeordnet sind und die Schwingung ausführen können. Darüber hinaus umfasst ein Tilgerschwingungsdämpfer gemäß einem Ausführungsbeispiel ein gegenüber dem wenigstens einen Führungsbauteil um die Drehachse der Drehbewegung verdrehbaren Dämpfungsbauteil, das eine Trägerstruktur und wenigstens zwei mit der Trägerstruktur verbundene Dämpfungsstrukturen umfasst, die sich ausgehend von der Trägerstruktur radial erstrecken und so ausgebildet und angeordnet sind, dass jeweils eine Dämpfungsstruktur der wenigstens zwei Dämpfungsstrukturen durch eine elastische Verformung bzw. Deformation bei einem in Kontakt-Treten mit einer von zwei benachbarten Tilgermassen ein Berühren der zwei benachbarten Tilgermassen unterbindet. Alternativ oder ergänzend können das Dämpfungsbauteil und seine Dämpfungsstrukturen auch so ausgebildet sein, dass durch ein in Kontakt Treten einer Tilgermasse der wenigstens drei Tilgermassen mit einer Dämpfungsstruktur der wenigstens zwei Dämpfungsstrukturen das Dämpfungsbauteil derart um die Drehachse verdrehbar ist, dass eine weitere Dämpfungsstruktur der wenigstens zwei Dämpfungsstrukturen mit einer weiteren Tilgermasse der wenigstens drei Tilgermassen in Kontakt tritt.

Einem Tilgerschwingungsdämpfer gemäß einem Ausführungsbeispiel liegt so die Erkenntnis zugrunde, dass der vorgenannte Kompromiss dadurch verbessert werden kann, dass ein Dämpfungsbauteil der zuvor beschriebenen Art und Weise zum Einsatz kommt. Dadurch, dass dieses verdrehbar ausgestaltet ist, nimmt dieses auf die Schwingungen der Tilgermassen während vieler Betriebsbedingungen einen geringeren Einfluss, weshalb die Funktionsweise des Tilgerschwingungsdämpfers kaum beeinträchtigt wird. Wie die nachfolgende Beschreibung noch zeigen wird, kann hierbei das Dämpfungsbauteil platzsparend gerade so integriert werden, dass dieses nur einen geringen zusätzlichen Bauraum in Anspruch nimmt. Dadurch, dass das Berühren von zwei benachbarten Tilgermassen durch das Dämpfungsbauteil unterbunden wird, wird darüber hinaus eine häufig als unangenehm empfundene Geräuschentwicklung reduziert. Die ergänzende oder alternative Wirkung des Dämpfungsbauteils, dass dieses gerade durch ein in Kontakt Treten über eine seiner Dämpfungsstrukturen mit einer Tilgermasse so verdrehbar ist oder verdreht wird, dass eine weitere seiner Dämpfungsstrukturen mit einer anderen Tilgermasse in Kontakt tritt, kann hier zu einer zeitlich begrenzten Kopplung der Tilgermassen untereinander führen. Hierdurch kann es gegebenenfalls möglich sein, ein Anschlagen der weiteren Tilgermasse zu unterbinden, um so möglichst das Entstehen störender Geräusche zu unterbinden oder zumindest zu reduzieren. Je nach konkreter Implementierung eines Ausführungsbeispiels und gegebenenfalls je nach Stärke des in Kontakt Tretens kann es hierbei zu einer Deformation bzw. Verformung der Dämpfungsstruktur und/oder der weiteren Dämpfungsstruktur kommen. Gegebenenfalls kann es ergänzend oder alternativ auch zu einer Bewegung der weiteren Tilgermasse durch das in Kontakt Treten der weiteren Tilgermasse mit der weiteren Dämpfungsstruktur kommen. Da hierbei das Dämpfungsbauteil aufgrund seiner wenigstens zwei Dämpfungsstrukturen mit mehr als nur zwei Tilgermassen in Wechselwirkung treten kann, kann hierdurch gegenüber vielen Konstruktionen dies mithilfe technisch einfacher Mittel, welche auch den Zusammenbau des Tilgerschwingungsdämpfers kaum erschweren, erzielt werden.

Bei einem Tilgerschwingungsdämpfer gemäß einem Ausführungsbeispiel können sich so die Dämpfungsstrukturen radial zwischen zwei benachbarte Tilgermassen erstrecken. Anders ausgedrückt existiert in einem solchen Fall ein Teilkreis um die Drehachse mit einem Radius, sodass entlang des Teilkreises zwischen den zwei benachbarten Tilgermassen genaue eine Dämpfungsstruktur des Dämpfungsbauteils liegt. Beispielsweise je nach konkreter Implementierung oder auch je nach Betriebssituation kann hierbei die betreffende Dämpfungsstruktur gegebenenfalls auch nur teilweise zwischen den beiden betreffenden Tilgermassen angeordnet sein oder liegen.

Optional können bei einem Tilgerschwingungsdämpfer gemäß einem Ausführungsbeispiel die Dämpfungsstrukturen jeweils wenigstens einen Dämpfungsabschnitt umfassen, der ausgebildet und angeordnet ist, um mit wenigstens einer der benachbarten Tilgermassen in Kontakt zu treten, und um sich hierbei elastisch zu verformen. Unter einer elastischen Verformung wird hierbei eine solche verstanden, welche auf einer makroskopischen Skala erkennbar, also mit bloßem Auge als solche erkennbar ist. Verformungen, welche also im Wesentlichen bei einem in Kontakt Treten auch zwischen elastisch nicht als verformbar geltenden Materialien unausweichlich auftreten, werden hierbei also außer Acht gelassen. So kann - je nach Ausführungsbeispiel - unter einer elastischen Verformung eine Solche verstanden werden, bei der eine Formänderung von wenigstens 0,1 ‰, wenigstens 1 ‰, oder wenigstens 1 % auftreten. Hierdurch kann es möglich sein, eine Dämpfungscharakteristik der Dämpfungsstrukturen auf den jeweiligen Anwendungsfall des Tilgerschwingungsdämpfers gezielter abzustimmen. So kann beispielsweise durch die Formgebung der Dämpfungsabschnitte und damit unter Berücksichtigung des Materials, aus dem diese gefertigt sind, durch den Grad der elastischen Verformung die Kraftentfaltung der Dämpfungsabschnitte und damit der Dämpfungsstrukturen auf die Tilgermassen bestimmt und so gegebenenfalls weicher bzw. sanfter ausgestaltet werden. Hierdurch kann somit ein Anschlagsverhalten bzw. ein Dämpfungsverhalten durch die Dämpfungsabschnitte gegebenenfalls gezielter eingestellt werden. Optional kann sich so der Dämpfungsabschnitt radial von der Trägerstruktur erstrecken.

Ergänzend oder alternative kann hierbei der Dämpfungsabschnitt in einer Ebene senkrecht zu der Drehachse eine kreissegmentförmige, kreisbogenförmige, kreisförmige, ellipsenbogenförmige, ellipsensegmentförmige, ellipsoide, polygonale, rechteckige, quadratische, kreuzförmige, U-förmige, V-förmige, W-förmige, hakenförmige, stegförmige und/oder gebogene Außenkontur aufweisen. Optional kann so die Außenkontur des Dämpfungsabschnitts entlang der Drehachse im Wesentlichen konstant sein. So kann sie beispielsweise als Hohlzylindersegment, Hohlzylinder, Vollzylinder oder Vollzylindersegment ausgestaltet sein. Je nach konkreter Implementierung kann hier so also, optional bei einem Tilgerschwingungsdämpfer gemäß einem Ausführungsbeispiel der Dämpfungsabschnitt als Hohlkörper oder als Vollkörper ausgeführt sein.

Optional kann darüber hinaus beim Tilgerschwingungsdämpfer gemäß einem Ausführungsbeispiel die Dämpfungsstruktur ferner wenigstens einen Verbindungsabschnitt aufweisen, der den wenigstens einen Dämpfungsabschnitt mit der Trägerstruktur verbindet. Hierbei kann der Verbindungsabschnitt optional ebenso elastisch verformbar ausgestaltet sein. Je nach konkreter Implementierung kann dahin durch die Verwendung eines entsprechenden Verbindungsabschnitts eine genauere Positionierung des Dämpfungsabschnitts und/oder eine zusätzliche elastische Komponente in die Dämpfungsstruktur integriert werden, um die Kraftentwicklung der Dämpfungsstruktur gegebenenfalls weiter oder auch mehrstufige an die Anforderungen anzupassen, die an den Tilgerschwingungsdämpfer gemäß einem Ausführungsbeispiel gestellt werden. Hierdurch kann es also möglich sein, beispielsweise eine bessere Positionierung der Dämpfungsabschnitte und/oder eine mehrstufigere Kraftentfaltung der Dämpfungsstrukturen zu erzielen.

Optional kann bei einem Tilgerschwingungsdämpfer gemäß einem Ausführungsbeispiel der Verbindungsabschnitt in einer Ebene senkrecht zu der Drehachse eine kreissegmentförmige, kreisbogenförmige, kreisförmige, ellipsenbogenförmige, ellipsensegmentförmige, ellipsoide, polygonale und/oder stegförmige Außenkontur aufweisen.

Ebenso kann optional, ergänzend oder alternativ hierzu der Verbindungsabschnitt als Hohlkörper oder Vollkörper ausgeführt sein. Wie bereits zuvor im Zusammenhang mit dem Dämpfungsabschnitt erläutert wurde, kann so gegebenenfalls eine gezieltere Abstimmung der Kraftentwicklung an die an den Tilgungsschwingungsdämpfer gestellten Anforderungen erzielbar sein, die beispielsweise sanfter einsetzen kann. So kann beispielsweise auch der oder die Verbindungsabschnitt(e) zylinderförmig oder zylindersegmentförmig ausgestaltet sein.

Ergänzend oder alternativ kann bei einem Tilgerschwingungsdämpfer gemäß einem Ausführungsbeispiel die Dämpfungsstruktur einen ersten Dämpfungsabschnitt und einen zweiten Dämpfungsabschnitt umfassen, wobei der erste Dämpfungsabschnitt ausgebildet und angeordnet ist, um mit einer ersten Tilgermasse in Kontakt zu treten, wobei der zweite Dämpfungsabschnitt ausgebildet und angeordnet ist, um mit einer zu der ersten Tilgermasse benachbart angeordneten zweiten Tilgermasse in Kontakt zu treten. Die erste und die zweite Tilgermasse sind hierbei Tilgermassen der wenigstens drei Tilgermassen des Tilgungsschwingungsdämpfers. Hierdurch kann es gegebenenfalls möglich sein, eine Bauraum sparende Implementierung eines Dämpfungsbauteils zu ermöglichen, und so den vorgenannten Kompromiss zu verbessern.

Optional kann bei einem solchen Ausführungsbeispiel der erste Dämpfungsabschnitt mit dem zweiten Dämpfungsabschnitt nur über die Trägerstruktur miteinander verbunden sein. Ebenso optional und ergänzend oder alternativ hierzu können der erste Dämpfungsabschnitt und der zweite Dämpfungsabschnitt einander zugewandt sein. In einem solchen Fall können beispielsweise der erste Dämpfungsabschnitt und der zweite Dämpfungsabschnitt gekrümmt ausgeführt sein. So können in einem solchen Fall optional der erste Dämpfungsabschnitt und der zweite Dämpfungsabschnitt beispielsweise in einer Ebene senkrecht zu der Drehachse eine kreisbogenförmige und/oder eine elliptische Außenkontur aufweisen und so angeordnet sein, dass diese in einem unbelasteten Zustand im Wesentlichen Segmente eines gemeinsamen Kreises, eines gemeinsamen Kreisbogens, einer gemeinsamen Ellipse bzw. eines gemeinsamen Ellipsenbogens in der Ebene bilden.

Ergänzend oder alternativ kann ein Tilgerschwingungsdämpfer gemäß einem Ausführungsbeispiel, wenigstens vier Tilgermassen und wenigstens zwei Dämpfungsbauteile umfassen. Die Dämpfungsbauteile können hierbei so angeordnet und ausgestaltet sein, dass jede Tilgermasse bei einer Bewegung entlang einer ersten Richtung entlang der Umfangsrichtung mit einer Dämpfungsstruktur eines anderen Dämpfungsbauteils in Kontakt treten kann als bei einer Bewegung entlang einer der ersten Richtung entgegengesetzten zweiten Richtung. Anders ausgedrückt kann bei einem solchen Ausführungsbeispiel mit wenigstens vier Tilgermassen und wenigstens zwei Dämpfungsbauteilen eine Anordnung der Dämpfungsstrukturen der wenigstens zwei Dämpfungsbauteile so gewählt werden, dass jede der Tilgermassen bei einer Bewegung entlang der ersten Richtung mit einem anderen Dämpfungsbauteil als bei einer Bewegung entlang der zweiten Richtung in Kontakt tritt, wobei die erste Richtung und die zweite Richtung entlang der Umfangsrichtung der Drehbewegung verlaufen, jedoch entgegengesetzt gerichtet sind. Trotz des Wortbestandteils "Richtung" kann es sich bei den einzelnen "Richtungen" im vorliegenden Fall nicht notwendigerweise um eine Richtung im mathematischen Sinne eines Vektors, sondern um eine Linie handeln, entlang derer die entsprechende Bewegung erfolgt. Eine solche Linie kann geradlinig, jedoch auch gebogen sein. Abzugrenzen sind hier Richtungen, die tatsächlich Richtungen entlang einer Linie, beispielsweise der Bewegungsrichtung, beschreiben. So kann beispielsweise eine erste Richtung einer zweiten Richtung entgegengerichtet sein, beide jedoch entlang einer auch als "Richtung" bezeichneten Linie verlaufen oder gerichtet sein.

Hierdurch kann es gegebenenfalls möglich sein, eine weitere Entkopplung der Tilgermassen voneinander zu erzielen, ohne einen Herstellungsaufwand signifikant zu erhöhen. Durch die zusätzliche Entkopplung der Tilgermassen voneinander kann es gegebenenfalls möglich sein, ihre Schwingfähigkeit weniger zu beeinflussen und so die Funktionsfähigkeit zur Dämpfung des Schwingungsanteils der Drehbewegung weniger stark einzuschränken oder gegebenenfalls sogar zu verbessern. Insgesamt kann so gegebenenfalls der zuvor genannte Kompromiss weiter verbessert werden.

So kann bei einem Tilgerschwingungsdämpfer gemäß einem Ausführungsbeispiel, der wenigstens vier Tilgermassen und wenigstens ein weiteres Dämpfungsbauteil umfasst, diese derart angeordnet sein, dass eine erste Dämpfungsstruktur des weiteren Dämpfungsbauteils mit einer ersten Tilgermasse und einer benachbart zu der ersten Tilgermasse angeordneten zweiten Tilgermasse, eine zweite Dämpfungsstruktur des weiteren Dämpfungsbauteils mit einer dritten Tilgermasse und einer benachbart zu der dritten Tilgermasse angeordneten vierten Tilgermasse in Kontakt treten kann. Eine erste Dämpfungsstruktur des Dämpfungsbauteils kann hierbei mit der ersten Tilgermasse und der benachbart zu der ersten Tilgermasse angeordneten vierten Tilgermassen sowie eine zweite Dämpfungsstruktur mit der zweiten Tilgermasse und der benachbart zu der zweiten Tilgermasse angeordneten dritten Tilgermasse in Kontakt treten. Selbstverständlich kann eine solche Anordnung auch auf mehr als vier Tilgermassen sowie auf mehr als zwei Dämpfungsbauteile entsprechend ausgedehnt werden.

Benachbart sind zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Hierbei bezieht sich die benachbarte Anordnung auf eine Anordnung entlang der Umfangsrichtung und nicht beispielsweise entlang der Drehachse. Die Tilgermassen können hierbei äquidistant, jedoch auch abweichend zu einer äquidistanten Anordnung entlang der Umfangsrichtung angeordnet sein.

Existieren beispielsweise bei einem Ausführungsbeispiel wenigstens drei benachbart zueinander angeordnete Tilgermassen, so lässt sich stets eine Tilgermasse finden, die jeweils eine benachbarte Tilgermasse entlang der Umfangsrichtung und entgegen der Umfangsrichtung aufweist.

Die Begriffe, die hierbei zur Beschreibung der Anordnung der einzelnen Komponenten, Baugruppen und anderer Objekte zueinander verwendet werden, beziehen sich hierbei stets auf die Drehachse der Drehbewegung. Die radiale Richtung, die einfach auch nur als Radialrichtung oder radial bezeichnet wird, steht hierbei stets senkrecht auf der Drehachse und zeigt von dieser weg. Entsprechend entspricht die axiale Richtung, die auch lediglich als Axialrichtung oder axial bezeichnet wird, der Drehachse, während die tangentiale Richtung, die als Umfangsrichtung oder Tangentialrichtung oder einfach tangential bezeichnet wird, sowohl auf der Drehachse wie auch auf der radialen Richtung senkrecht steht.

Ergänzend oder alternativ kann bei einem Tilgerschwingungsdämpfer gemäß einem Ausführungsbeispiel die Trägerstruktur ausgebildet sein, um die wenigstens zwei Dämpfungsstrukturen miteinander zu verbinden. Bei dem Dämpfungsbauteil kann es sich so um ein Bauteil handeln, welches als Ganzes in den Tilgerschwingungsdämpfer integriert werden kann, um so mit technisch einfachen Mitteln montierbar zu sein. Hierdurch kann es möglich sein, die Herstellung des Tilgerschwingungsdämpfers zu vereinfachen und somit den vorgenannten Kompromiss weiter zu verbessern.

So kann das Dämpfungsbauteil bei einem Tilgerschwingungsdämpfer gemäß einem Ausführungsbeispiel ergänzend oder alternativ einteilig, einstückig oder integral ausgebildet sein. Das Dämpfungsbauteil kann so beispielsweise aus einem Kunststoff, also beispielsweise einem spritzgießfähigen Kunststoff, gefertigt sein. Ergänzend oder alternativ kann es auch aus einem metallischen Werkstoff gefertigt sein, also beispielsweise einen Kunststoff und einen metallischen Werkstoff umfassen. Selbstverständlich kann es jedoch auch als mehrteiliges bzw. mehrstückiges Bauteil ausgeführt sein. Die Verwendung eines spritzgießfähigen Kunststoffs kann hier jedoch gegebenenfalls eine Herstellung des Dämpfungsbauteils mit besonders technisch einfachen Mitteln und damit kostengünstig ermöglichen, sodass nicht nur eine einfache Herstellung desselben sondern auch eine einfache Integration in den Tilgerschwingungsdämpfer gemäß einem Ausführungsbeispiel möglich sein kann. Unter einer einstückig ausgebildeten Komponente wird eine solche verstanden, die genau aus einem zusammenhängenden Materialstück gefertigt ist. Unter einer einteilig gefertigten, bereitgestellten oder hergestellten Komponente oder Struktur oder einer integral mit wenigstens einer weiteren Komponente oder Struktur gefertigten, bereitgestellten oder hergestellten Komponente oder Struktur wird eine solche verstanden, die ohne eine Zerstörung oder Beschädigung einer der wenigstens zwei beteiligten Komponenten nicht von der wenigstens einen weiteren Komponente getrennt werden kann. Ein einstückiges Bauteil stellt so auch wenigstens ein integral mit einer anderen Struktur des betreffenden Bauteils gefertigtes oder einteiliges Bauteil dar.

Ergänzend oder alternativ hierzu können bei einem Tilgerschwingungsdämpfer gemäß einem Ausführungsbeispiel die Dämpfungsstrukturen in einem Bereich, in dem sie während des Betriebs des Tilgungsschwingungsdämpfers mit einer Tilgermasse in Kontakt treten können, eine Beschichtung aufweisen, die ausgebildet ist, um eine Geräuschentwicklung im Vergleich zu einer rein metallischen Materialpaarung zu reduzieren. Hierdurch kann es möglich sein, eine Geräuschentwicklung und damit den vorgenannten Kompromiss weiter zu verbessern, unabhängig davon, aus welchem Material das Dämpfungsbauteil ansonsten gefertigt ist.

Ergänzend oder alternativ kann bei einem Tilgerschwingungsdämpfer gemäß einem Ausführungsbeispiel die Trägerstruktur ausgebildet sein, um das Dämpfungsbauteil gegenüber dem wenigstens einen Führungsbauteil drehbar zu lagern. Hierdurch kann es möglich sein, eine Bauraum einsparende Implementierung des Dämpfungsbauteils zu ermöglichen. So kann optional die Trägerstruktur wenigstens einen sich in Umfangsrichtung erstreckenden Umfangsabschnitt umfassen, den wesentlichen ringförmig, zylinderförmig, ringsegmentförmig und/oder zylindersegmentförmig ausgebildet ist. Hierdurch kann so eine sehr kompakte Implementierung des Dämpfungsbauteils erzielt werden. Bei einem solchen Tilgerschwingungsdämpfer gemäß einem Ausführungsbeispiel kann die Trägerstruktur beispielsweise auch wenigstens zwei Umfangsabschnitte und wenigstens einen sich im Wesentlichen axial erstreckenden Axialabschnitt aufweisen, wobei der Axialabschnitt einen ersten Umfangsabschnitt und einen zweiten Umfangsabschnitt der wenigstens zwei Umfangsabschnitte verbindet. Je nach konkreter Implementierung kann so beispielsweise die Trägerstruktur beispielsweise eine radiale Führung an mehr als einem Führungsbauteil ermöglichen, sofern mehr als ein Solches implementiert ist.

Optional kann bei einem Tilgerschwingungsdämpfer gemäß einem Ausführungsbeispiel das Dämpfungsbauteil so ausgebildet sein, um entlang der Umfangsrichtung der Drehbewegung eine Verdrehung des Dämpfungsbauteils gegenüber dem wenigstens einen Führungsbauteil um einen maximalen Verdrehwinkel zu ermöglichen und eine Verdrehung des Dämpfungsbauteils gegenüber dem wenigstens einen Führungsbauteil um einen den maximalen Drehwinkel überschreitenden Winkel zu unterbinden. Hierdurch kann es möglich sein, einerseits eine im Wesentlichen freie Schwingung der Tilgermassen innerhalb des maximalen Schwingwinkels zu ermöglichen, andererseits durch eine Begrenzung der Verdrehbarkeit auf den maximalen Verdrehwinkel einen definierten und gegebenenfalls geräuscharmen Anschlag zu implementieren, durch den ein Zusammenstoßen der Tilgermassen untereinander oder auch ein Einschlagen der eine oder mehrerer Tilgermassen in eine andere Struktur, wodurch ebenfalls Geräusche entstehen könnten, zu vermeiden. Auch hierdurch kann somit gegebenenfalls eine Geräuschentwicklung positiv beeinflusst werden und so der vorgenannte Kompromiss verbessert werden.

Wie bereits zuvor erwähnt wurde, kann ergänzend oder alternativ bei einem Tilgerschwingungsdämpfer gemäß einem Ausführungsbeispiel die Trägerstruktur ausgebildet sein, um das Dämpfungsbauteil durch wenigstens ein Führungsbauteil radial zu führen. Hierdurch kann gegebenenfalls eine Funktionsfähigkeit des Tilgerschwingungsdämpfers auch unter extremeren Betriebsbedingungen, beispielsweise bei entsprechenden Erschütterungen sichergestellt werden.

Optional kann bei einem solchem Tilgerschwingungsdämpfer gemäß einem Ausführungsbeispiel die Trägerstruktur in einer Ebene senkrecht zu der Drehachse eine wenigstens abschnittsweise runde Außenkontur aufweisen. Ebenso kann das wenigstens eine Führungsbauteil, welches ausgebildet ist, um das Dämpfungsbauteil radial zu führen, ebenso in der besagten Ebene eine wenigstens abschnittsweise runde Außenkontur aufweisen, die ausgebildet ist, um mit der Außenkontur der Trägerstruktur derart zusammenzuwirken, um die radiale Führung zu bewirken. Hierdurch kann eine gegebenenfalls bauraumsparendere Implementierung realisiert werden.

Ergänzend oder alternativ hierzu kann bei einem Tilgerschwingungsdämpfer gemäß einem Ausführungsbeispiel die Trägerstruktur wenigstens eine Führungsstruktur aufweisen. Das wenigstens eine Führungsbauteil, welches ausgebildet ist, um das Dämpfungsbauteil radial zu führen, kann in diesem Fall wenigstens eine Gegenführungsstruktur aufweisen, die ausgebildet ist, um in die wenigstens eine Führungsstruktur einzugreifen und so die radiale Führung des Dämpfungsbauteils zu bewirken. Anders ausgedrückt kann ergänzend oder alternativ hierzu die radiale Führung ebenso durch das Zusammenspiel der Führungsstruktur und der Gegenführungsstruktur der Trägerstruktur und des betreffenden Führungsbauteils bewirkt oder zumindest unterstützt werden. Je nach konkreter Implementierung kann hierdurch gegebenenfalls eine mechanisch stabile und/oder bauraumeinsparende Realisierung eines Tilgerschwingungsdämpfers vorgenommen werden.

Optional können bei einem solchen Tilgerschwingungsdämpfer gemäß einem Ausführungsbeispiel die wenigstens eine Führungsstruktur und die wenigstens eine Gegenführungsstruktur ausgebildet sein, um entlang einer Umfangsrichtung der Drehbewegung eine Verdrehung des Dämpfungsbauteils gegenüber dem wenigstens einen Führungsbauteil, um den maximalen Verdrehwinkel zu ermöglichen und eine Verdrehung des Dämpfungsbauteils gegenüber dem wenigstens einen Führungsbauteil um einen den maximalen Verdrehwinkel überschreitenden Winkel zu unterbinden. Zu diesem Zweck kann optional die wenigstens eine Führungsstruktur und die wenigstens eine Gegenführungsstruktur eine Ausnehmung und einen Vorsprung umfassen, die ausgebildet sind, um ineinander einzugreifen und so die radiale Führung des Dämpfungsbauteils zu bewirken, wobei sich eine Länge des Vorsprungs entlang der Umfangsrichtung von einer Länge der Ausnehmung um den maximalen Verdrehwinkel unterscheidet.

Optional kann bei einem Tilgerschwingungsdämpfer gemäß einem Ausführungsbeispiel die Führungsstruktur des Dämpfungsbauteils an einem Führungsabschnitt angeordnet sein, der sich radial von der Trägerstruktur erstreckt. Die Führungsstruktur kann hierbei optional radial innenliegend, radial mittig oder radial außenliegend angeordnet sein. Hierdurch kann es je nach konstruktiven Randbedingungen möglich sein, einen Kompromiss zwischen einer mechanischen Belastung der Führungsstruktur einerseits und den Bauraumverhältnissen andererseits zu verbessern. Bei dem Tilgerschwingungsdämpfers gemäß der Erfindung, ist das Dämpfungsbauteil radial nicht geführt, also radial beweglich ausgestaltet ist.

Dies kann dazu führen, dass das Dämpfungsbauteil eine radiale Bewegung mitausführen kann, sodass eine freiere Bewegung der Tilgermassen gegebenenfalls möglich sein kann. Hierdurch kann gegebenenfalls die Funktionsweise des Tilgerschwingungsdämpfers weiterverbessert werden. Auch hierdurch kann somit der vorgenannte Kompromiss gegebenenfalls verbessert werden. Ergänzend oder alternativ kann bei dem Tilgerschwingungsdämpfer gemäß einem Ausführungsbeispiel das Dämpfungsbauteil ausgebildet sein, um durch wenigstens einen Führungsbauteil entlang der Drehachse geführt zu werden.

Bei einem Tilgerschwingungsdämpfer gemäß einem Ausführungsbeispiel können die Tilgermassen jeweils wenigstens eine Führungslaufbahn aufweisen. Das wenigstens eine Führungsbauteil für die Tilgermassen kann ebenso jeweils wenigstens eine Führungslaufbahn aufweisen, die zu den Führungslaufbahnen der Tilgermassen korrespondiert. Der Tilgerschwingungsdämpfer weist in einem solchen Fall für die Tilgermassen jeweils wenigstens einen Wälzkörper auf, die ausgebildet sind, um an den Führungslaufbahnen des wenigstens einen Führungsbauteils und denen der Tilgermassen abzurollen, um diese so zu führen, dass eine Auslenkung der Tilgermassen aus ihren jeweiligen Mittellagen, die auch als Neutrallage bezeichnet werden, zu einer radialen Verlagerung des Schwerpunkts der betreffenden Tilgermasse führt. Hierdurch kann es möglich sein, einen drehzahladaptiven Tilger oder Tilgerschwingungsdämpfer zu implementieren.

Eine mechanische Kopplung zweier Komponenten umfasst sowohl eine unmittelbare, wie auch eine mittelbare Kopplung. Eine kraftschlüssige oder reibschlüssige Verbindung kommt durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit im Allgemeinen eine Normalkraftkomponente zwischen den beiden Verbindungspartnern voraus.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations-oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie werden hierbei als Rotationssymmetrie bezeichnet.

Wie bereits erläutert wurde, können die vorgenannten Merkmale einzeln, jedoch auch in Kombination miteinander implementiert werden.

Nachfolgend werden unter Bezugnahme auf die beigefügten Figuren Ausführungsbeispiel näher beschrieben und erläutert.
Fig. 1a zeigt eine Aufsicht auf einen konventionellen Tilgerschwingungsdämpfer in einem ersten Betriebszustand;
Fig. 1b zeigt den in Fig. 1a gezeigten Tilgerschwingungsdämpfer in einem zweiten Betriebszustand;
Fig. 2a zeigt eine Aufsicht auf einen Tilgerschwingungsdämpfer gemäß einem Ausführungsbeispiel;
Fig. 2b zeigt eine Querschnittsdarstellung durch den in Fig. 2a gezeigten Tilgerschwingungsdämpfer;
Fig. 3a zeigt eine Aufsicht auf den in Fig. 2a und 2b gezeigten Tilgerschwingungsdämpfer gemäß einem Ausführungsbeispiel, bei dem eines der zwei Führungsbauteile nicht gezeigt ist;
Fig. 3b zeigt eine perspektivische Darstellung des Tilgerschwingungsdämpfers aus den Fig. 2a, 2b und 3a, bei dem ein Führungsbauteil nicht dargestellt ist;
Fig. 4a, 4b und 4c zeigt eine Aufsicht sowie zwei Seitenansichten des Dämpfungsbauteils des Tilgerschwingungsdämpfers aus den Fig. 2a, 2b, 3a und 3b;
Fig. 4d zeigt eine perspektivische Darstellung des Dämpfungsbauteils aus den Fig. 4a bis 4c;
Fig. 5a zeigt eine Aufsicht auf einen Tilgerschwingungsdämpfer gemäß einem Ausführungsbeispiel, bei dem sich die Tilgermassen in einer Mittellage befinden;
Fig. 5b zeigt eine Detailvergrößerung der Darstellung in Fig. 5a;
Fig. 5c zeigt eine Aufsicht auf den in den Fig. 5a und 5b gezeigten Tilgerschwingungsdämpfer gemäß einem Ausführungsbeispiel bei Erreichen eines maximalen Verdrehwinkels;
Fig. 5d zeigt eine Detailvergrößerung aus Fig. 5c;
Fig. 6a zeigt eine Aufsicht auf einen Tilgerschwingungsdämpfer gemäß einem Ausführungsbeispiel, bei dem eines von zwei Führungsbauteilen nicht gezeigt ist in einem ersten Betriebszustand;
Fig. 6b zeigt den in Fig. 6a gezeigten Tilgerschwingungsdämpfer in einem zweiten Betriebszustand;
Fig. 6c zeigt eine Aufsicht auf den Tilgerschwingungsdämpfer aus den Fig. 6a und 6b in einem dritten Betriebszustand;
Fig. 6d zeigt eine Aufsicht auf den in den Fig. 6a bis 6c gezeigten Tilgerschwingungsdämpfer gemäß einem Ausführungsbeispiel in einem vierten Betriebszustand;
Fig. 7a zeigt eine perspektivische Darstellung eines Dämpfungsbauteils eines Tilgerschwingungsdämpfers gemäß einem Ausführungsbeispiel;
Fig. 7b zeigt eine perspektivische Darstellung eines weiteren Dämpfungsbauteils eines Tilgerschwingungsdämpfers gemäß einem Ausführungsbeispiel;
Fig. 7c zeigt eine perspektivische Darstellung eines weiteren Dämpfungsbauteils eines Tilgungsschwingungsdämpfers gemäß einem Ausführungsbeispiel;
Fig. 8a, 8b, 8c zeigen eine Aufsicht, eine Seitenansicht und eine Querschnittsdarstellung durch einen Dämpfungsbauteil eines Tilgungsschwingungsdämpfers gemäß einem Ausführungsbeispiel;
Fig. 8d zeigt eine perspektivische Darstellung des in den Fig. 8a bis 8c gezeigten Dämpfungsbauteils;
Fig. 9a, 9b und 9c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 9d zeigt eine perspektivische Darstellung des in den Fig. 9a bis 9c gezeigten Dämpfungsbauteils;
Fig. 10a, 10b und 10c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 10d zeigt eine perspektivische Darstellung des in den Fig. 10a bis 10c gezeigten Dämpfungsbauteils;
Fig. 11a, 11b und 11c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 11d zeigt eine perspektivische Darstellung des in den Fig. 11a bis 11c gezeigten Dämpfungsbauteils;
Fig. 12a, 12b und 12c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 12d zeigt eine perspektivische Darstellung des in den Fig. 12a bis 12c gezeigten Dämpfungsbauteils;
Fig. 13a, 13b und 13c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 13d zeigt eine perspektivische Darstellung des in den Fig. 13a bis 13c gezeigten Dämpfungsbauteils;
Fig. 14a, 14b und 14c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 14d zeigt eine perspektivische Darstellung des in den Fig. 14a bis 14c gezeigten Dämpfungsbauteils;
Fig. 15 zeigt eine Aufsicht auf einen Tilgerschwingungsdämpfer gemäß einem Ausführungsbeispiel, bei dem ein Führungsbauteil nicht gezeigt ist und der das in den Fig. 14a bis 14d gezeigte Dämpfungsbauteil umfasst;
Fig. 16 zeigt eine Teilaufrissdarstellung auf einen Tilgerschwingungsdämpfer gemäß einem Ausführungsbeispiel;
Fig. 17a zeigt eine Aufsicht auf den in Fig. 16 gezeigten Tilgerschwingungsdämpfer gemäß einem Ausführungsbeispiel;
Fig. 17b zeigt eine Querschnittsdarstellung durch den in Fig. 17a gezeigten Tilgerschwingungsdämpfer;
Fig. 18a, 18b und 18c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 18d zeigt eine perspektivische Darstellung des in den Fig. 18a bis 18c gezeigten Dämpfungsbauteils;
Fig. 19 zeigt eine Aufsicht auf einen Tilgerschwingungsdämpfer gemäß einem Ausführungsbeispiel mit maximal ausgelenkten Tilgermassen, bei dem ein Führungsbauteil nicht dargestellt ist;
Fig. 20a zeigt eine Teilaufrissdarstellung des Tilgerschwingungsdämpfers aus Fig. 19 in einem ersten Betriebszustand;
Fig. 20b zeigt eine Fig. 20a vergleichbare Darstellung des Tilgerschwingungsdämpfers in einem zweiten Betriebszustand;
Fig. 21a, 21b und 21c zeigen eine Aufsicht, eine Seitenansicht und eine Querschnittsdarstellung durch ein weiteres Dämpfungsbauteils eines Tilgerschwingungsdämpfers gemäß der Erfindung;
Fig. 21d zeigt eine perspektivische Darstellung des in den Fig. 21a bis 21c gezeigten Dämpfungsbauteils;
Fig. 22a und 22b zeigen eine Aufsicht und eine Querschnittsdarstellung durch ein weiteres Dämpfungsbauteils eines Tilgerschwingungsdämpfers gemäß einem Ausführungsbeispiel;
Fig. 22c zeigt eine perspektivische Darstellung des in den Fig. 22a und 22b gezeigten Dämpfungsbauteils;
Fig. 23a, 23b und 23c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 23d zeigt eine perspektivische Darstellung des in den Fig. 23a bis 23c gezeigten Dämpfungsbauteils;
Fig. 24a, 24b und 24c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 24d zeigt eine perspektivische Darstellung des in den Fig. 24a bis 24c gezeigten Dämpfungsbauteils;
Fig. 25a, 25b und 25c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 25d zeigt eine perspektivische Darstellung des in den Fig. 25a bis 25c gezeigten Dämpfungsbauteils;
Fig. 26a, 26b und 26c und 26d zeigen jeweils eine Aufsicht auf unterschiedliche Dämpfungsstrukturen von Dämpfungsbauteilen von Tilgungsschwingungsdämpfern gemäß einem Ausführungsbeispiel;
Fig. 27a, 27b und 27c zeigen eine Aufsicht, eine Seitenansicht und eine Querschnittsdarstellung durch ein weiteres Dämpfungsbauteils eines Tilgerschwingungsdämpfers gemäß einem Ausführungsbeispiel;
Fig. 27d zeigt eine perspektivische Darstellung des in den Fig. 27a bis 27c gezeigten Dämpfungsbauteils;
Fig. 28a zeigt eine Querschnittsdarstellung durch einen Tilgerschwingungsdämpfer gemäß einem Ausführungsbeispiel mit zwei der Dämpfungsbauteile aus den Fig. 27a bis 27d;
Fig. 28b zeigt eine perspektivische Darstellung des Tilgerschwingungsdämpfers aus Fig. 28a, bei dem eines der beiden Führungsbauteile nicht gezeigt ist; und
Fig. 28c zeigt eine perspektivische Darstellung der beiden Dämpfungsbauteile des Tilgerschwingungsdämpfers aus den Fig. 28a, 28b zueinander in einer perspektivischen Darstellung.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie eingangs bereits erläutert wurde, werden Tilgerschwingungsdämpfer und andere Schwingungsdämpfer in vielen Bereichen des Maschinen-, Anlagen- und Fahrzeugbaus eingesetzt, bei denen bei einer Erzeugung, Übertragung oder Nutzung einer Drehbewegung einer Welle unerwünschte Schwingungsanteile enthalten sind. Durch den Einsatz eines entsprechenden Schwingungsdämpfers können diese reduziert, gegebenenfalls sogar vollständig entfernt werden.

Ein Beispiel stellen hier Antriebsstränge von Kraftfahrzeugen, also beispielsweise Personenkraftwagen, Lastkraftwagen und Nutzfahrzeugen, dar, bei denen entsprechende Drehungleichförmigkeiten beispielsweise durch das Funktionsprinzip eines Verbrennungsmotors mit einer stoßartigen Kraftentwicklung aufgrund des in diesem Verbrennungsmotor ablaufenden Verbrennungsprozesses auftreten können. Die Drehbewegung wird hierbei von der Kurbelwelle über ein Anfahrelement, welches ein Weiterlaufen des Verbrennungsmotors auch bei einem Stillstand des Fahrzeugs ermöglicht, an einer Getriebeeingangswelle oder eine andere Eingangswelle einer dem Anfahrelement nachgeschalteten Komponente übertragen wird. Das Anfahrelement kann hierbei beispielsweise auf Basis einer hydrodynamischen Kupplung, einer reibschlüssigen Kupplung oder einer Kombination beider Konzepte basieren.

Ein reibschlüssiger Kontakt liegt vor, wenn zwei Objekte miteinander reibschlüssig in Kontakt treten, sodass zwischen diesen eine Kraft im Falle einer Relativbewegung senkrecht zu einer Berührfläche zwischen diesen entsteht, die eine Übertragung einer Kraft, einer Drehbewegung oder eines Drehmoments ermöglicht. Hierbei kann ein Drehzahlunterschied, also beispielsweise ein Schlupf, bestehen. Neben einem solchen reibschlüssigen Kontakt umfasst ein reibschlüssiger Kontakt jedoch auch eine reibschlüssige bzw. kraftschlüssige Verbindung zwischen den betreffenden Objekten, bei denen ein entsprechender Drehzahlunterschied bzw. Schlupf im Wesentlichen nicht auftritt.

Entsprechende Anfahrelemente können beispielsweise als hydrodynamische Wandler mit einer Überbrückungskupplung implementiert werden.

Schwingungsdämpfer, zu denen auch Tilgerschwingungsdämpfer zählen, weisen hierbei Energiespeicherelemente auf, die so angeordnet und ausgebildet sind, dass diese Energiespitzen, die während der Drehungleichförmigkeiten auftreten, aufnehmen können und zu einem anderen Zeitpunkt in die Drehbewegung wieder einkuppeln können. Hierdurch werden die unerwünschten Schwingungsanteile reduziert bzw. gedämpft gegebenenfalls sogar vollständig eliminiert.

Bei Tilgerschwingungsdämpfern sind hierbei die Energiespeicherelemente nicht im Drehmomentfluss bzw. in dem Übertragungsweg der Drehbewegung eingeschlossen. Sie werden vielmehr lediglich an die Drehbewegung mittels eines Flansches angekoppelt und können so die entsprechende Energie aufnehmen und über den Flansch gegebenenfalls wieder abgeben.

Die Energiespeicherelemente weisen hierbei Tilgermassen auf, die sich in einem Kraftfeld bewegen, welches durch die auf die Tilgermassen einwirkende Schwerkraft und die auf sie einwirkenden Fliehkräfte gegeben sind. Je nachdem, in welchem Betriebszustand sich der Tilgerschwingungsdämpfer befindet, können hierbei die beiden vorgenannten Kräfte in einem unterschiedlichen betragsmäßigen Verhältnis zueinander stehen, weshalb es gegebenenfalls bei ungünstigen Betriebszuständen zu einer Kollision der Tilgermassen untereinander oder einem Anschlagen der Tilgermassen in ihren Endpunkten kommen kann. Bei konventionellen Tilgerschwingungsdämpfern werden solche Ereignisse häufig von einem von dem Fahrer eines entsprechenden Kraftfahrzeugs, seinen Passagieren oder auch Passanten als unangenehm, weil sie unerwartet auftreten und daher als unangenehm empfundenen Geräuschen begleitet werden können. Da die betreffenden Komponenten meist aus einem metallischen Werkstoff gefertigt sind, klingen die entsprechenden Geräusche häufig metallisch.

Wie die nachfolgende Erörterung noch zeigen wird, kann es durch den Einsatz eines Ausführungsbeispiels eines Tilgerschwingungsdämpfers möglich sein, metallische Geräusche zu verhindern, zumindest jedoch zu vermindern, welche beispielsweise sowohl in normalen Fahrzeugbetrieb als auch in einem Kriechbetrieb des Fahrzeugs sowie nach dem Abstellen auch als Motor bezeichneten Verbrennungsmotors auftreten können. Gerade bei Fahrzeugen, welche mit einer Motor-Start-Stopp-Automatik (MSA) ausgerüstet sind, können solche Ereignisse vergleichsweise häufig auftreten.

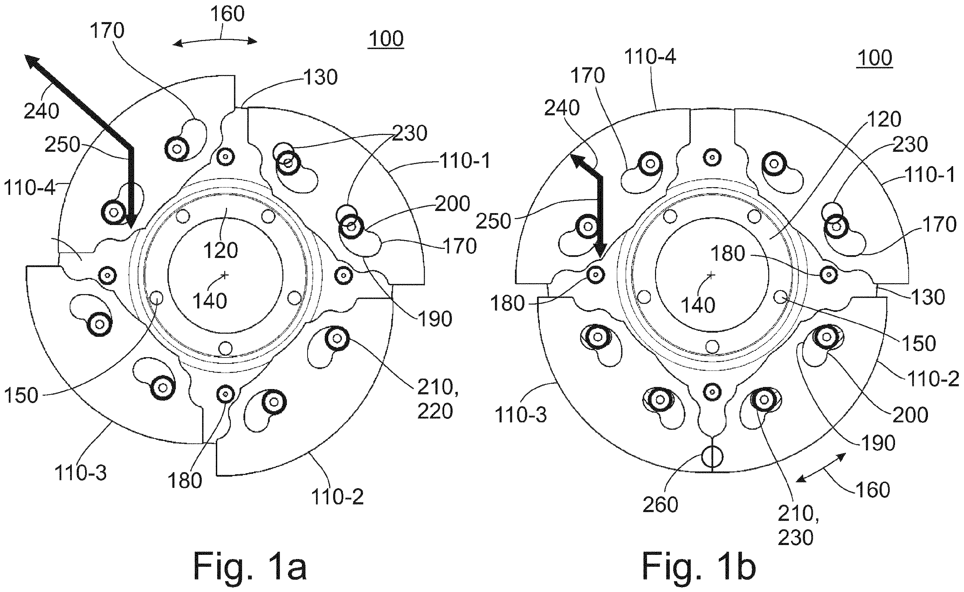

Um dies näher zu illustrieren, zeigen die Fig. 1a und 1b jeweils eine Aufsicht auf einen konventionellen Tilgerschwingungsdämpfer 100, der vier Tilgermassen 110-1, 110-2, 110-3 und 110-4 aufweist, die gerade so ausgebildet sind, um in Abhängigkeit von der über einen Flanschbereich 120 eingekoppelte Drehbewegung eine Schwingung auszuführen, um einen Schwingungsanteil der Drehbewegung zu dämpfen. Zu diesem Zweck weist der Tilgerschwingungsdämpfer 100 in der hier gezeigten Form zwei Führungsbauteile 130 auf, von denen jedoch eines der besseren Übersichtlichkeit halber in den Fig. 1a und 1b nicht gezeigt ist. Der Flanschbereich 120 ist hierbei im Bereich einer Drehachse 140 radial innen eines der Führungsbauteile ausgebildet und weist entsprechend dort mehrere Flanschbohrungen 150 zur mechanischen Befestigung des Tilgerschwingungsdämpfers 100 an einer anderen Komponente auf.

Die Führungsbauteile 130 sind hierbei ausgebildet, um die Tilgermassen 110 gerade derart beweglich zu führen, dass diese entlang einer zu der Drehachse 140 der Drehbewegung senkrechten Umfangsrichtung 160 versetzt angeordnet sind und die Schwingung ausführen können. Zu diesem Zweck weisen sowohl die Tilgermassen 110 wie auch die Führungsbauteile 130, die auch aufgrund ihrer blechartigen Ausgestaltung als Führungsbleche bezeichnet werden, Führungslaufbahnen 170 auf, von denen jedoch in den Fig. 1a und 1b lediglich einige exemplarisch mit den betreffenden Bezugszeichen bezeichnet sind. Da die Tilgermassen 110 hierbei insbesondere die Führungslaufbahnen in den Führungsbauteilen 130 überdecken, sind diese ebenso in den Fig. 1a und 1b nicht zu sehen.

Die Führungslaufbahnen 170 der Tilgermassen 110 und der Führungsbauteile 130, die durch eine Distanzverbindung in Form mehrerer Distanzniete 180 miteinander drehfest und entlang der Drehachse 140 auf Abstand fixiert sind, korrespondieren hierbei zueinander. So sind die Führungslaufbahnen 170 der Tilgermassen 110 und der Führungsbauteil 130 im Wesentlichen identisch ausgestaltet, jedoch spiegelbildlich zueinander ausgerichtet, sodass bei einer Auslenkung der Tilgermassen aus einer Mittellage heraus, ein Schwerpunkt der Tilgermassen 110 radial verlagert wird. Die Führungslaufbahnen 170 sind hierbei im Wesentlichen nierenförmig ausgestaltet, weisen also einen durchgehenden gebogenen Abschnitt 190 und einen diesem gegenüberliegenden ausgestülpten Abschnitt 200 auf.

Um nun eine Führung der Tilgermassen 110 durch die Führungsbauteile 130 zu ermöglichen, weist der Tilgerschwingungsdämpfer 100 ferner für jede Tilgermasse 110 wenigstens eine, im vorliegenden Fall zwei Wälzkörper 210 auf, die hier als gestufte Rollen 220 ausgestaltet sind.

In einem Normalbetrieb können die besagten Geräusche beispielsweise durch das Anschlagen der auch als Fliehgewichte bezeichneten Tilgermassen 110 an Bahnenden 230 der Führungslaufbahnen 170 entstehen. Dies kann beispielsweise dann der Fall sein, wenn die Tilgermassen 110 aufgrund der auftretenden Schwingungen zu einer größeren Schwingungsamplitude tendieren, als der konstruktiv definierte maximale Schwingwinkel, der auch als Verdrehwinkel bezeichnet wird, dies zulässt, wie dies beispielsweise in Fig. 1a gezeigt ist. Es kommt somit zu einer Kollision der Wälzkörper 210 mit den Bahnenden 230 der betreffenden Führungslaufbahnen 170.

In diesem Betriebszustand ist typischerweise eine Fliehkraft 240 betragsmäßig größer als eine auf die Tilgermassen 110 einwirkende Gewichtskraft 250.

Sinkt jedoch die Drehzahl der Drehbewegung, die in dem Tilgerschwingungsdämpfer 100 eingekoppelt wird ab, kann sich diese Situation ändern, wie dies in Fig. 1b dargestellt ist. So kann beispielsweise nach dem Ausschalten des Motors die Drehzahl der Getriebeeingangswelle auf null absinken, mit der der Tilgerschwingungsdämpfer gegebenenfalls drehfest oder drehstarr gekoppelt sein kann. Mit sinkender Drehzahl der Getriebeeingangswelle sinkt in einem solchen Fall jedoch auch die Fliehkraft 240 betragsmäßig, welche auf die Tilgermassen 110 wirkt. Dadurch unterliegen die Tilgermassen 110 gegebenenfalls keinen oder reduzierten radialen Zwangsbedingungen und/oder Zwangskräften. In einem solchen Betriebspunkt oder Betriebszustand können gegebenenfalls die Tilgermassen aufgrund der auf sie einwirkenden Gewichtskräfte 250 entlang ihrer auch als Bahnen bezeichneten Führungslaufbahnen 170 entlanggleiten oder gegebenenfalls auch frei herunterfallen.

Je nach konkreter Stellung des Tilgerschwingungsdämpfers 100 bzw. seiner Führungsbauteile 130 können hierbei die Tilgermassen 110 an ihren jeweiligen Bahnenden 230 anschlagen und/oder auch miteinander kollidieren, wie dies exemplarisch in Fig. 1b durch den Kollisionsort 260 gezeigt ist. Hierdurch kann ein klackerndes Geräusch verursacht werden, welches sowohl im Inneren als auch außerhalb des Fahrzeugs wahrnehmbar und oftmals als störend empfunden wird.

Konventionell kann dies beispielsweise durch den Einsatz von Kunststoffelementen zwischen den Tilgermassen 110 reduziert werden, die jedoch gegebenenfalls während ungünstiger Betriebszustände oder aufgrund einer fehleranfälligen Montage herausfallen können. Ebenso denkbar ist es, die Tilgermassen 110 miteinander mechanisch zu koppeln. Während des Betriebs kann damit eine Tilgermasse durch diese Kopplung die benachbarte Tilgermasse jedoch in ihrem Freigang behindern. Dies kann gegebenenfalls zu einer Reduzierung der Funktionsfähigkeit bzw. Funktionscharakteristik des Tilgerschwingungsdämpfers 100 führen.

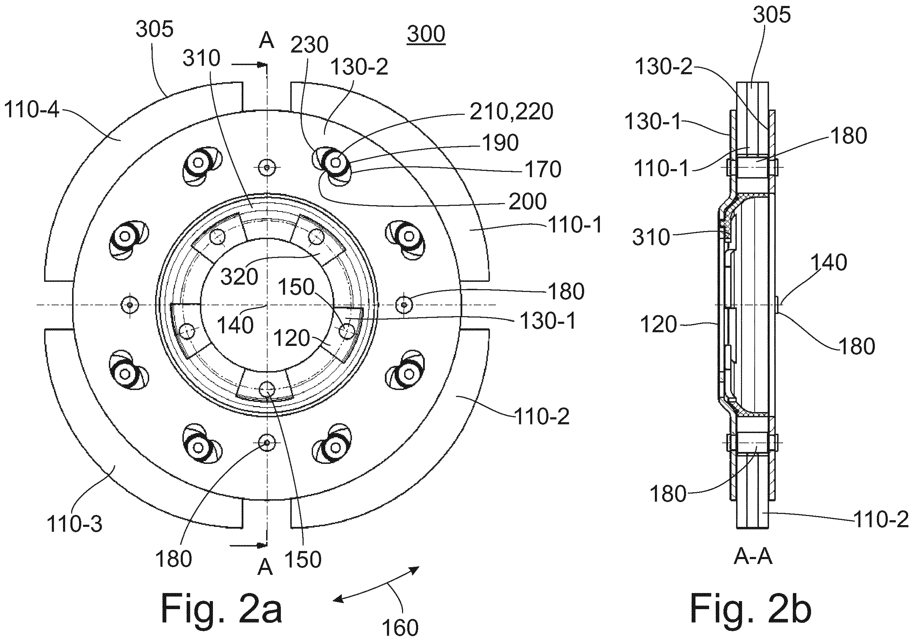

Fig. 2a zeigt eine Aufsicht auf einen Tilgerschwingungsdämpfer 300 gemäß einem Ausführungsbeispiel, der sich von dem in Fig. 1a und 1b gezeigten konventionellen Tilgerschwingungsdämpfer 100 im Wesentlichen hinsichtlich eines Dämpfungsbauteils 310 unterscheidet. Aus diesem Grund wird hinsichtlich der weiteren Komponenten des Tilgerschwingungsdämpfers 300 auf die Beschreibung des Tilgerschwingungsdämpfer 100 verwiesen, wobei an dieser Stelle angemerkt ist, dass bei Ausführungsbeispielen eines Tilgerschwingungsdämpfers 300 beispielsweise auch konstruktive Abweichungen von der zuvor beschriebenen konventionellen Konstruktion möglich sind. So können selbstverständlich die Führungslaufbahnen 170 auch anders ausgestaltet sein, als dies zuvor beschrieben wurde. So kann es beispielsweise möglich sein, die Ausstülpung bzw. den ausgestülpten Abschnitt 200 nicht zu implementieren. Selbstverständlich können hier gegebenenfalls auch andere Führungslaufbahngeometrien zum Einsatz kommen. Ebenso können selbstverständlich auch mehr als vier, gegebenenfalls jedoch auch weniger als vier Tilgermassen 110 sowie eine andere Zahl von Führungslaufbahnen 170 mit gegebenenfalls anders ausgestalteten Wälzkörpern 210 vorgesehen sein. Ebenso kann es möglich sein, Tilgermassen 110 und Führungsbauteile 130 zu implementieren, welche gegebenenfalls vollständig ohne den Einsatz von Wälzkörpern 210 auskommen. Gegebenenfalls können auch die Wälzkörper integral mit den Tilgermassen 110 ausgeführt sein. Wie die vorangegangene beispielhafte Aufzählung zeigt, sind Ausführungsbeispiele eines Tilgerschwingungsdämpfers 300 bei weitem nicht auf die im Zusammenhang mit den bisher beschriebenen Figuren gemachten konstruktiven Einzelheiten beschränkt, wie dies insbesondere auch die weitere Beschreibung zeigt.

Auch wenn also bei dem hier gezeigten Ausführungsbeispiel genau vier Tilgermassen 110 implementiert sind, können bei anderen Ausführungsbeispielen selbstverständlich auch eine andere Anzahl von Tilgermassen 110 zum Einsatz kommen, sofern dies wenigstens drei entlang der Umfangsrichtung verteilte Tilgermassen 110 umfasst. Die einzelnen Tilgermassen können hierbei einstückig, einteilig oder auch mehrteilig ausgeführt sein. Bei der hier dargestellten Ausgestaltung sind die Tilgermassen 110 aus drei entlang der Drehachse 140 benachbart zueinander angeordneten Einzeltilgermassen 305 gebildet. Die Einzeltilgermassen 305 sind bei der hiergezeigten Implementierung mechanisch nicht fest miteinander verbunden, sondern können sich vielmehr aufgrund von Fertigungstoleranzen oder anderen Einflüssen im Rahmen ihrer Führung durch die Führungsbauteile 130 unabhängig voneinander bewegen. Sie sind hier gemeinsam über die als gestufte Rollen 220 ausgeführten Wälzkörper 210 in den Führungslaufbahnen 170 der Führungsbauteile 130 geführt und weisen ihrerseits jeweils eigene Führungslaufbahnen 170 auf. Die Einzeltilgermassen 305 können daher gegebenenfalls auch als Tilgermassen 110 angesehen werden, die jedoch nicht entlang der Umfangsrichtung versetzt zueinander angeordnet sind. Dies unterscheidet die Einzeltilgermassen 305 von den entlang der Umfangsrichtung 160 versetzt angeordneten und damit gegebenenfalls entlang des Umfangs 160 verteilt angeordneten Tilgermassen 110.

Die Fig. 2a zeigt hierbei eine Fig. 1a bzw. 1b vergleichbare Aufsicht auf den Tilgerschwingungsdämpfer 300 gemäß einem Ausführungsbeispiel, bei dem jedoch beide Führungsbauteile 130-1, 130-2 gezeigt sind. Fig. 2b zeigt eine Schnittdarstellung entlang der Schnittlinie A-A durch den Tilgerschwingungsdämpfer 300. Aufgrund der dort gewählten Darstellung, bei der ein erstes Führungsbauteil 130-1, welches den Flanschbereich 120 umfasst und eingangsseitig links gezeigt ist, wird das erste Führungsbauteil 130-1 auch als linkes Führungsbauteil oder aufgrund der Implementierung der Führungslaufbahn 170 und seiner blechartigen Ausgestaltung auch als linkes Bahnblech bezeichnet. Entsprechend wird ein zweites Führungsbauteil 130-2, welches an einer dem ersten Führungsbauteil 130 entgegengesetzten Seite entlang der Drehachse befindlichen Ende des Tilgerschwingungsdämpfers 300 angeordnet ist, auch als rechtes Führungsbauteil 130-2 bzw. als rechtes Bahnblech bezeichnet. Wie bereits zuvor erwähnt wurde, sind die Führungslaufbahnen 170 bei dem hier gezeigten Ausführungsbeispiel ebenso im Wesentlichen nierenförmig ausgestaltet, weshalb sie auch als nierenförmige Schwingbahn oder kurz Nieren bezeichnet werden. Die Führungsbauteile 130 sind durch die auch als Abstandsstücke oder kurz Nieten bezeichneten Distanzniete 180 miteinander mechanisch drehfest verbunden. Selbstverständlich können bei anderen Ausführungsbeispielen auch andere Techniken als Distanzniete zur mechanischen Verbindung der Führungsbauteile 130 herangezogen werden. Gegebenenfalls kann es auch möglich sein, dass weniger als zwei Führungsbauteile 130 implementiert werden, nämlich beispielsweise nur ein einziges Führungsbauteil. Ebenso kann es gegebenenfalls ratsam sein mehr als zwei Führungsbauteile zu implementieren.

Lediglich der Vollständigkeit halber sei an dieser Stelle bemerkt, dass die Flanschbohrungen 150 beispielsweise bei einem hydrodynamischen Wandler als Anfahrelement dazu verwendet werden können, um mit einem Torsionsdämpfer desselben, den dieser im Rahmen seiner Überbrückungskupplung beispielsweise umfassen kann, mechanisch verbunden zu werden. Hierbei können die entsprechenden Bohrungen bzw. Flanschbohrungen 150 beispielsweise zu einer Vernietung des Tilgerschwingungsdämpfers 300 mit dem betreffenden Torsionsdämpfer herangezogen werden.

Wie bereits zuvor erläutert wurde, weist der Torsionsschwingungsdämpfer 300 gemäß einem Ausführungsbeispiel gegenüber dem Torsionsschwingungsdämpfer 100 aus den Fig. 1a und 1b das Dämpfungsbauteil 310 auf, was beispielsweise aus einem Kunststoff gefertigt sein kann und daher auch als Kunststoffring bezeichnet wird. Das Dämpfungsbauteil 310 ist bei dem hier gezeigten Ausführungsbeispiel im Wesentlich als ein Innenring mit einer topfartigen Struktur ausgebildet, die in den nachfolgenden Figuren noch näher beschrieben werden wird. Das Dämpfungsbauteil 310 ist hierbei gegenüber den Führungsbauteilen 130 um die Drehachse 140 der Drehbewegung verdrehbar ausgestaltet. Das Dämpfungsbauteil 310 ist hierbei gerade so ausgestaltet, dass dies entlang der Umfangsrichtung 160 der Drehbewegung eine Verdrehung des Dämpfungsbauteils gegenüber den Führungsbauteilen 130 um einen maximalen Verdrehwinkel ermöglicht, jedoch eine Verdrehung um einen diesen maximalen Verdrehwinkel überschreitenden Winkel unterbindet. Anders ausgedrückt kann das Dämpfungsbauteil 310 gegenüber den Führungsbauteil 130, die ja über die Distanzniete 180 miteinander drehfest verbunden sind, um einen Winkel, der kleiner ist als der zuvor genannte maximale Verdrehwinkel beliebig verdreht werden kann, nicht jedoch um einen größeren Winkel. Aus diesem Grund weist das Dämpfungsbauteil 310 in einem parallel zu dem Flanschbereich 150 geführten Abschnitt Aussparungen 320 auf, die die Flanschbohrungen 150 unbedeckt lassen und gerade so ausgestaltet sind, dass auch eine durch die Flanschbohrungen 150 geführte mechanische Verbindung, beispielsweise einen entsprechenden Niet, auch bei maximal vorliegendem Verdrehwinkel nicht mit dem Dämpfungsbauteil 310 in Kontakt gerät. Hierdurch kann eine mechanische Scherbelastung der betreffenden Verbindungstechnik, also beispielsweise der betreffenden Niete, gegebenenfalls verhindert werden. Selbstverständlich kann jedoch auch eine entsprechende Beschränkung des Verdrehwinkels durch ein entsprechendes in Kontakt Treten der Wandungen der Aussparungen 320 mit den betreffenden Strukturen zur Befestigung des Tilgerschwingungsdämpfers 300 an einer anderen Baugruppe herangezogen werden.

Andere konstruktive Lösungen hierfür werden im weiteren Verlauf der Beschreibung noch näher beschrieben. So kann das Führungsbauteil 310 beispielsweise aus einem spritzgießfähigen Kunststoff gefertigt sein, was gegebenenfalls eine besonders einfache Herstellung desselben im Rahmen eines Spritzgießverfahrens ermöglichen kann. Selbstverständlich können jedoch auch andere Kunststoffe zum Einsatz kommen. Ebenso können jedoch auch metallische Werkstoffe ergänzend oder alternativ, also beispielsweise Metalle, Legierungen oder durch nichtmetallische Substanzen ergänzte Metalle oder Legierungen verwendet werden. Als Kunststoffe können neben Duroplasten und Thermoplasten gegebenenfalls auch Elastomere vollständig oder teilweise zum Einsatz kommen, um beispielsweise bestimmte Bereiche des Dämpfungsbauteils abzudecken oder zu beschichten. Hierdurch kann gegebenenfalls eine Geräuschentwicklung im Vergleich zu einer rein metallischen Materialpaarung im Falle einer Berührung des Dämpfungsbauteils 310 mit einer der Tilgermassen 110 reduziert werden.

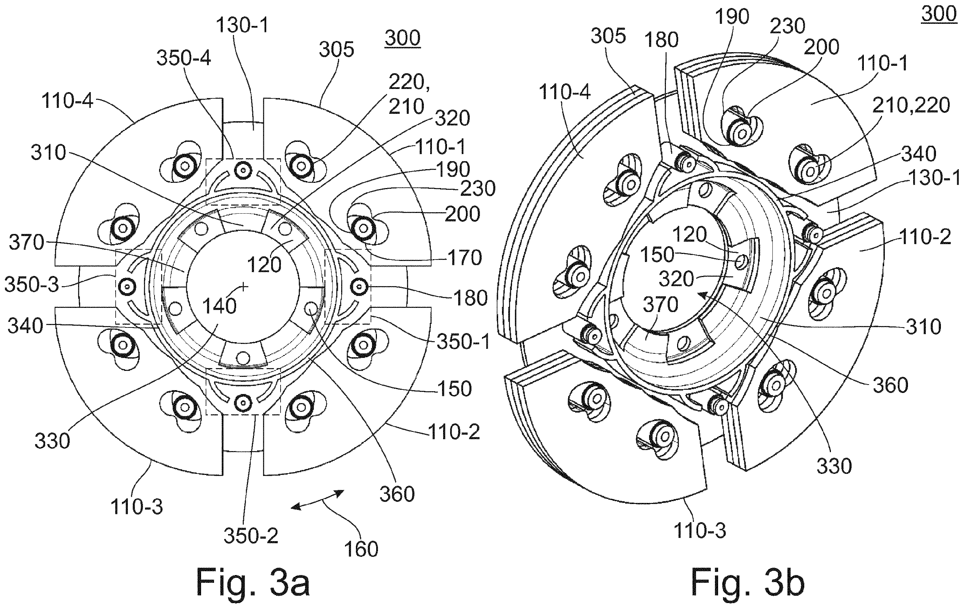

Während als die Fig. 2a und 2b eine Baugruppe eines auch als drehzahladaptiven Tilgers bezeichneten Tilgerschwingungsdämpfers 300 mit einem eingebauten Dämpfungsbauteil 310 als Aufsicht und als Schnittansicht der betreffenden Baugruppe zeigt, zeigen die Fig. 3a und 3b eine Aufsicht und eine perspektivische Darstellung der betreffenden Tilger-Baugruppe bei einem ausgeblendeten rechten Führungsbauteil 130-2.

Das Dämpfungsbauteil 310 weist, wie die Fig. 3a und 3b auch zeigen, eine im Wesentlichen topfartige Struktur mit einer zentralen Ausnehmung 330, die sich im Wesentlichen senkrecht zu der Drehachse 140 erstreckt und somit ein "Loch" in einem Boden in der topfartigen Struktur bildet.

Das Dämpfungsbauteil 310 weist darüber hinaus eine Trägerstruktur 340 sowie wenigstens zwei, im vorliegenden Ausführungsbeispiel insgesamt vier Dämpfungsstrukturen 350-1, 350-2, 350-3 und 350-4 auf, die sich ausgehend von der Trägerstruktur 340 radial erstrecken. Die Dämpfungsstrukturen 350, die auch als Mitnehmerelemente bezeichnet werden und deren Anzahl bei anderen Ausführungsbeispielen auch höher oder niedriger als die hier vier implementierten Dämpfungsstrukturen 350 sein kann, sind hierbei so ausgebildet und angeordnet, dass jeweils eine der Dämpfungsstrukturen 350 durch eine elastische Verformung, die auch als Deformation bezeichnet wird, bei einem in Kontakt Treten mit einer von zwei benachbarten Tilgermassen 110 ein Berühren der zwei benachbarten Tilgermassen 110 unterbindet.

Ergänzend oder alternativ kann das Dämpfungsbauteil 310 auch eine andere bzw. weitere Wirkung entwickeln. So kann dieses gerade durch ein in Kontakt Treten über eine seiner Dämpfungsstrukturen 350 mit einer Tilgermasse 110 so verdrehbar sein oder verdreht werden, dass eine weitere seiner Dämpfungsstrukturen 350 mit einer anderen Tilgermasse 110 in Kontakt tritt. Hierdurch kann es zu einer zeitlich begrenzten Kopplung der Tilgermassen 100 untereinander führen, wodurch gegebenenfalls ein Anschlagen der weiteren Tilgermasse 100 unterbunden werden kann, sodass das Entstehen eines störenden Geräuschs unterbunden oder zumindest reduziert werden kann. Je nach konkreter Implementierung eines Ausführungsbeispiels und gegebenenfalls je nach Stärke des in Kontakt Tretens kann es hierbei zu einer Deformation bzw. Verformung der Dämpfungsstruktur 350 und/oder der weiteren Dämpfungsstruktur 350 kommen. Gegebenenfalls kann es ergänzend oder alternativ auch zu einer Bewegung der weiteren Tilgermasse 110 durch das in Kontakt Treten der weiteren Tilgermasse 110 mit der weiteren Dämpfungsstruktur 350 kommen. Weist beispielsweise der Tilgerschwingungsdämpfer 300 eine gerade Anzahl von Tilgermassen auf, können die Tilgermasse 110 und die weitere Tilgermasse 110 einander gegenüber liegen. Selbstverständlich können sowohl bei Tilgerschwingungsdämpfern mit gerader oder ungerader Zahl auch ähnliche und/oder andere Konstellationen der beiden genannten Tilgermassen 110 auftreten.

Auch wenn die Anzahl der Dämpfungsstrukturen 350 des Dämpfungsbauteils 310 wenigstens zwei beiträgt, die Zahl der Tilgermassen 110 des Tilgerschwingungsdämpfers 300 wenigstens drei beträgt, beide also unabhängig voneinander im Wesentlichen beliebig hoch gewählt werden können, kann es jedoch gegebenenfalls ratsam sein, eine Anzahl der Dämpfungsstrukturen 350 des Tilgerschwingungsdämpfers 300 insgesamt so zu wählen, dass diese der Zahl der Tilgermassen 110 entspricht. Hierbei ist es nicht notwendig, dass die Dämpfungsstrukturen 350 einem einzigen Dämpfungsbauteil 310 angehören. Vielmehr können gegebenenfalls auch mehrere Dämpfungsbauteile 310 im Rahmen eines solchen Tilgerschwingungsdämpfers 300 zum Einsatz kommen. Relevant ist in diesem Zusammenhang lediglich, dass zwischen zwei benachbarten Tilgermassen 110 lediglich genau eine Dämpfungsstruktur 350 angeordnet ist, die gerade so ausgebildet ist, wie dies zuvor beschrieben wurde. Sie kann hierbei einen, jedoch auch mehrere Dämpfungsabschnitte umfassen. Zwischen zwei benachbarten Tilgermassen 110 ist hierbei eine Dämpfungsstruktur 350 genau dann angeordnet, wenn ein entsprechender Teilkreis existiert, der die beiden betreffenden Tilgermassen 110 schneidet und zwischen diesen entlang des betreffenden Teilkreises genau die eine Dämpfungsstruktur 350 angeordnet ist.

Die Trägerstruktur 340 dient hierbei unter anderen dazu, die Dämpfungsstrukturen 350 miteinander zu verbinden. Zu diesem Zweck ist bei dem hier gezeigten Dämpfungsbauteil 310 eines Tilgerschwingungsdämpfers 300 die Trägerstruktur ringförmig bzw. zylinderförmig ausgebildet. Die Trägerstruktur 340 bildet hierbei eine Wand der topfartigen Struktur des Dämpfungsbauteils 310. Je nach konkreter Implementierung eines entsprechenden Dämpfungsbauteils 310 kann die Trägerstruktur 340 jedoch auch anders ausgeformt sein, wie dies noch nachfolgend erläutert werden wird. So kann diese beispielsweise lediglich einen sich entlang der Umfangsrichtung 160 erstreckenden Umfangsabschnitt 360 umfassen, der lediglich teilweise ringförmig oder zylinderförmig, also ringsegmentförmig bzw. zylindersegmentförmig ausgebildet ist. Auch kann ein entsprechender Umfangsabschnitt 360 bei einem anderen Dämpfungsbauteil 310 gegebenenfalls eine andere geometrische Form aufweisen.

Je nach konkreter Ausgestaltung kann die Trägerstruktur 340 beispielsweise auch dazu dienen, das Dämpfungsbauteil 310 gegenüber wenigstens einem der Führungsbauteile 340 bzw. im Falle einer Implementierung mit nur einem einzigen solchen Führungsbauteil 130 bezüglich diesem das Dämpfungsbauteil 310 drehbar zu lagern. Hierbei kann die zuvor beschriebene geometrische Ausgestaltung der Trägerstruktur 340 beispielsweise zu diesem Zweck dienen. Anders ausgedrückt kann die Trägerstruktur 340 in einer Ebene senkrecht zu der Drehachse 140 eine wenigstens abschnittsweise runde Außenkontur aufweisen.

Mit der drehbaren Lagerung kann darüber hinaus auch eine radiale Führung des Dämpfungsbauteils 310 im Zusammenspiel mit wenigstens in der Führungsbauteile 130 bzw. dem Führungsbauteil 130, sofern nur ein einziges solches implementiert ist, einhergehen. Auch hierzu kann die Trägerstruktur 340 dienen. So kann in einem solchen Fall die Trägerstruktur 340 beispielsweise in einer Ebene senkrecht zu der Drehachse 140 eine wenigstens abschnittsweise runde Außenkontur aufweisen. In einem solchen Fall kann in der gleichen Ebene das Führungsbauteil, welches zur radialen Führung des Dämpfungsbauteils 310 verwendet wird, ebenso eine wenigstens abschnittsweise runde Außenkontur aufweisen, sodass diese mit der Außenkontur der Trägerstruktur 340 gerade so zusammenwirken kann, um die radiale Führung zu bewirken.

Ergänzend hierzu weist das hier gezeigte Ausführungsbeispiel jedoch ebenso noch näher im Zusammenhang mit den folgenden Figuren beschriebene Führungsstrukturen auf, die bei dem hier gezeigten Dämpfungsbauteil 310 an Führungsabschnitten 370 angeordnet sind. Jeweils zwei benachbarte Führungsabschnitte bilden hierbei die Aussparungen 320 in einem Bodenbereich der topfartigen Struktur des Dämpfungsbauteils 310.

Wie den Fig. 2a, 2b, 3a und 3b zu entnehmen ist, befindet sich bei dem hier gezeigten Torsionsschwingungsdämpfer 300 das Dämpfungsbauteil 310, das auch als Ring bezeichnet wird, zwischen den beiden Führungsbauteilen 130-1, 130-2. Damit wird das Dämpfungsbauteil 310 in axialer Richtung, also entlang der Drehachse 140 gehalten. Anders ausgedrückt, ist das Dämpfungsbauteil 310 gerade so ausgebildet, dass dieses durch das oder die Führungsbauteile 130 entlang der Drehachse 140 geführt wird.

Die Abstützung des Rings in radialer Richtung, also seine radiale Führung, kann hierbei sowohl durch die Form der Trägerstruktur 340 als auch durch Führungsstrukturen implementiert werden, die beispielsweise an den Führungsabschnitten 370 angeordnet sein können. Sowohl die Führungsabschnitte 370 als auch die entsprechenden Führungsstrukturen stellen jedoch optionale Komponenten dar, die aufgrund der Formschlüssigkeit des Dämpfungsbauteils 310 mit dem ersten Führungsbauteil 130-1 (linkes Bahnblech) gegebenenfalls entfallen kann. Wie die nachfolgende Beschreibung noch näher zeigen wird, ist das Dämpfungsbauteil 310 hierbei also drehbar gelagert und kann sich in einem definierten Winkel, nämlich innerhalb des maximalen Verdrehwinkels, verdrehen.

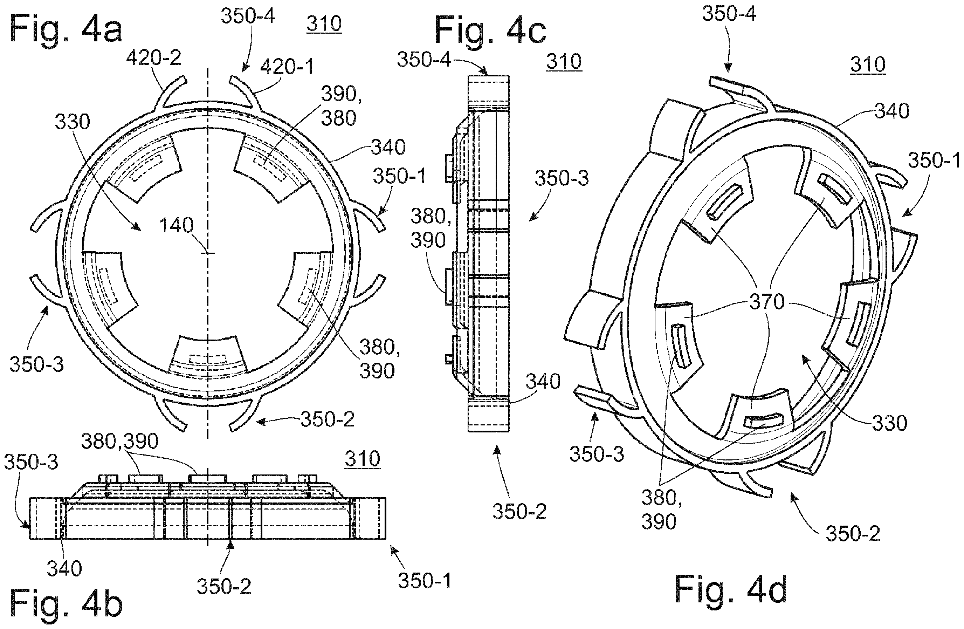

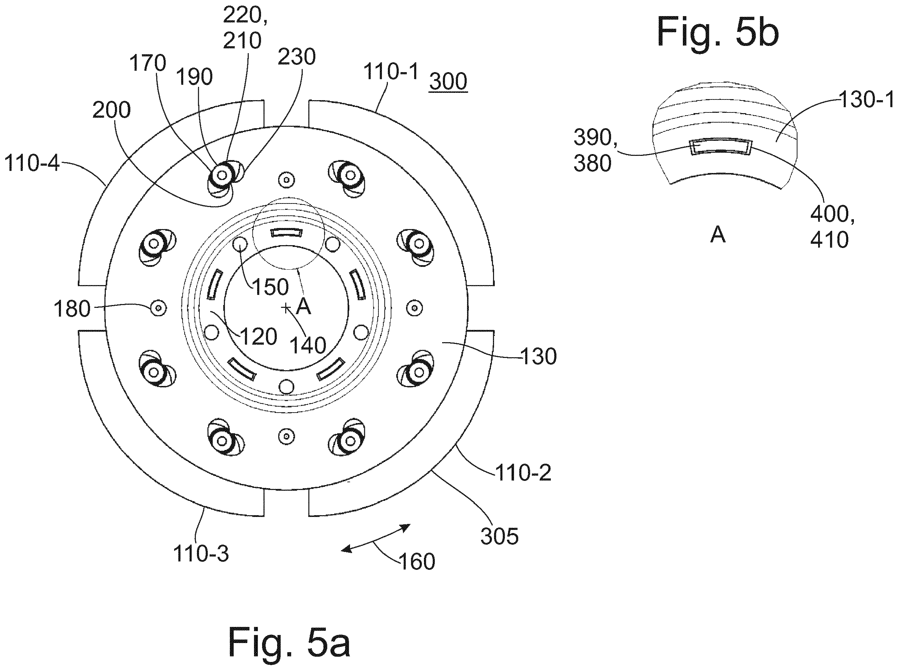

Die Fig. 4a, 4b, 4c und 4d zeigen jeweils das Dämpfungsbauteil 310 des Tilgungsschwingungsdämpfers 300 aus den Fig. 2a, 2b, 3a und 3b in einer Aufsicht, zwei Seitenansichten und einer perspektivischen Darstellung. Die Fig. 4a bis 4d zeigen hierbei erneut die im Wesentlichen topfartige Struktur des Dämpfungsbauteils 310 mit seiner Trägerstruktur 340, die sich im Wesentlichen hohlzylinderförmig als Außenwandung der topfartigen Struktur um die Drehachse 140 herum erstreckt. Ebenso zeigen die Fig. 4a bis 4d die zentrale Ausnehmung 330 sowie die vier Dämpfungsstrukturen 350-1, 350-2, 350-3 und 350-4, sowie insgesamt fünf Führungsabschnitte 370, die sich radial, im vorliegenden Fall radial nach innen, von der Trägerstruktur 340 erstrecken. An den Führungsabschnitten 370 sind an einer dem ersten Führungsbauteil 130-1 (nicht gezeigt in den Fig. 4a bis 4d) zugewandten Seite jeweils eine Führungsstruktur 380 angeordnet, die hier als ein Vorsprung 390 ausgestaltet sind. Die Vorsprünge, die aufgrund ihrer Ausgestaltung und ihrer Funktion auch als Führungsnasen bezeichnet werden, sind hierbei gerade so ausgerichtet und angeordnet, dass diese in entsprechende Ausnehmungen bzw. Aussparungen in dem betreffenden Führungsbauteil 130-1 eingreifen können, um so die radiale Führung des Dämpfungsbauteils 310 zu bewirken. Die Abstützung des Dämpfungsbauteils 310 in radialer Richtung erfolgt also bei dem hier gezeigten Dämpfungsbauteil 310 mithilfe der als Vorsprünge 390 implementierten Führungsstrukturen 380, die in entsprechender Gegenführungsstrukturen in Form von Ausnehmungen bzw. Aussparungen in dem Führungsbauteil 130-1 geführt werden. Dies ist nicht zuletzt auch in den Fig. 5a bis 5d gezeigt. Selbstverständlich können jedoch auch die Anordnungen der Vorsprünge 390 und der Ausnehmungen vertauscht werden.

So zeigt Fig. 5a eine Aufsicht auf den Torsionsschwingungsdämpfer 300, der zuvor im Zusammenhang mit den Fig. 2a bis 4d beschrieben worden ist, von Seiten des ersten Führungsbauteils 130-1, bei dem die Tilgermassen 110 in einer Mittellage sind. Entsprechend sind auch die Wälzkörper 210 im Wesentlichen in einer Mitte der Führungslaufbahn 170 im Bereich der größten Ausstülpung des ausgestülpten Abschnitts 200 angeordnet.

Fig. 5b zeigt hierbei einen vergrößerten Bereich des in Fig. 5a mit einem Kreis A bezeichneten Bereichs. Dieser illustriert, wie die als Vorsprung 390 implementierte Führungsstruktur 380 in eine entsprechende Gegenführungsstruktur 400, die als Ausnehmung 410 implementiert ist, eingreift und so die radiale Führung des Dämpfungsbauteils 310 ermöglicht.

Die Ausnehmung 410 erstreckt sich hierbei über eine Länge bzw. einen Winkelbereich, der sich von einer Länge bzw. einem Winkelbereich, über den sich der Vorsprung 390 erstreckt, um den maximalen Verdrehwinkel unterscheidet. So erstreckt sich bei dem hier gezeigten Dämpfungsbauteil 310 die Ausnehmung 410 in dem ersten Führungsbauteil 130-1 um den maximalen Verdrehwinkel mehr entlang der Umfangsrichtung 160 als sich der Vorsprung 390 des Dämpfungsbauteils 310 entlang der Umfangsrichtung 160 erstreckt.

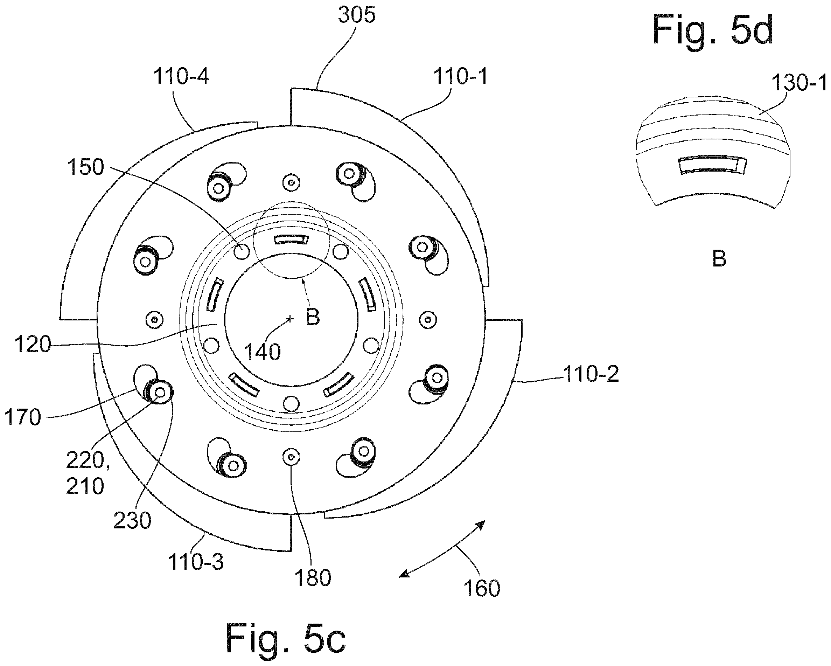

Während Fig. 5a und 5b die Situation des Tilgerschwingungsdämpfers zeigt, bei der die Tilgermassen 110 in ihrer Mittellage sind, und entsprechend auch die Führungsstruktur 380 im Wesentlichen mittig in der Gegenführungsstruktur 400 angeordnet ist, zeigen die Fig. 5c und 5d den Fig. 5a und 5b vergleichbare Darstellungen, bei denen jedoch die Tilgermassen 110 in einem maximal ausgelenkten Zustand sind und sich die Wälzkörper 210 den Bahnenden 230 der Führungslaufbahnen 170 genähert haben. Allerdings verhindern die Führungsstrukturen 380 im Zusammenspiel mit den Gegenführungsstrukturen 400 ein in Kontakt Treten der Wälzkörper 210 mit den Bahnenden 230 der Führungslaufbahnen 170. Vielmehr treten bei dem hier gezeigten Ausführungsbeispiel eines Tilgerschwingungsdämpfers 300 die Führungsstrukturen 380 mit den Gegenführungsstrukturen 400 in Kontakt und begrenzen so den maximalen Verdrehwinkel des Dämpfungsbauteils 310 gegenüber den Führungsbauteilen 130, wodurch - vermittelt über die Dämpfungsstrukturen 350 - ebenso ein Anschlagen der Wälzkörper 210 in die Bahnenden 230 der Führungslaufbahnen 170 unterbunden werden kann. So zeigt Fig. 5d, wie die Führungsstruktur 380 an ein linkes Ende der Gegenführungsstruktur 400 schlägt, bevor die Wälzkörper 210 in Fig. 5c die Bahnenden 230 der Führungslaufbahnen 170 erreichen.

Um die Wechselwirkung der Dämpfungsstruktur 370 mit den Tilgermassen näher zu erläutern, wird zunächst erneut im Zusammenhang mit den Fig. 4a bis 4d die Ausgestaltung der Dämpfungsstrukturen 350 im vorliegenden Ausführungsbeispiel näher beschrieben. So umfassen die Dämpfungsstrukturen 350 bei dem hier gezeigten Dämpfungsbauteil 310 zwei Dämpfungsabschnitte 420-1, 420-2, die sich bei dem hier gezeigten Dämpfungsbauteil 310 radial von der Trägerstruktur 340 aus erstrecken und ausgebildet und angeordnet sind, um mit wenigstens einer der benachbarten Tilgermassen 110 (nicht gezeigt in Fig. 4a bis 4d) in Kontakt zu treten und um sich hierbei elastisch zu verformen. Die Dämpfungsabschnitte 420 weisen hierbei in einer Ebene senkrecht zu der Drehachse 140, wie sie beispielsweise in Fig. 4a gezeigt ist, eine kreisbogensegmentförmige Außenkontur auf. Die Außenkontur bleibt hierbei hinsichtlich ihrer Form und ihrer Bemaßung entlang der Drehachse 140 im Wesentlichen konstant.

Die beiden Dämpfungsabschnitte 420-1, 420-2 sind bei dem hier gezeigten Dämpfungsbauteil 310 nur durch die Trägerstruktur 340 miteinander verbunden. Eine Verbindung untereinander existiert nicht. Die beiden kreisbogensegmentförmigen Dämpfungsabschnitte 420-1, 420-2 sind hierbei einander zugewandt, also gekrümmt ausgeführt, sodass diese in der bereits zuvor bezeichneten Ebene senkrecht zu der Drehachse 140 in einem im Wesentlichen unbelasteten Zustand, wie er in den Fig. 4a bis 4d gezeigt ist, im Wesentlichen Segmente eines gemeinsamen Kreises bzw. Kreisbogens bilden.

Der erste und der zweite Dämpfungsabschnitt 420-1, 420-2 der betreffenden Dämpfungsstruktur 350 sind hierbei nun gerade so ausgebildet und angeordnet, dass der erste Dämpfungsabschnitt 420-1 mit einer entlang der Umfangsrichtung in einer ersten Richtung daneben angeordneten Tilgermasse 110-1 in Kontakt treten kann, während der zweite Dämpfungsabschnitt 420-2 mit einer in der entgegengesetzten Richtung entlang der Umfangsrichtung 160 daneben angeordneten Tilgermasse 110-4 in Kontakt treten kann. Hierdurch kann es gegebenenfalls möglich sein, eine sehr kompakte und dennoch mechanisch stabile und belastbare Dämpfungsstruktur 350 zu schaffen, die nur wenig radial nach außen baut. Je nach konkreter Implementierung kann es hierbei gegebenenfalls ratsam sein, auch die Tilgermassen 110 mit einer entsprechenden, an die Geometrie der Dämpfungsabschnitte 420 angepassten Außenkontur in einem entsprechenden Bereich, in dem diese mit den Dämpfungsabschnitten 420 in Kontakt treten, auszugestalten. Anders ausgedrückt kann es gegebenenfalls ratsam sein, in einem solchen Bereich auch die Tilgermassen 110 mit einer zylindersegmentförmigen Außenkontur senkrecht zu der Drehachse 140 auszubilden.

Aufgrund der Tatsache, dass die Dämpfungsstrukturen 350 bzw. ihre Dämpfungsabschnitte 420 die Tilgermassen während des Betriebs gegebenenfalls abstützen können, werden diese auch als Stützlaschen bezeichnet.

Hinsichtlich ihrer Funktion erfüllt so das Dämpfungsbauteil 310 die Funktion, dass die Tilgermassen 110 gegeneinander abgestützt werden. Hierdurch kann es möglich sein, eine Dämpfung der Tilgermassen 110 in ihren bzw. vor ihren Anschlägen zu bewirken. Auch kann es gegebenenfalls möglich sein, die Tilgermassen 110 durch ihre gegenseitige Abstützung auf Abstand zu halten, wodurch eine Kollision der Tilgermassen 110 untereinander, was beispielsweise bei einem Abstellen des Motors geschehen kann, gegebenenfalls vermieden werden kann. Dies kann dazu führen, das klappernde Geräusche gar nicht mehr erst entstehen, bzw. gegebenenfalls soweit gedämpft werden, dass diese sowohl im Inneren des Fahrzeugs, als auch außerhalb nicht mehr oder kaum noch wahrzunehmen sind.

Im Unterschied zu anderen Lösungen kann so gegebenenfalls unabhängig von Abstandstücken, also beispielsweise Nieten eine Führung der Tilgermassen 110 bzw. eine Dämpfung der durch sie gegebenenfalls erzeugten Geräusche realisiert werden. Hierdurch kann es möglich sein, neue Design-Möglichkeiten hinsichtlich der konstruktiven Ausgestaltung des Dämpfungsbauteils 310 zu implementieren. Ein nicht unerheblicher Aspekt des Dämpfungsbauteils 310 ist hierbei seine drehbare Lagerung, die eine Hemmung bzw. ein Haften der Tilgermassen 110 an ihm verhindert, zumindest jedoch reduzieren kann.

Durch die Proportionen und Geometrien der Dämpfungsstrukturen 350 und ihre Dämpfungsabschnitte 420 kann so gegebenenfalls ein freier Schwingwinkel der Tilgermassen 110 definiert werden. Zum anderen können gegebenenfalls Eigenschaften wie Steifigkeit und Dämpfung durch eine geeignete Geometrie bzw. eine geeignete Materialwahl dargestellt werden. Aufgrund der drehbaren Lagerung des Dämpfungsbauteils 310 wird hierbei eine freie Schwingung der Tilgermassen 110 im Rahmen des definierten Winkels nicht beeinträchtigt.

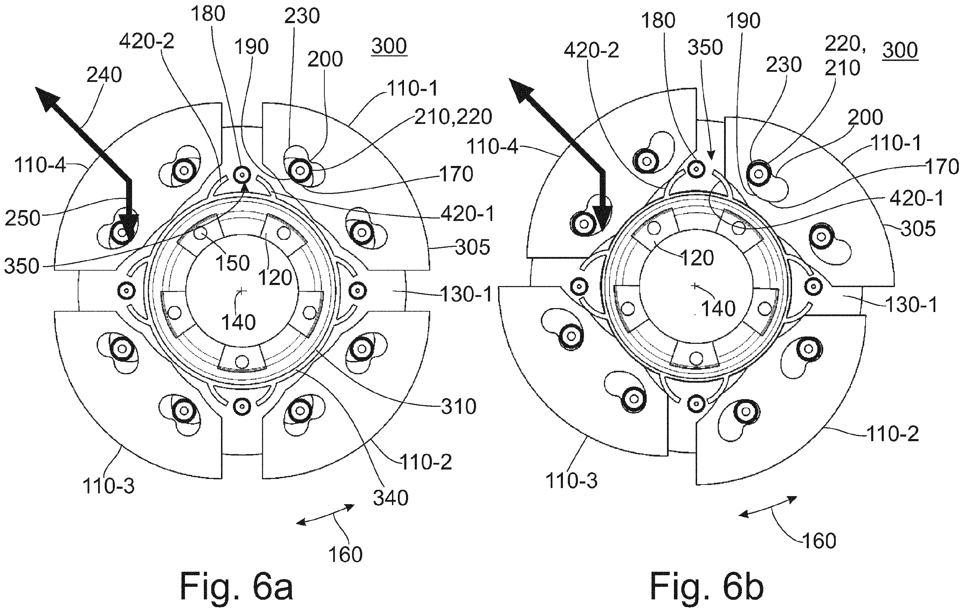

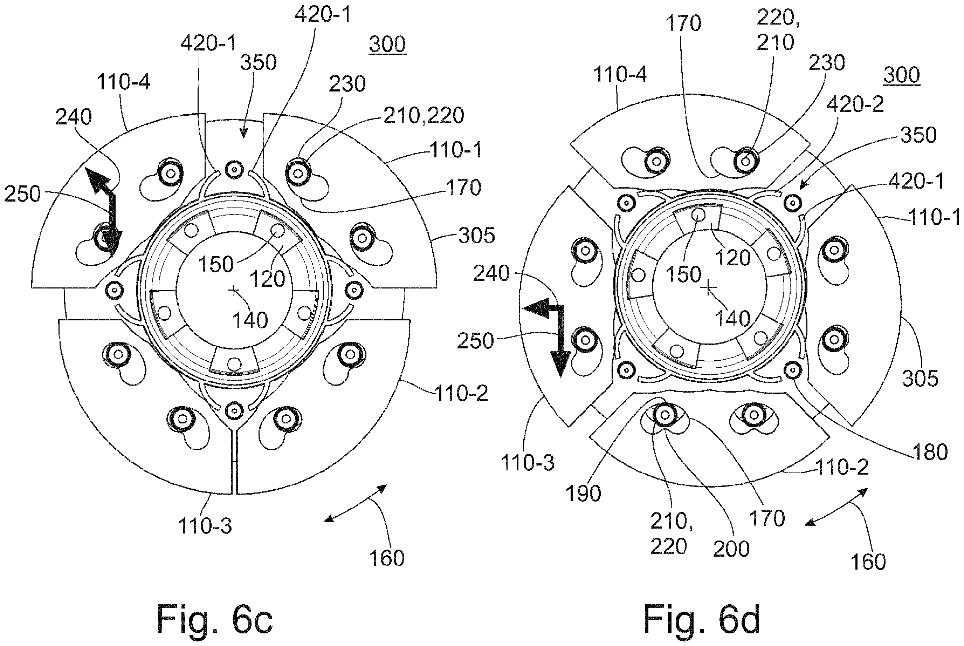

Um die Funktionsweise bei unterschiedlichen Betriebszuständen des Tilgerschwingungsdämpfers 300 gemäß einem Ausführungsbeispiel zu illustrieren, zeigen die Fig. 6a, 6b, 6c und 6d Fig. 3a vergleichbare Darstellungen des Tilgerschwingungsdämpfers 300 bei unterschiedlichen Bedingungen. Fig. 6a zeigt hierbei eine Situation, die der in Fig. 3a ähnelt. Es handelt sich hierbei um eine Situation, die beispielsweise bei einem Motorbetrieb auftreten kann. In einem solchen Normalbetrieb ist die Fliehkraft 240, welche auf die Tilgermassen 110 wirkt, im Allgemeinen betragsmäßig wesentlich höher als eine entsprechende Gewichtskraftkomponente 250. Hierdurch werden die Tilgermassen 110 radial außen gehalten und bewegen sich entsprechend der vorliegenden Anregung entlang ihrer Führungslaufbahnen 170. Hierbei zeigt Fig. 6a eine Situation, in der die Tilgermassen 110 - wie bereits in Fig. 3a gezeigt - in ihren Mittellagen angeordnet sind.

Während bei der in Fig. 6a dargestellten Situation die Dämpfungsabschnitte 420 keinen Kontakt zu den Tilgermassen 110 haben, sind bei der in Fig. 6b dargestellten Situation die Tilgermassen 110 alle entlang der gleichen Richtung ausgelenkt. Hierdurch kommt es zu einem in Kontakt Treten der Tilgermassen 110 mit den entsprechenden Dämpfungsabschnitten 420, also beispielsweise der ersten Tilgermasse 110-1 mit dem ersten Dämpfungsabschnitt 420-1. Hierdurch wird das Dämpfungsbauteil 310 verdreht. Eine signifikante elastische Verformung der Dämpfungsabschnitte 420 oder der Dämpfungsstruktur 350 tritt hierbei nicht auf, obwohl selbstverständlich auch hier eine makroskopisch erkennbare elastische Verformung vorliegt.

In der Situation in Fig. 6b ist der Tilgerschwingungsdämpfer 300 mit maximal ausgelenkten Tilgermassen 110, also in der maximalen Schwingungsamplitude dargestellt. Bevor die Tilgermassen 110 in die Anschläge ihrer Führungslaufbahnen 170, die durch die entsprechenden Bahnenden 230 gebildet werden, gehen können, werden sie mithilfe der Dämpfungsstrukturen 350 bzw. im vorliegenden Ausführungsbeispiel mithilfe der Dämpfungsabschnitte 420 der Dämpfungsstrukturen 350 gegeneinander abgestützt. Das Dämpfungsbauteil 310 verdreht sich hierbei geringfügig. Zusätzlich kann optional der Schwingwinkel mithilfe der Führungsstrukturen 370 und der entsprechenden Gegenführungsstrukturen 400 (nicht gezeigt in den Fig. 6a bis 6d), also den Führungsnasen und den entsprechenden Führungen der Führungsbauteile 130, eingeschränkt werden, wie dies beispielsweise in den Fig. 5a bis 5d illustriert und veranschaulicht wurde. Wie bereits zuvor erläutert wurde, zeigen hierbei die Fig. 5a bis 5d den Torsionsschwingungsdämpfer 300 in einer Rückansicht, bei der das erste Führungsbauteil 130-1 der Tilgerbaugruppe nach vorne zeigt. In den beiden Detailansichten der Fig. 5b und 5d ist jeweils die Führung des Dämpfungsbauteils 310 in Umfangsrichtung 160 zu sehen.

Bei den Fig. 6a bis 6d ist hierbei wiederum der Übersichtlichkeit halber das zweite Führungsbauteil 130-2 nicht dargestellt.

Die Fig. 6c und 6d zeigen hierbei einen zweiten Zustand, bei dem der Motor abgestellt wird, wobei die Getriebeeingangswelle aufgrund ihres Trägheitsmomentes noch nachläuft. Eine ähnliche Situation kann sich beispielsweise auch bei einem Kriechbetrieb des Fahrzeugs einstellen.

Bei einem langsamen Kriechen dreht sich hier die Getriebeeingangswelle typischerweise mit einer niedrigeren Drehzahl als die Motordrehzahl. Anders als bei einem Normalbetrieb des Motors, wie er zuvor in den Fig. 6a und 6b dargestellt wurde, ist in einem solchen Fall die Gewichtskraft 250 der Tilgermassen 110 in diesem Zustand betragsmäßig deutlich größer als die entsprechende Komponente der Fliehkraft 240.

Ähnlich verhält es sich auch beim Abstellen des Motors. Die Getriebeeingangswelle läuft einige Sekunden nach. Ab einem bestimmten Zeitpunkt übersteigt die Gewichtskraft 250 betragsmäßig die entgegengesetzte Fliehkraftkomponente 240, wie dies in den Fig. 6c und 6d dargestellt ist. Ohne eine entsprechende Maßnahme würden die Tilgermassen 110 unkontrolliert in die Anschläge, also die Bahnenden 230 der Führungslaufbahnen 170 fallen, wie dies bereits im Zusammenhang mit den Fig. 1a und 1b erläutert und beschrieben wurde.

In beiden Zuständen sorgt nun das Dämpfungsbauteil 310 dafür, dass die Tilgermassen 110 auf Abstand gehalten werden und somit keine Kollisionen möglich sind. Anders ausgedrückt unterbinden die Dämpfungsstrukturen 350 ein Berühren benachbarter Tilgermassen.

Des Weiteren hält das Dämpfungsbauteil 310 die Tilgermassen 110 in ihrer radialen Position und verhindert damit, dass die Tilgermassen 110 in radialer Richtung an den Wälzkörpern 210 anschlagen können.

Wie beispielsweise Fig. 6c zeigt, sind so die zweite Tilgermasse 110-2 und die dritte Tilgermasse 110-3 nach unten gefallen und geraten so in Kontakt mit den Dämpfungsabschnitten 420 der betreffend unten angeordneten Dämpfungsstruktur 350. Auch die erste Tilgermasse 110-1 und die vierte Tilgermasse 110-4 fallen der Gewichtskraft folgend nach unten, wobei diese durch die entsprechenden Dämpfungsabschnitte 420 der in Fig. 6c links und rechts angeordneten Dämpfungsstrukturen 350 so frühzeitig abgefangen werden, dass ihre Wälzkörper 210 gerade nicht in die Bahnenden 230 der Führungslaufbahnen 170 einschlagen können. Die in Fig. 6c oben angeordnete Dämpfungsstruktur 350 ist hierbei in einem entspannten Zustand.

Fig. 6d zeigt eine Situation, bei der die zweite Tilgermasse 110-2 in ihrer Mittellage ist und - als entsprechend der Gewichtskraft 250 folgend - unterste Tilgermasse 110 die Dämpfungsabschnitte 420 der daneben in beiden Richtungen der Umfangsrichtung 160 angeordneten Dämpfungsstrukturen 350 mechanisch nicht belastet. Anders verhält es sich jedoch im Zusammenhang mit der ersten Tilgermasse 110 und der dritten Tilgermasse 110-3, die einen entsprechenden Dämpfungsabschnitt 420 der beiden zuvor genannten Dämpfungsstrukturen 350 mechanisch belastet. Aufgrund einer leichten Verdrehung ist auch die vierte Tilgermasse 110-4 nicht in ihrer Mittellage zum Erliegen gekommen, sondern hat sich in Richtung eines Maximalausschlags bewegt. Auch hierdurch ist eine der betreffenden Dämpfungsabschnitte 420 eine der Dämpfungsstrukturen 350 mit der betreffenden vierten Tilgermasse 110-4 in Kontakt getreten.

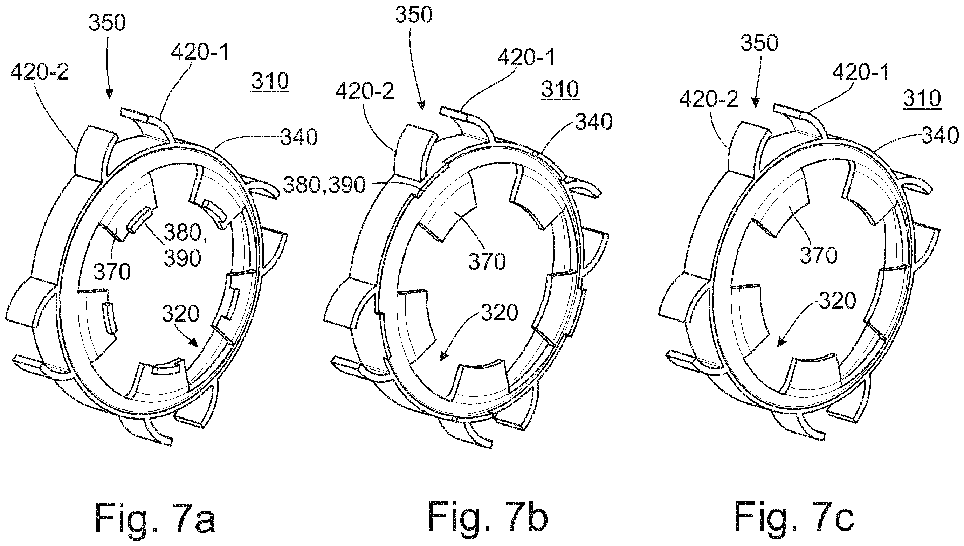

Hinsichtlich der Frage der Führung in Umfangsrichtung und zur radialen Abstützung, wird bei dem zuvor beschriebenen Ausführungsbeispiel eines Tilgerschwingungsdämpfers 300 gerade eine solche implementiert, bei der die Führungsstruktur 380 im Wesentlichen mittig auf den Führungsabschnitten 370 angeordnet ist. Es können jedoch auch andere entsprechende Implementierungen gewählt werden, wie beispielsweise im Zusammenhang mit den Fig. 7a, 7b und 7c näher erläutert werden soll.

Grundsätzlich ist Position der Führungsstrukturen 380, also beispielsweise der Vorsprünge 390, auf den Führungsabschnitten 370 beliebig wählbar. Entsprechend können beispielsweise die Führungsstrukturen 370 radial innen, wie dies in Fig. 7a gezeigt ist, radial außen an der Trägerstruktur 340, wie dies in Fig. 7b gezeigt ist, oder mittig auf den Führungsabschnitten 370 angeordnet sein, wie dies beispielsweise in Fig. 4d gezeigt ist. Auch können die Führungsstrukturen gegebenenfalls vollständig weggelassen werden, wie dies beispielsweise in Fig. 7c gezeigt ist. Eine radiale Abstützung des Dämpfungsbauteils 310 erfolgt in diesem Fall über einen Formschluss mit wenigstens einem der Führungsbauteile 130, also beispielsweise den ersten Führungsbauteil 130-1, wie dies bereits im Zusammenhang mit Fig. 2b dargestellt wurde.

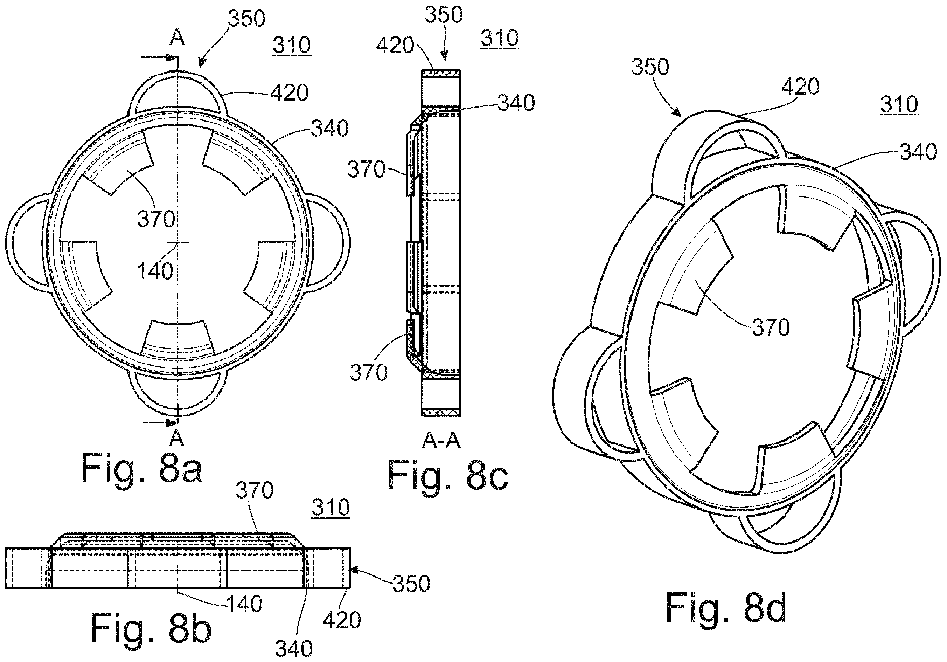

Je nach konkreter Implementierung kann daher gegebenenfalls auch eine Implementierung der Führungsabschnitte 370 entfallen. So sind diese zumindest im Hinblick auf die Frage nach der Aufnahme von Führungsstrukturen 380 bei denen in Fig. 7b und 7c gezeigten Dämpfungsbauteilen 310 funktionslos. So sind beispielsweise bei dem in Fig. 7b gezeigten Dämpfungsbauteil 310 die Führungsstrukturen 370 an der Trägerstruktur 340 unmittelbar angeordnet, während das Dämpfungsbauteil 310 aus Fig. 7c überhaupt keine entsprechenden Führungsstrukturen 380 an den Dämpfungsbauteil 310 aufweist. Im Hinblick auf die Frage nach der Implementierung der Dämpfungsstrukturen 350, sind bisher lediglich Ausführungsbeispiele gezeigt worden, bei denen genau zwei Dämpfungsabschnitte 420 im Rahmen einer jeden Dämpfungsstruktur 350 implementiert worden sind. Bei anderen Ausführungsbeispielen kann hiervon selbstverständlich abgewichen werden. So kann beispielsweise eine Dämpfungsstruktur 350 auch nur einen einzigen Dämpfungsabschnitt 420 oder gegebenenfalls auch mehrere umfassen. So sind in den Fig. 8a bis 14d unterschiedliche Ausgestaltungen von Dämpfungsbauteilen 310 gezeigt, bei denen weitere Varianten entsprechender Dämpfungsstrukturen 350 implementiert sind. Um entsprechend angestrebte Eigenschaften zu erzielen, die beispielsweise eine bestimmte Dämpfungscharakteristik oder eine bestimmte Nachgiebigkeit umfassen können, können beispielsweise die Dämpfungsabschnitte 420 des Dämpfungsbauteils 310 beschichtet oder aus einem anderen Werkstoff, beispielsweise einem Gummi oder einem anderen Elastomer, ausgeführt sein. Grundsätzlich können so beliebige Formen der Dämpfungsabschnitte 420 und dazugehörigen Dämpfungsstrukturen 350 implementiert werden. Einige mögliche Formen sind in den folgenden Fig. 8 bis 14 dargestellt, wobei jeweils die Teilfiguren A eine Aufsicht, die Teilfiguren B eine Seitenansicht, die Teilfiguren C eine Querschnittsdarstellung entlang einer durch die Drehachse 140 verlaufenden Querschnittsebene A-A und die Teilfiguren D eine perspektivische Darstellung der betreffenden Dämpfungsbauteile 310 zeigen. Hierbei wird im Folgenden auf die Unterschiede zu den zuvor beschriebenen Ausführungsformen das wesentliche Augenmerk gelegt.

So zeigen die Fig. 8a bis 8d ein Dämpfungsbauteil 310, bei dem an den Führungsabschnitten 370 keine Führungsstrukturen 380 vorgesehen sind, wie dies beispielsweise bereits in Fig. 7c dargestellt wurde. Die Dämpfungsstrukturen 350 weisen hierbei genau einen Dämpfungsabschnitt 420 auf, der einen kreissegmentbogenförmigen Querschnitt in einer Ebene senkrecht zu der Drehachse 140 aufweist. Aufgrund der kreisbogenförmigen Ausgestaltung handelt es sich hierbei also um ein Dämpfungsbauteil 310, bei dem der Dämpfungsabschnitt 420 bzw. die Dämpfungsstruktur 350 als Hohlkörper ausgestaltet ist. Hierdurch kann es gegebenenfalls möglich sein, eine größere Elastizität bzw. eine geringere Kraftentwicklung als im Falle einer Implementierung als Vollkörper zu realisieren.

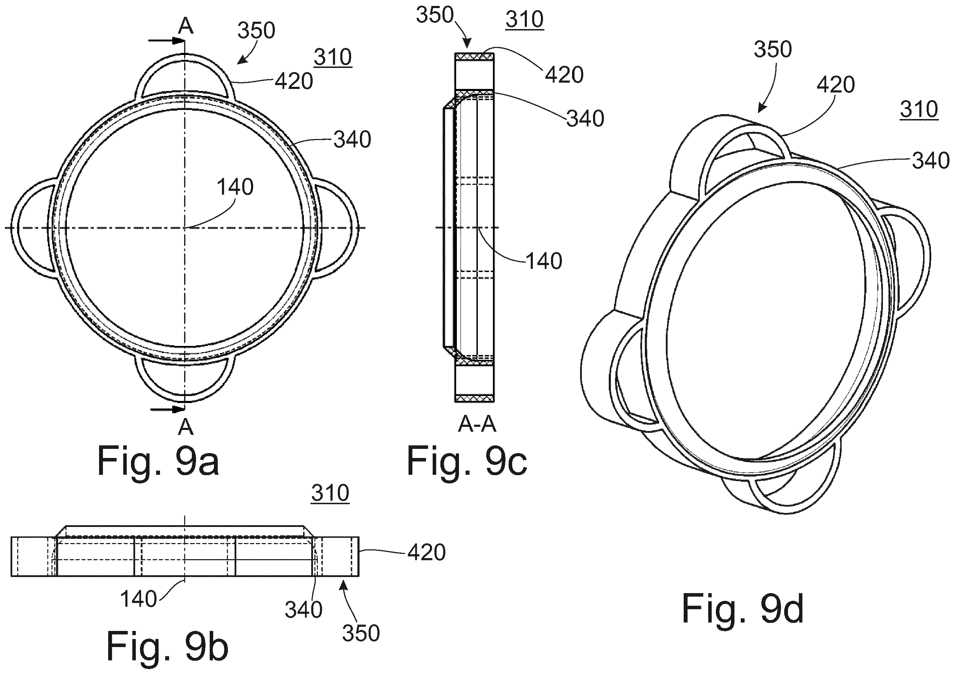

Die Fig. 9 zeigt ein weiteres Dämpfungsbauteil 310, welches sich von dem im Zusammenhang mit Fig. 8 beschriebenen dadurch unterscheidet, dass dieses keine Führungsabschnitte 370 umfasst, die sich ausgehend von der Trägerstruktur 340 radial im vorliegenden Fall nach innen auf die Drehachse 140 hin zu erstrecken.

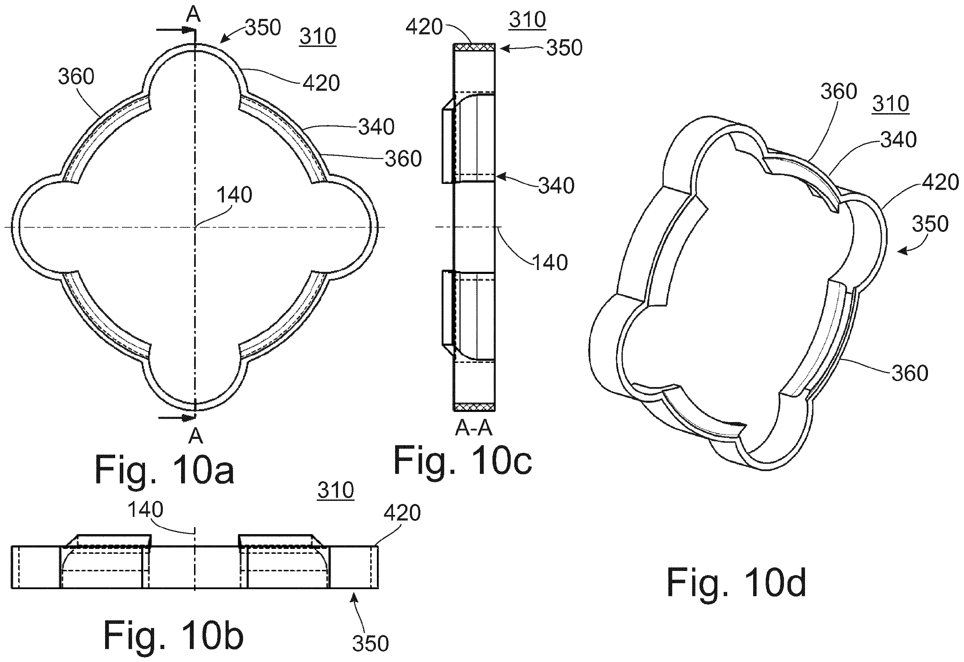

Fig. 10 zeigt ein weiteres Dämpfungsbauteil 310, welches sich von dem in Fig. 9 gezeigten im Wesentlichen dadurch unterscheidet, dass nunmehr die Trägerstruktur 340 eine Mehrzahl von Umfangsabschnitten 360 aufweist, die die Dämpfungsabschnitte 420 der Dämpfungsstrukturen 350 miteinander verbindet und jeweils im Wesentlichen ringsegmentförmig bzw. hohlzylindersegmentförmig ausgestaltet sind. Aufgrund der Tatsache, dass auch diese Dämpfungsbauteil 310 für vier Tilgermassen 110 vorgesehen ist, weist entsprechend die Trägerstruktur 340 vier Umfangsabschnitte 360 auf, welche die betreffenden Dämpfungsabschnitte 420 miteinander verbindet, ohne diese jedoch zu überbrücken. Anders ausgedrückt, kann bei diesem Dämpfungsbauteil 310 ausgehend von der Drehachse 140 eine direkte Gerade gezogen werden, die die Dämpfungsabschnitte 420 schneidet, ohne zuvor die Trägerstruktur 340 passiert zu haben. Die Fig. 10 zeigt somit eine Ausgestaltung des Dämpfungsbauteils 310, bei der die Trägerstruktur 340 nicht als eine zusammenhängende Struktur, sondern vielmehr aus einzelnen Abschnitten, nämlich den Umfangsabschnitten 360 zusammengesetzt ist.

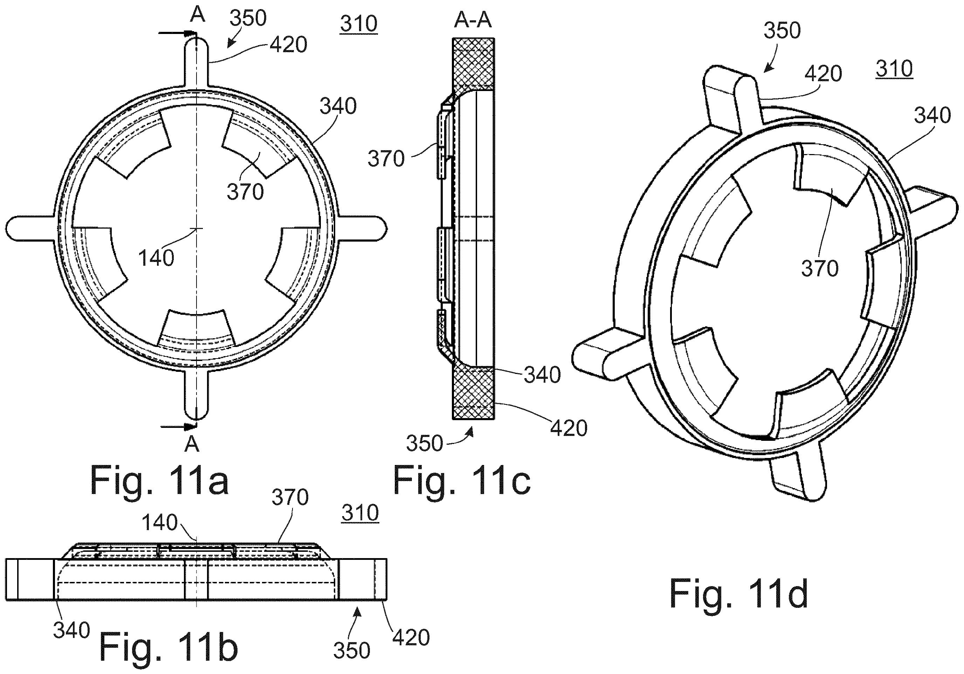

Fig. 11 zeigt eine weitere Ausgestaltung eines Dämpfungsbauteils 310, welcher dem Dämpfungsbauteil 310 aus den Fig. 8a bis 8d ähnelt. Auch hier weist die Trägerstruktur 340 wiederum die Führungsabschnitte 370 auf, wobei jedoch die Dämpfungsstrukturen 350 anders ausgestaltet sind. Die Dämpfungsstrukturen 350 weisen hierbei einen Dämpfungsabschnitt 420 auf, der im Wesentlichen eine stegförmige Außenkontur aufweist und als Vollkörper ausgestaltet ist. Der Steg erstreckt sich hierbei im Wesentlichen entlang einer radialen Richtung von der Drehachse 140 weg. Die stegartige Struktur ist hierbei an einem radial außenliegenden Bereich abgerundet ausgeführt, wobei sich eine Kontur der Dämpfungsabschnitte 420 bzw. der Dämpfungsstrukturen 350 entlang der Drehachse 140 im Wesentlichen nicht ändert, also konstant ist.

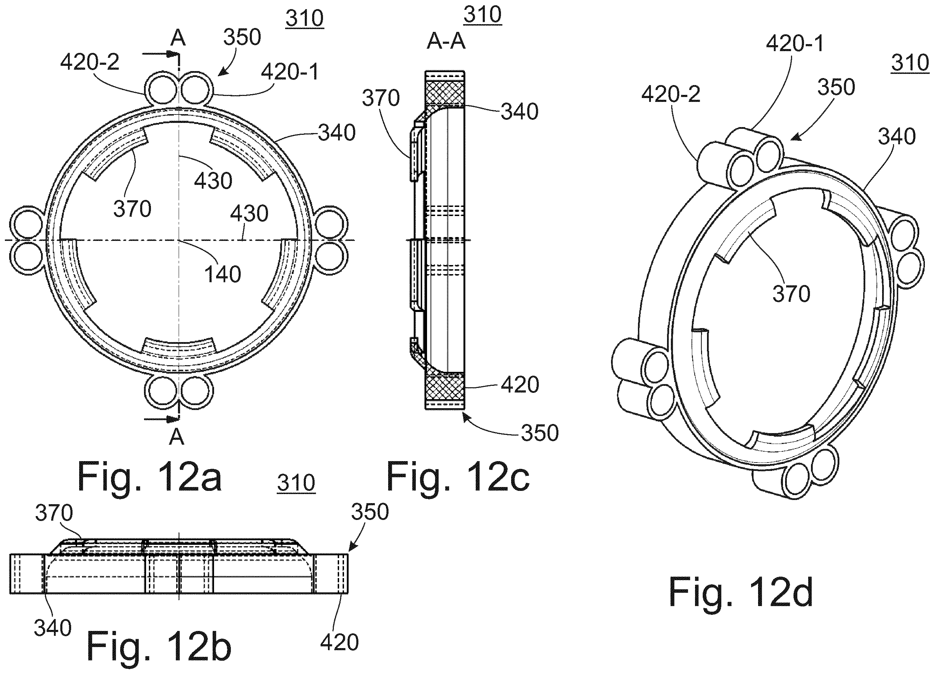

Fig. 12 zeigt ein weiteres Dämpfungsbauteil 310, welches sich von dem in Fig. 11 gezeigten hinsichtlich zweier Merkmale unterscheidet. So erstrecken sich beispielsweise die Führungsabschnitte 370 weniger weit nach radial innen als dies im Falle des Dämpfungsbauteils 310 aus Fig. 11 der Fall war. Darüber hinaus sind die Dämpfungsstrukturen 350 nunmehr nicht mehr als stegförmig ausgeführt, sondern es handelt sich wiederum um zwei Dämpfungsabschnitte 420-1, 420-2, die ihrerseits jeweils als hohlzylinderförmige Strukturen ausgestaltet sind. Diese sind unmittelbar mit der Trägerstruktur 340, die wiederum als ringförmige bzw. hohlzylinderförmige Struktur ausgestaltet ist, verbunden. Die beiden im Wesentlichen hohlzylinderförmigen Dämpfungsabschnitte 420-1, 420-2 sind hierbei spiegelsymmetrisch zu entsprechenden Symmetrieebenen 430 angeordnet und ausgerichtet.

Im Unterschied zu den zuvor beschriebenen Ausführungsbeispielen, bei denen die Dämpfungsabschnitte 420 nicht miteinander anderweitig als durch die Trägerstruktur 350 verbunden sind, sind hier die beiden Dämpfungsabschnitte 420 auch unmittelbar miteinander verbunden und bilden so eine 8-förmige Struktur, welche bezogen auf eine radiale Richtung, um 90° gedreht zu der Trägerstruktur 340 angeordnet ist. Hierbei ändert sich eine Außenkontur sowie eine Innenkontur der betreffenden Dämpfungsabschnitte 420 und damit der Dämpfungsstruktur 350 entlang der axialen Richtung 140 im Wesentlichen nicht. Selbstverständlich kann hiervon gegebenenfalls bei anderen Ausführungsbeispielen abgewichen werden.

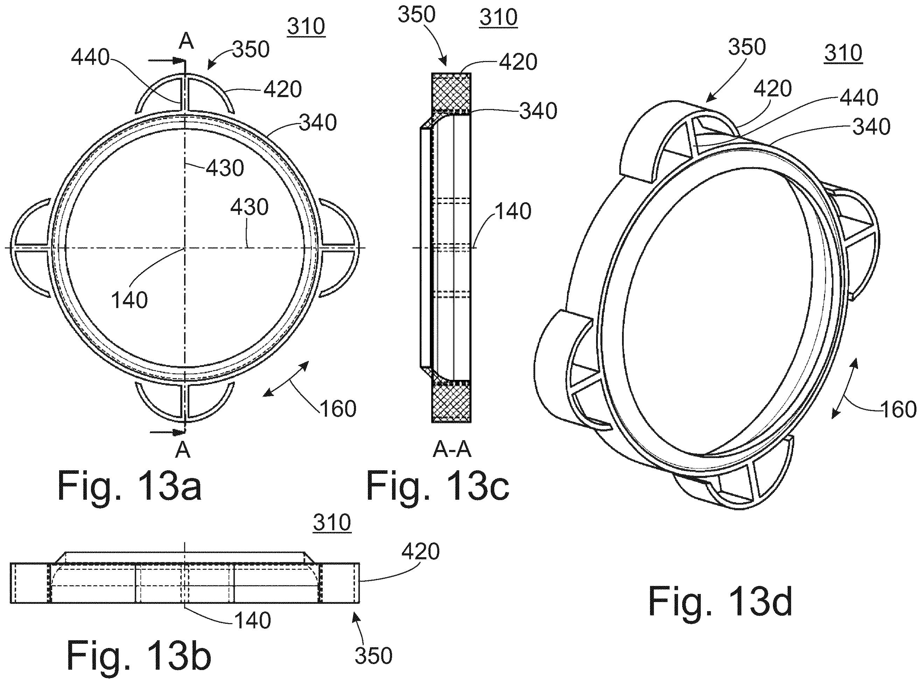

Fig. 13 zeigt ein weiteres Dämpfungsbauteil 310, welches sich von dem in Fig. 9 im Wesentlichen dadurch unterscheidet, dass nunmehr der Dämpfungsabschnitt 420 nicht mehr unmittelbar mit der Trägerstruktur 340 verbunden ist. Zwar ist auch hier der Dämpfungsabschnitt 420 im Wesentlichen hohlzylindersegmentförmig bzw. ringsegmentförmig ausgestaltet, jedoch münden die Enden in Umfangsrichtung 160 nicht mehr unmittelbar in der Trägerstruktur 340. Vielmehr weist dieses Dämpfungsbauteil 310 einen Verbindungsabschnitt 440 auf, der stegförmig ausgestaltet und radial weggerichtet von der Drehachse 140 den Dämpfungsabschnitt 420 symmetrisch zu den Symmetrieebenen 430 mit der Trägerstruktur 340 verbindet. Hierdurch kann es möglich sein, eine Flexibilität der Dämpfungsstruktur 350 gegenüber der in Fig. 9 gezeigten Ausgestaltung derselben weiterzusteigen, indem nunmehr die Dämpfungsabschnitte 420 nicht mehr unmittelbar mit der Trägerstruktur 340 verbunden sind, sondern vielmehr übe4r die Verbindungsabschnitte 440. So weisen also die Dämpfungsabschnitte 420 bei diesem Dämpfungsbauteil 310 nicht mehr zwei Verbindungen mit der Trägerstruktur 340 auf, sondern vielmehr nur noch eine, welche aufgrund ihrer langgestreckten Ausgestaltung eine gegebenenfalls höhere Flexibilität bezüglich einer Scherbewegung aufweisen kann.

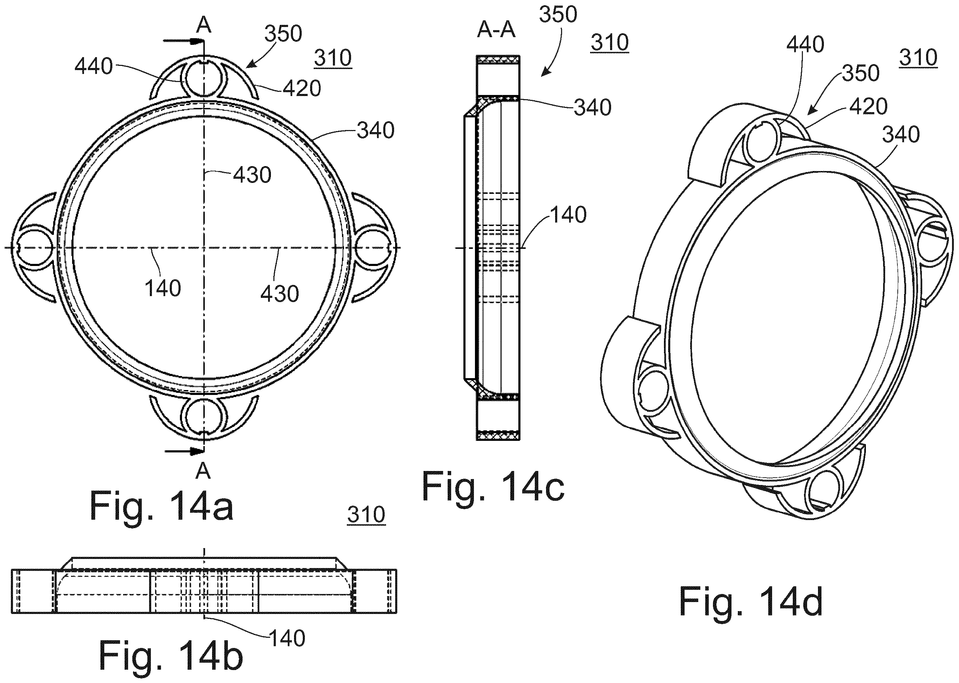

Fig. 14 zeigt schließlich ein weiteres Dämpfungsbauteil 310, welches sich von dem in Fig. 13 gezeigten Dämpfungsbauteil 310 dadurch unterscheidet, dass nunmehr die Verbindungsabschnitte 440 nicht mehr stegförmig, sondern ihrerseits ebenso hohlzylinderförmig bzw. in einer entsprechenden Ebene senkrecht zu der Drehachse 140 kreisbogenförmig ausgestaltet sind. Hierdurch kann es gegebenenfalls möglich sein, eine gegenüber dem Dämpfungsbauteil 310 aus Fig. 13 erhöhte Steifigkeit hinsichtlich einer Scherdeformation der Dämpfungsabschnitte 420 zu erreichen.

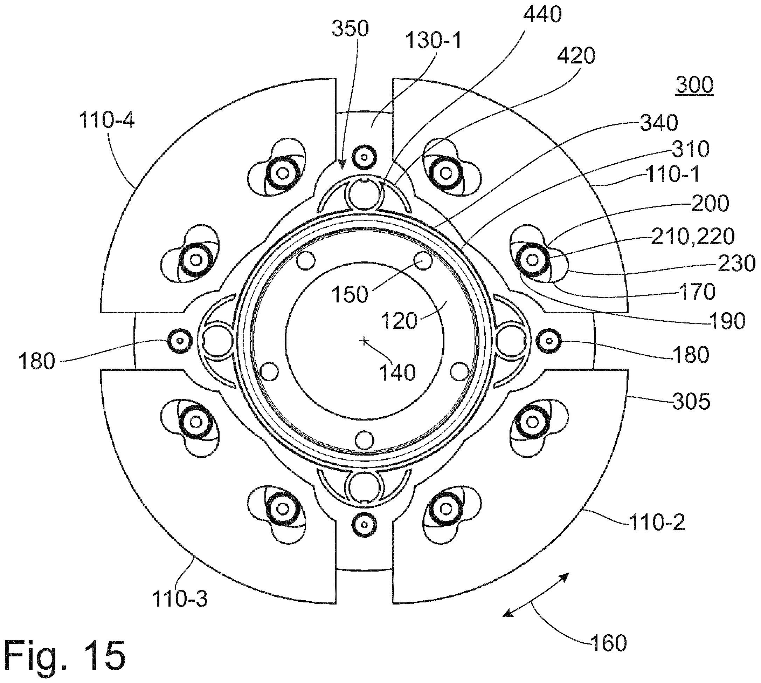

Fig. 15 zeigt eine Fig. 3a vergleichbare Darstellung eines Tilgerschwingungsdämpfers 300, bei dem anstelle des dort beschriebenen Dämpfungsbauteils 310 das im Zusammenhang mit Fig. 14 beschriebene Dämpfungsbauteil 310 implementiert ist. Auch hier ist wiederum zur Steigerung der Übersichtlichkeit das zweite Führungsbauteil 130-2, welches auch als rechtes Bahnblech bezeichnet wird, ausgeblendet bzw. nicht dargestellt. Anders ausgedrückt ist in Fig. 15 die Baugruppe des Tilgerschwingungsdämpfers 300, welcher auch als drehzahladaptive Tilger (DAT) bezeichnet wird, mit der eingebauten Variante des Dämpfungsbauteils 310 aus Fig. 14 zu sehen. Wie der Abbildung zu entnehmen ist, ist das Dämpfungsbauteil 310 unabhängig von den Distanznieten 180 verbaut. Selbstverständlich können die Niete 180 auch in der Geometrie des Dämpfungsbauteils 310 eingeschlossen sein bzw. auf andere Art und Weise berücksichtigt werden. Diese können sich beispielsweise in den runden Aussparungen der Verbindungsabschnitten 440 gegebenenfalls auch in entsprechenden Strukturen der Dämpfungsabschnitte 420 befinden. Dabei dienen die Distanzniete 180, also die Abstandsstücke oder Niete, nicht der radialen Abstützung des Dämpfungsbauteils 310 und auch nicht der Fixierung in Umfangsrichtung. Das Dämpfungsbauteil 310 bleibt auch hier drehbar gelagert.

Ausführungsbeispiele eines Tilgerschwingungsdämpfers 300 können so beispielsweise einen Kunststoffring zur Abstützung von auch als Fliehgewichten bezeichneten Tilgermassen 110 zur Verbesserung der Akustik umfassen. Ein solcher Tilgungsschwingungsdämpfer 300 kann beispielsweise als drehzahladaptiver Tilger implementiert werden. Das Dämpfungsbauteil 310 kann beispielsweise als Mitnahmeelement dienen.

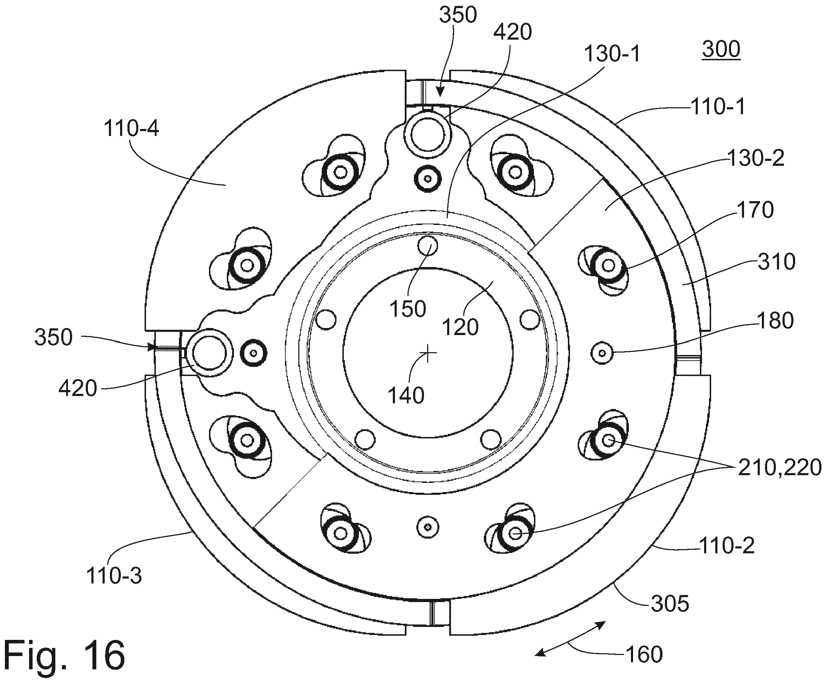

Fig. 16 zeigt eine Teilaufrissdarstellung eines weiteren Ausführungsbeispiels eines Tilgerschwingungsdämpfers 300 gemäß einem Ausführungsbeispiel. Zur Verbesserung der Übersichtlichkeit ist hier das zweite Führungsbauteil 130-2 geschnitten dargestellt. Der Tilgerschwingungsdämpfer 300 weist hierbei wiederum zwei Führungsbauteile 130-1, 130-2 auf, die auch als linkes Bahnblech und rechtes Bahnblech aufgrund der in ihnen implementierten Führungslaufbahnen 170 und ihre häufig blechartigen Ausgestaltung genannt werden. Auch hier weist der Tilgerschwingungsdämpfer 300 wiederum ein Dämpfungsbauteil 310 auf, welches auch als Distanzring bezeichnet wird. Die beiden Führungsbauteile 130-1, 130-2 sind wiederum durch mehrere Distanzniete 180, die wiederum als Niet oder Abstandsstücke bezeichnet werden miteinander verbunden. Auch hier weist wieder der Tilgerschwingungsdämpfer 304 Tilgermassen 110-1, 110-2, 110-3, 110-4 auf, die auch als Fliehgewichte bezeichnet werden. Diese werden mithilfe von Wälzkörpern 210, die beispielsweise als gestufte Rollen 220 ausgeführt sein können, in den entsprechenden Führungslaufbahnen 170 der Führungsbauteil 130 und der Tilgermassen 110 geführt.

So zeigt Fig. 16 die Baugruppe des Tilgerschwingungsdämpfers 300 und seine Komponenten mit dem eingebauten Dämpfungsbauteil 310 in neutraler Lage, bei der die Tilgermassen 110 ihre Mittellage annehmen.

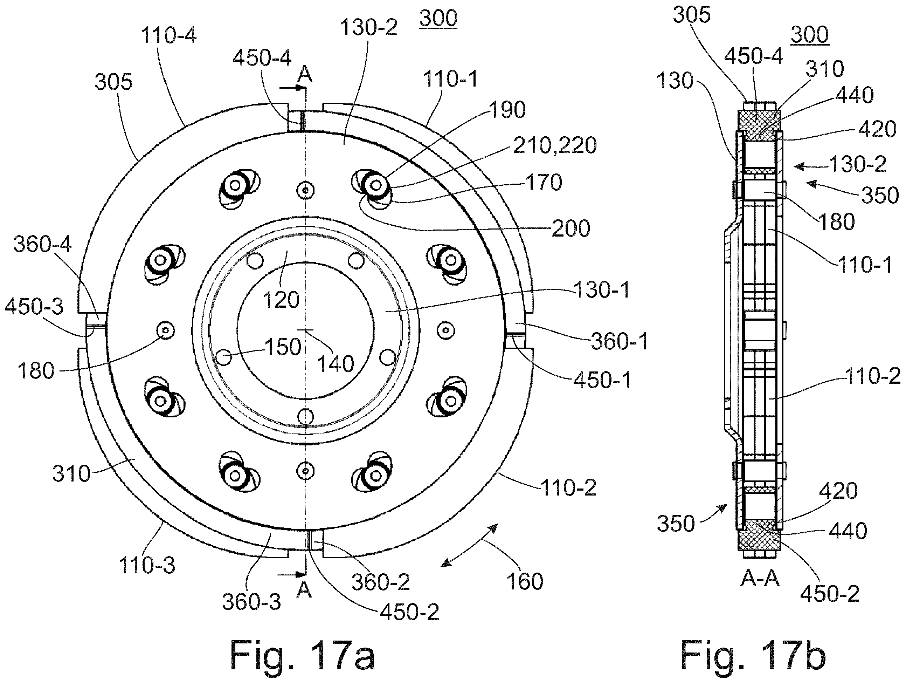

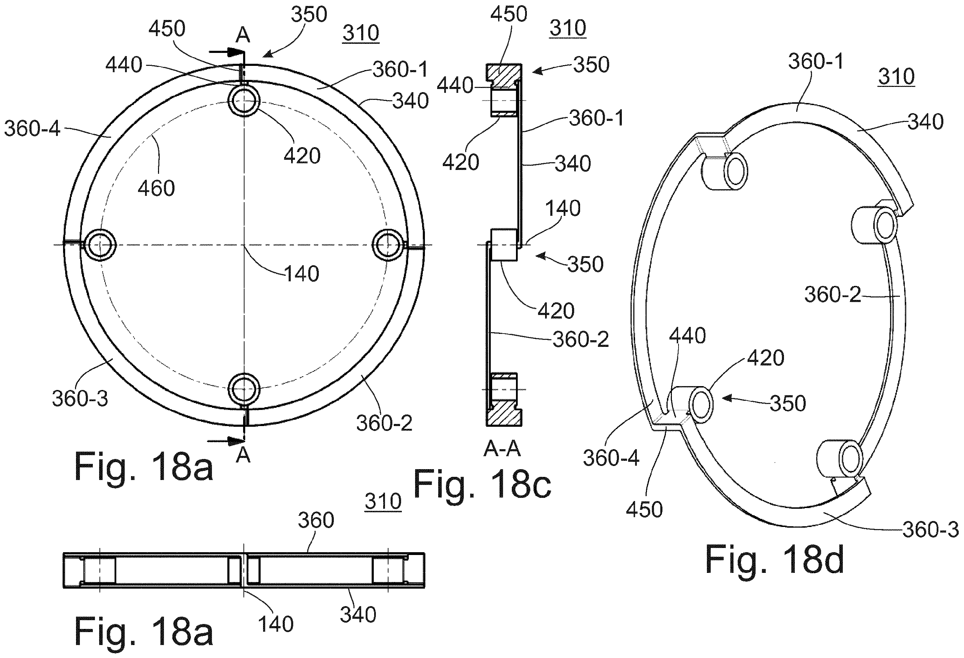

Darüber hinaus zeigt Fig. 16 die Dämpfungsstrukturen 350 sowie die Dämpfungsabschnitte 420 des Dämpfungsbauteils 310, wobei die Dämpfungsabschnitte 420 im vorliegenden Fall als Hohlzylinder ausgeführt sind. Die genauere Ausgestaltung des Dämpfungsbauteils 310 wird im Zusammenhang mit den Fig. 17a, 17b, 18a, 18b, 18c und 18d noch näher erläutert.

So zeigt Fig. 17a den gesamten Tilgerschwingungsdämpfer 300 mit eingebautem Distanzbauteil 310 als Aufsicht sowie Fig. 17b eine entsprechende Schnittdarstellung entlang der in Fig. 17a als Schnittebene gezeichneten Ebene A-A. Im Unterschied zur Darstellung der Fig. 16 ist in Fig. 17 das zweite Führungsbauteil 130-2 nicht geschnitten dargestellt.

Wie die teilweise Anordnung des Distanzbauteils 310 vor den Tilgermassen 110-1 und 110-3 sowie hinter den Tilgermassen 110-2 und 110-4 bereits zeigt, handelt es sich bei diesem Dämpfungsbauteil 310 um ein Solches, welches mehrere kreisbogensegmentförmige bzw. hohlzylindersegmentförmige Umfangsabschnitte 360-1, 360-2, 360-3 und 360-4 aufweist. Die Zahl der Umfangsabschnitte 360 entspricht so bei der hier gezeigten Ausgestaltung gerade der Zahl der Tilgermassen 110, auch wenn dies selbstverständlich bei anderen Ausführungsbeispielen anders implementiert sein kann.

Die Umfangsabschnitte 360-1 und 360-3 der Trägerstruktur 340 des Dämpfungsbauteils 310 liegen hierbei radial auf dem zweiten Führungsbauteil 130-2 auf, während die Umfangsabschnitte 360-2 und 360-4 auf dem ersten Führungsbauteil 130-1 aufliegen. Die betreffenden Umfangsabschnitte sind hier eher ringsegmentartig ausgestaltet, bei denen eine Erstreckung entlang der Drehachse 140 kürzer als eine radiale Erstreckung derselben ist.

Verbunden werden die einzelnen Umfangsabschnitte 360, die auch entsprechend ihrer Nummer als benachbarte Umfangsabschnitte entlang der Umfangsrichtung 160 angeordnet sind, durch vier Axialabschnitte 450-1, 450-2, 450-3 und 450-4. Der Axialabschnitt 450-1 verbindet hierbei die Umfangsabschnitte 360-1 und 360-2, der Axialabschnitt 450-2, die Umfangsabschnitte 360-2 und 360-3, der Axialabschnitt 450-3, die Umfangsabschnitte 360-3 und 360-4, sowie der Axialabschnitt 450-4 die Umfangsabschnitte 360-4 und 360-1 miteinander. Wie die Namen bereits erstrecken sich hierbei die Axialabschnitte im Wesentlichen entlang der Axialrichtung, also entlang der Drehachse 140.

Die Axialabschnitte 450 erstrecken sich bei der hier gezeigten Konstruktion in einem Bereich zwischen die Tilgermassen 110. Sie werden daher über entsprechende Verbindungsabschnitte 440 ebenso zur Anordnung bzw. Führung der Dämpfungsabschnitte 420 verwendet, welche in der Schnittdarstellung der Fig. 17b im Querschnitt gezeigt sind.

So wie den Fig. 17a und 17b beispielsweise zu entnehmen ist, ist hier das Dämpfungsbauteil 310 nicht mehr als Innenring ausgestaltet, bei dem sich die Dämpfungsstrukturen 350 nach radial außen erstrecken, sondern vielmehr als Außenring ausgestaltet, bei dem sich die betreffenden Dämpfungsstrukturen 350 nach radial innen erstrecken. Darüber hinaus ist den Abbildungen 17a und 17b zu entnehmen, dass das Dämpfungsbauteil auf den äußeren Ringflächen der beiden Führungsbauteile 130-1, 130-2 aufliegt und somit in Umfangsrichtung 160 geführt und in radialer Richtung von den Führungsbauteilen 130 ebenso gehalten wird. Entlang der Drehachse 140 wird das Dämpfungsbauteil 310 zwischen den Führungsbauteilen 130 schon durch die Dämpfungsabschnitte 420 der Dämpfungsstrukturen 350 axial gehalten und geführt.

Die Fig. 18a, 18b, 18c und 18d zeigen jeweils eine Aufsicht, eine Seitenansicht, eine Schnittdarstellung einer in Fig. 18a gezeigten Schnittebene A-A und eine perspektivische Darstellung des Dämpfungsbauteils 310 des Tilgungsschwingungsdämpfers 300 aus den Fig. 16, 17a und 17b. Die bereits im Zusammenhang mit den Fig. 17a und 17b beschriebene Struktur zeigen die Fig. 18a bis 18d erneut.

So ist auf diesen Figuren sehr viel deutlicher als in den Fig. 17a und 17b die Anordnung der Umfangsabschnitte 360 mit den dazwischen angeordneten Axialabschnitten 440 und den an diesen angeordneten Verbindungsabschnitten 440 und den wiederum an diesen angeordneten Dämpfungsabschnitten 420 zu sehen. Die Dämpfungsabschnitte 420, die - wie bereits zuvor erwähnt wurde - als Hohlzylinder ausgeführt sind, weisen hierbei Mittelpunkte auf, die auf einem gemeinsamen Teilkreis 460 angeordnet sind. Diese sind über die Verbindungsabschnitte 440 mit der Trägerstruktur 340, genauer gesagt ihren Umfangsabschnitten 360 über die Verbindungsabschnitte 440 verbunden, die gegenüber einer Erstreckung der Dämpfungsabschnitte 420 entlang der Drehachse 140 eine geringere Erstreckung aufweisen. Hierdurch kann gegebenenfalls ein in Kontakt Treten der Verbindungsabschnitte 440 mit den in Fig. 18a bis 18d nicht gezeigten Führungsbauteilen 130 vermieden werden, durch die gegebenenfalls hervorgerufen durch Kantenradien oder ähnliche herstellungsbedingte Effekte Linien- oder Punktkontakte vermieden werden können, durch die eine mechanisch stärkere Belastung des Dämpfungsbauteils 310 gegebenenfalls auftreten könnte.

Das Dämpfungsbauteil 310 ist also in Fig. 18a bis 18d in vier Ansichten dargestellt, wobei das Dämpfungsbauteil 310 beispielsweise wiederum aus einem Kunststoff gefertigt sein kann. Somit können über die Materialauswahl solche Eigenschaften des Dämpfungsbauteils 310, wie etwa Steifigkeit, Festigkeit, Gleitfähigkeit und andere Parameter beeinflusst werden.

Im Hinblick auf die Funktion wird auch bei diesem Ausführungsbeispiel eines Torsionsschwingungsdämpfers 300 mittels des Dämpfungsbauteils 310, das auch als Ringelement oder Distanzring bezeichnet wird und das zwischen den Führungsbauteilen 130 und/oder außen auf denselben des Tilgungsschwingungsdämpfers 300 geführt wird, wird ein freier Schwingwinkel der Tilgermassen 110 begrenzt. Ab einem einstellbaren Schwingwinkel werden die zwischen den Tilgermassen 110 befindlichen Dämpfungsstrukturen 350, also die zwischen den Tilgermassen 110 befindlichen Teile des Dämpfungsbauteils 310 gegebenenfalls komprimiert und damit elastisch verformt, wodurch eine Auslenkung der Tilgermassen 110 über den eingestellten Winkel hinaus gedämpft wird. Dies kann während des Betriebs, aber auch nach einem Abstellen des Motors sowie im Kriechbetrieb des Fahrzeugs zu einer Dämpfung der Tilgermassen 110 in ihren Anschlägen oder Bahnenden 230 der Führungslaufbahnen 170 führen.

Durch die drehbare Lagerung des Dämpfungsbauteils 310 wird die freie Schwingung der Tilgermassen 110 in dem definierten Winkel kaum bzw. gegebenenfalls überhaupt nicht beeinträchtigt. Weiterhin können die Tilgermassen 110 mittels Federrings beim Herabfallen gegeneinander abgestützt werden und somit auf Abstand gehalten werden, wodurch eine Kollision derselben gegebenenfalls vermieden werden kann, was beispielsweise nach dem Abstellen des Motors auftreten kann.

Damit kann das Entstehen eines klappernden Geräuschs, welches sowohl im Fahrzeug, wie auch außerhalb desselben bei einer konventionellen Lösung gegebenenfalls wahrnehmbar ist, gegebenenfalls soweit reduziert oder eliminiert werden, dass dieses gerade nicht mehr wahrnehmbar ist. Dadurch, dass das Dämpfungsbauteil 310 drehbar ist, und nicht eine starre Kopplung zwischen den Tilgermassen 110 implementiert wird, kann so gegebenenfalls eine Funktionalität der Tilgermassen 110 ungehinderter aufrechterhalten werden. Jede Tilgermasse 110 arbeitet daher alleine bzw. für sich, da die Tilgermassen 110 gerade untereinander nicht gekoppelt sind.

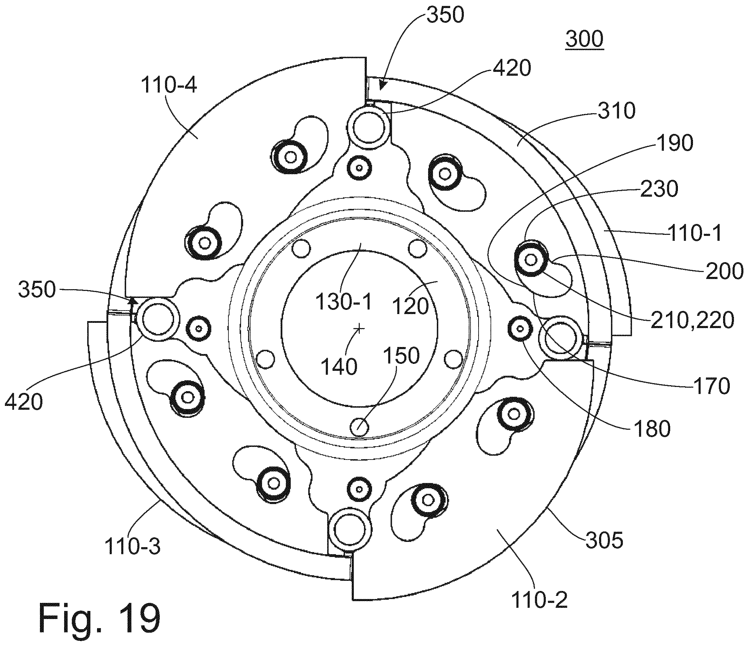

Fig. 19 zeigt eine Fig. 16 vergleichbare Darstellung des Tilgerschwingungsdämpfers 300, bei der jedoch zur Steigerung der Übersichtlichkeit halber das zweite Führungsbauteil 130-2 nicht dargestellt ist. Die Fig. 16 und 19 unterscheiden sich darüber hinaus darin, dass in Fig. 16 die Tilgermassen 110 im Wesentlichen in ihrer Mittellage angeordnet sind, während diese sich in der Fig. 19 dargestellten Situation im Bereich ihrer Bahnenden 230 also im Bereich des maximalen Verdrehwinkels oder Schwingwinkels befinden.

So zeigt Fig. 19 den Tilgerschwingungsdämpfer 300 mit maximal ausgelenkten Tilgermassen 110. Bevor die Tilgermassen 110 in ihre Anschläge oder Bahnenden 230 ihre auch als Schwingbahnen bezeichneten Führungslaufbahnen 170 gehen können, wird eine elastische Verformungsarbeit (Kompressionsarbeit) an den zwischen den Tilgermassen 110 befindlichen Teilen, nämlich unter anderem an den Dämpfungsabschnitten 420, die auch als Kompressionskörper bezeichnet werden, des Dämpfungsbauteils 310 verrichtet. Hierdurch wird ein Anschlag der Tilgermassen 110 an ihren jeweiligen Bahnenden 230 gedämpft. Das Dämpfungsbauteil 310 beschreibt dabei eine vergleichsweise geringe Amplitude.

Fig. 19 zeigt hierbei genauer gesagt die Situation, die während des Motorbetriebs vorliegt. Der freie Schwingwinkel der Tilgermassen 110, der bei dem hier gezeigten Ausführungsbeispiel gerade dadurch gegebenen ist, dass durch die Tilgermassen 110 keine signifikante Kompressionsarbeit bzw. elastische Deformationsarbeit an den Dämpfungsstrukturen 350 verrichtet wird, kann ebenso wie auch der maximale Verdrehwinkel (maximaler Schwingwinkel) des Dämpfungsbauteils 310 über eine Veränderung der Geometrie der Tilgermassen wie auch der Dämpfungsstrukturen 350, beispielsweise durch Anpassung der Dämpfungsabschnitte 420, nach Bedarf angepasst werden. So kann es gegebenenfalls ratsam sein, die Tilgermassen 110 in einem Bereich, in dem sie mit der Dämpfungsstruktur 350 in Kontakt treten, hinsichtlich ihrer Formgebung an eine Ausgestaltung an die Dämpfungsstrukturen 350 bzw. der Dämpfungsabschnitte 420 anzupassen.

Hierdurch kann es gegebenenfalls möglich sein, während des Betriebs die bereits zuvor beschriebene Kollision der Tilgermassen 110 untereinander auszuschließen, wodurch gegebenenfalls höhere Massen der Tilgermassen 110, also eine höhere Masse der Fliehgewichte, realisierbar sein kann.

In einem weiteren Zustand, bei dem der Motor abgestellt wird, oder bereits abgestellt ist, die Getriebeeingangswelle jedoch noch nachläuft oder auch ein Kriechbetrieb des Motors vorliegt, sind die Verhältnisse anders, wie dies bereits zuvor erläutert wurde. Bei einem langsamen Kriechen dreht sich die Getriebeeingangswelle mit niedrigerer Drehzahl als die Motordrehzahl. Die Gewichtskraft 250 der Tilgermassen 110 ist in diesem Zustand deutlich höher als die entgegengesetzte Komponente der Fliehkraft 240. Ähnlich verhält es sich auch beim Abstellen des Motors. Die Getriebeeingangswelle läuft noch einige Sekunden nach. Ab einem bestimmten Zeitpunkt übersteigt die Gewichtskraft die entgegengesetzte Fliehkraftkomponente, wobei in beiden geschilderten Zuständen die Tilgermassen 110 unkontrolliert herunterfallen können.

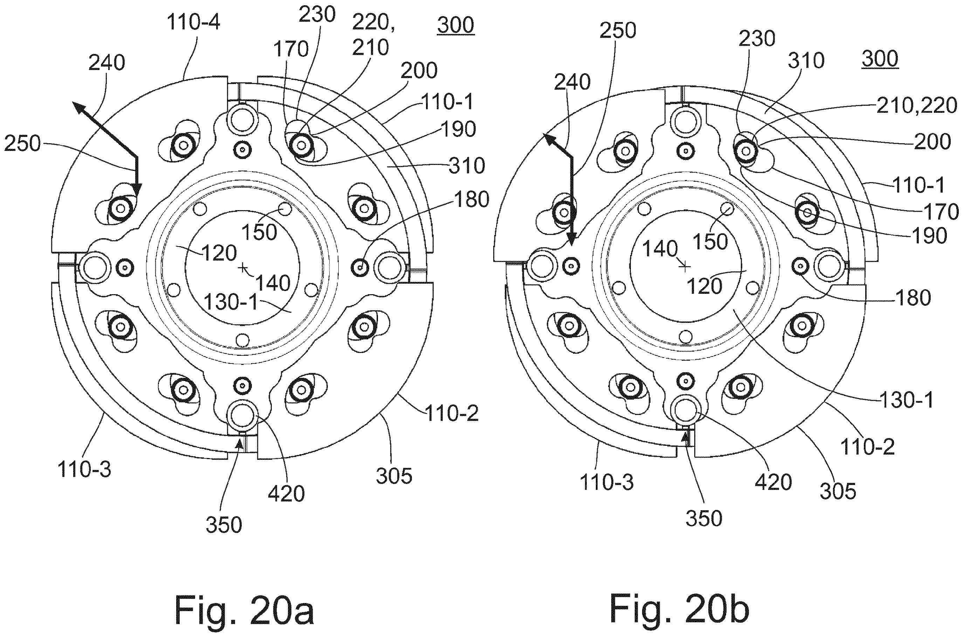

Die Fig. 20a und 20b zeigen eine Darstellung des Tilgerschwingungsdämpfers 300 in zwei unterschiedlichen Betriebssituationen, wobei wiederum zur Vereinfachung der Darstellung das zweite Führungsbauteil 130-2 nicht gezeigt ist.

Fig. 20a zeigt hierbei eine Situation, die dem Betrieb des Kraftfahrzeugs entspricht. In dem Betrieb werden die Tilgermassen 110 aufgrund der vergleichsweise hohen Fliehkräfte 240 radial nach außen gedrückt und bewegen sich entsprechend entlang ihrer Führungslaufbahnen 170. Die Bewegung der Tilgermassen 110 ist hierbei im Wesentlichen durch die Geometrie der Führungslaufbahnen 170 sowohl in den Tilgermassen 110 als auch in den betreffenden Führungsbauteilen 130 vorgegeben.

Bei einem Fahrzeug-Kriechbetrieb oder auch bei einem Abstellen des Motors reicht gegebenenfalls jedoch die Fliehkraft 240 nicht mehr aus, um die Tilgermassen 110 in ihren Soll-Lagen zu halten. Je nach Winkelstellung des Tilgerschwingungsdämpfers 300 fallen diese entweder frei herunter oder gleiten entlang der Führungslaufbahnen 170 herunter. Das Dämpfungsbauteil 310, das auch als Distanzring bezeichnet wird, verhindert die Soll-Bewegung der Tilgermassen 110 in den Führungslaufbahnen 170 durch das Abstützten derselben gegeneinander, wie dies in Fig. 20b dargestellt ist. Damit wird das Herunterfallen der Tilgermassen 110 in ihre Bahnenden 230 verhindert, zumindest jedoch soweit abgemildert, dass das zuvor beschriebene klackernde Geräusch nicht mehr oder zumindest nicht im dem Maße entsteht. Anders ausgedrückt kann hierdurch gegebenenfalls dem klackernden Geräusch vorgebeugt werden.

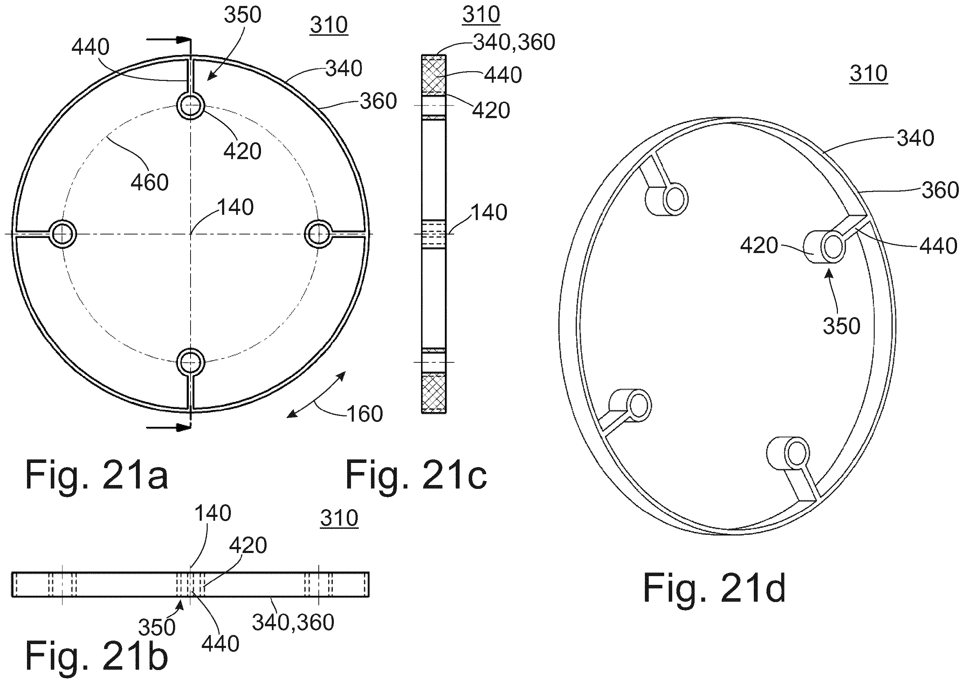

Die Fig. 21a, 21b, 21c und 21d zeigen eine weitere mögliche Variante eines Dämpfungsbauteils 310, bei dem eine radiale Abstützung des Dämpfungsbauteils 310 auf den Führungsbauteilen 130 nicht implementiert ist. Die Fig. 21a zeigt hierbei eine Aufsicht, Fig. 21b eine Seitenansicht, Fig. 21c eine Schnittansicht entlang der in Fig. 21a gekennzeichneten Schnittebene A-A und Fig. 21d eine perspektivische Darstellung des Dämpfungsbauteils 310.

Das Dämpfungsbauteil 310 aus Fig. 21 unterscheidet sich hierbei von dem aus Fig. 18 hinsichtlich mehrerer Aspekte. So ist die Trägerstruktur 340 nunmehr als Hohlzylinder ausgestaltet, sodass die Trägerstruktur 340 auch nur einen einzigen Umfangsabschnitt 360 aufweist. Entsprechend entfallen die Axialabschnitte 450, welche in Fig. 18 die einzelnen Umfangsabschnitte 360 miteinander verbunden haben.

Auch hier sind wiederum die Dämpfungsabschnitte 420 als Hohlzylinder ausgeformt, die wiederum über entsprechende Verbindungsabschnitte 440 mit der Trägerstruktur 340 verbunden sind. Allerdings erstrecken sich hier die Verbindungsabschnitte 440 deutlich weiter radial nach innen als dies bei dem Dämpfungsbauteil 310 in Fig. 18 der Fall gewesen ist. Entsprechend sind die Mittelpunkte der Dämpfungsabschnitte 410 auf einem kleineren Teilkreis 460 angeordnet. Die Verbindungsabschnitte 440 sind hier stegförmig ausgebildet und erstrecken sich im Wesentlichen radial nach innen von der Trägerstruktur 340 ausgehend.

Die Dämpfungsabschnitte 420 (Kompressionskörper) des Dämpfungsbauteils 310 befinden sich bei dieser Ausgestaltung zwischen den Führungsbauteilen 130 des Tilgungsschwingungsdämpfers 300, wodurch das Dämpfungsbauteil 310 in axialer Richtung fixiert wird. Radial ist das Dämpfungsbauteil 310 jedoch frei beweglich und stützt sich lediglich über die Trägerstruktur 340 bzw. die Dämpfungsstrukturen 350 auf den Tilgermassen 110 ab. Dadurch kann das Dämpfungsbauteil bei herabfallenden Tilgermassen 110 in Richtung der Gravitationskraft mitbewegt werden. Hierdurch kann es gegebenenfalls möglich sein, einen Einfluss des Dämpfungsbauteils 310 auf die Funktionsfähigkeit der Tilgermassen 110 noch weiter zu reduzieren und so gegebenenfalls die Leistungsfähigkeit des Tilgerschwingungsdämpfers 300 weniger nachteilig zu beeinflussen oder sogar gar nicht nachteilig zu beeinflussen.

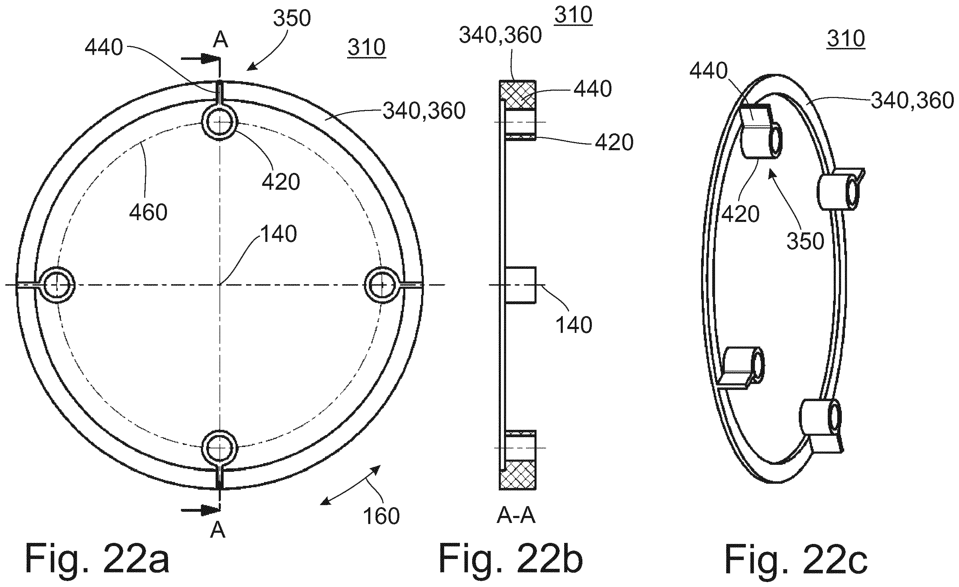

In den nachfolgenden Fig. 22, 23 und 24 und ihren Teilabbildungen sind weitere beispielhafte Ausführungen eines Dämpfungsbauteils 310 dargestellt, bei denen das Dämpfungsbauteil 310 in radialer Richtung nur auf einem der Führungsbauteile 130 abgestützt wird. Diese Konfiguration kann es gegebenenfalls ermöglichen, das Dämpfungsbauteil 310 in einem Tilgerschwingungsdämpfer 300 (drehzahladaptiver Tilger, DAT) auch bei einem geringen Abstand zwischen den Tilgermassen 110 und anderen Bauteilen auf einer Seite der Tilgermassen 110 entlang der Drehachse 140 vorzunehmen.

Fig. 22a, 22b und 22c zeigen so ein weiteres Dämpfungsbauteil 310 als Aufsicht, Querschnittsdarstellung entlang einer in Fig. 22a eingezeichneten Schnittebene A-A und als perspektivische Darstellung. Auch hier ist wiederum die Trägerstruktur 340 so ausgestaltet, dass diese nur einen einzigen Umfangsabschnitt 360 aufweist, der die Drehachse 140 vollständig umschließt und ringförmig ausgestaltet ist, also eine Ausdehnung entlang der Drehachse 140 aufweist, die kleiner ist als eine entsprechende Ausdehnung in radialer Richtung. Im Unterschied hierzu weist eine hohlzylinderförmige Ausgestaltung eine Ausdehnung entlang der Drehachse 140 auf, die wenigstens eine Erstreckung des Hohlzylinders im Sinne einer Differenz zwischen einem Außenradius des Hohlzylinders und einem Innenradius des Hohlzylinders entlang der radialen Richtung aufweist.

Bei der hier gezeigten Ausführung des Dämpfungsbauteils 310 sind die Verbindungsstrukturen 440 entlang der Drehachse 140 angeordnet und führen die Dämpfungsabschnitte 420 auf den Teilkreis 460 nach radial innen auf die Drehachse 140 zu. Hierdurch ist es möglich, die Trägerstruktur ebenso zur radialen Führung an einem der Führungsbauteile 130 (nicht gezeigt in Fig. 22) zu verwenden. Auch hier sind die Dämpfungsabschnitte 420 wieder hohlzylinderförmig ausgestaltet.

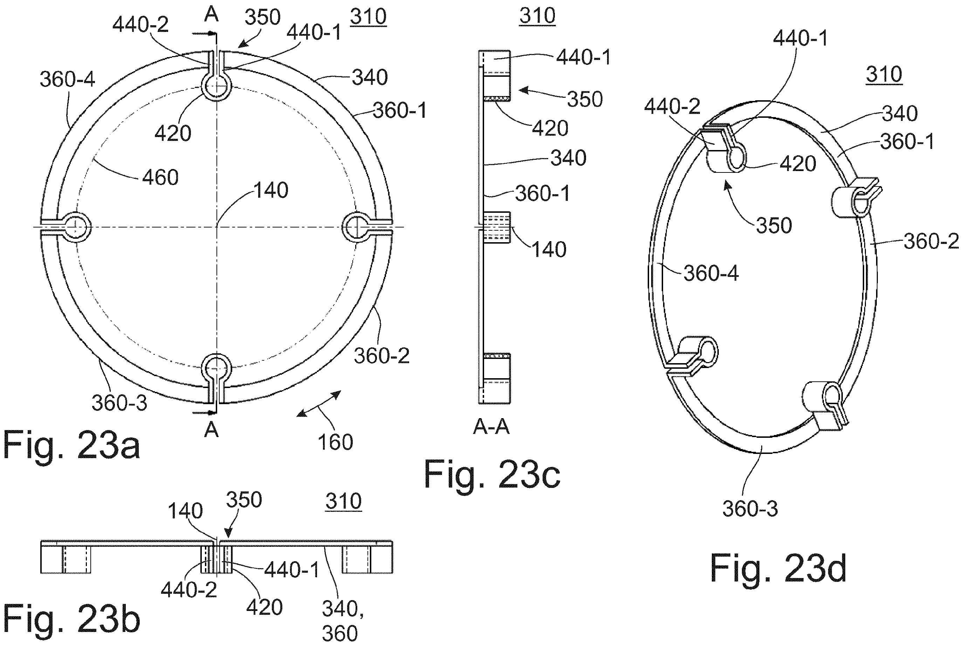

Die Fig. 23a, 23b, 23c und 23d zeigen wiederum eine Aufsicht, eine Seitenansicht, eine Querschnittsdarstellung entlang der in Fig. 23a eingezeichneten Schnittebene A-A sowie eine perspektivische Darstellung eines weiteren Dämpfungsbauteils 310. Dieses unterscheidet sich von dem zuvor in Fig. 22 gezeigten Dämpfungsbauteil 310 im Wesentlichen durch die Ausgestaltung der Trägerstruktur 340. Diese weist hier vier Umfangsabschnitte 360-1, 360-2, 360-3, 360-4 auf, die jeweils ringsegmentförmig ausgestaltet sind und über die Dämpfungsstrukturen 350 miteinander verbunden sind. Die Umfangsabschnitte 360 liegen hierbei im Wesentlichen in einer Ebene, wie dies beispielsweise die Fig. 23b und 23c zeigen, weshalb auch hier keine Axialabschnitte 450 implementiert sind.

Genauer gesagt weisen hier die Dämpfungsstrukturen 350 wiederum hohlzylinderförmig bzw. hohlzylindersegmentförmig ausgestaltete Dämpfungsabschnitte 420 auf, die mithilfe jeweils zweier Verbindungsabschnitte 440-1, 440-2 an zwei benachbarte Umfangsabschnitte 360, beispielsweise die Umfangsabschnitte 360-1 und 360-4 mechanisch gekoppelt sind. Hierdurch kann es gegebenenfalls möglich sein, auch entlang der Umfangsrichtung 160 eine bestimmte Federwirkung zu implementieren. Auch hier wird wiederum das Dämpfungsbauteil radial durch ein Führungsbauteil 130 geführt, welches jedoch in Fig. 23 nicht eingezeichnet ist.

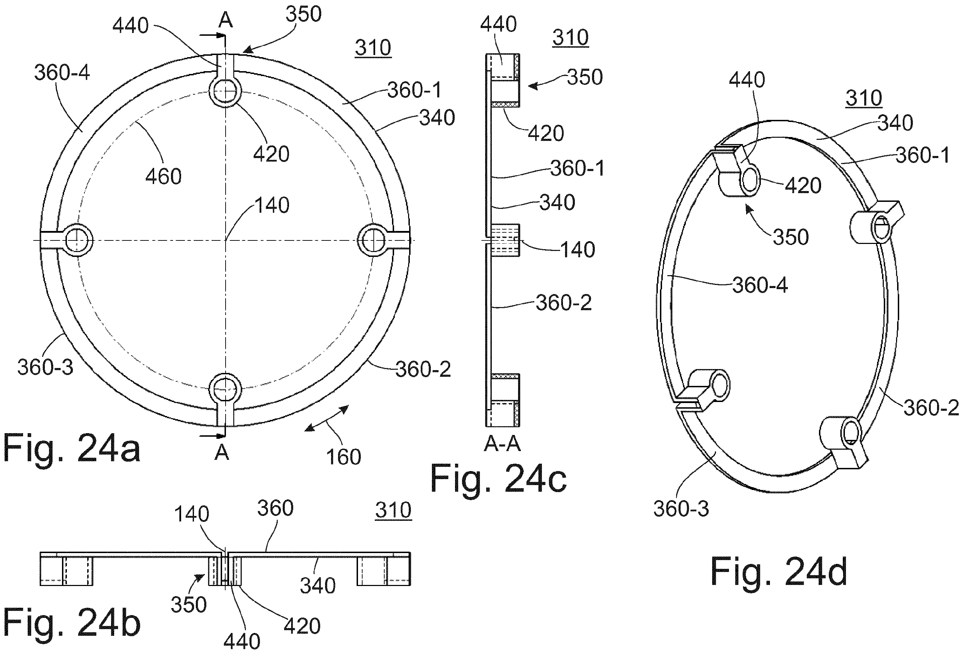

Fig. 24a, 24b, 24c und 24d zeigen jeweils eine Aufsicht, Seitenansicht, Schnittdarstellung entlang einer in Fig. 24a gezeigten Schnittebene A-A, sowie eine perspektivische Darstellung eines weiteren Dämpfungsbauteils 310. Dieses unterscheidet sich von dem in Fig. 23 gezeigten Dämpfungsbauteil 310 im Wesentlichen dadurch, dass anstelle der zwei separaten Verbindungsabschnitte 440-1, 440-2 nunmehr ein U-förmiger Verbindungsabschnitt 440 zum Einsatz kommt, der neben zwei sich in axialer Richtung erstreckende Schenkel auch einen entlang der Umfangsrichtung 160 erstreckenden Abschnitt aufweist. Mit Hilfe dieses U-förmigen Verbindungsabschnitts 440 werden die Dämpfungsabschnitte 420 der Dämpfungsstrukturen 350 auf dem Teilkreis 460 angeordnet sowie jeweils zwei benachbart angeordnete Umfangsabschnitte 360, beispielsweise die Umfangsabschnitte 360-1, 360-4, miteinander verbunden.

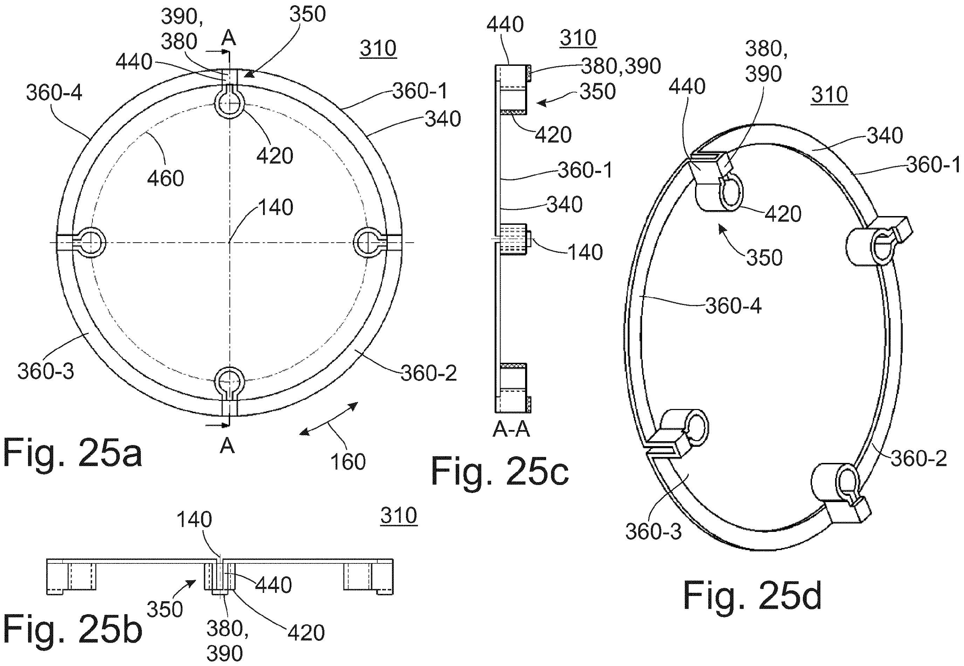

Die Fig. 25a, 25b, 25c und 25d zeigen eine Aufsicht, eine Seitenansicht, eine Schnittansicht durch eine in Fig. 25a gezeigte Schnittebene A-A sowie eine perspektivische Darstellung eines weiteren Dämpfungsbauteils 310, welches sich von dem in Fig. 24 gezeigten Dämpfungsbauteil 310 dadurch unterscheidet, dass dieses nunmehr an eine der Trägerstruktur 340 abgewandten Seite entlang der Drehachse 140 einer Führungsstruktur 380 aufweist, die in Form eines Vorsprungs 390 implementiert ist. Durch die Führungsstruktur 380 kann sich das Dämpfungsbauteil 310 nicht mehr nur an einem Führungsbauteil 130, sondern nunmehr an beiden Führungsbauteilen 130-1, 130-2 (nicht gezeigt in Fig. 25) abstützten. Anders ausgedrückt illustriert die Fig. 25 mit ihrer Teildarstellung eine weitere Variante des Dämpfungsbauteils 310, bei welcher dieses sich in radialer Richtung auf beiden Führungsbauteilen 130 abstützen kann.

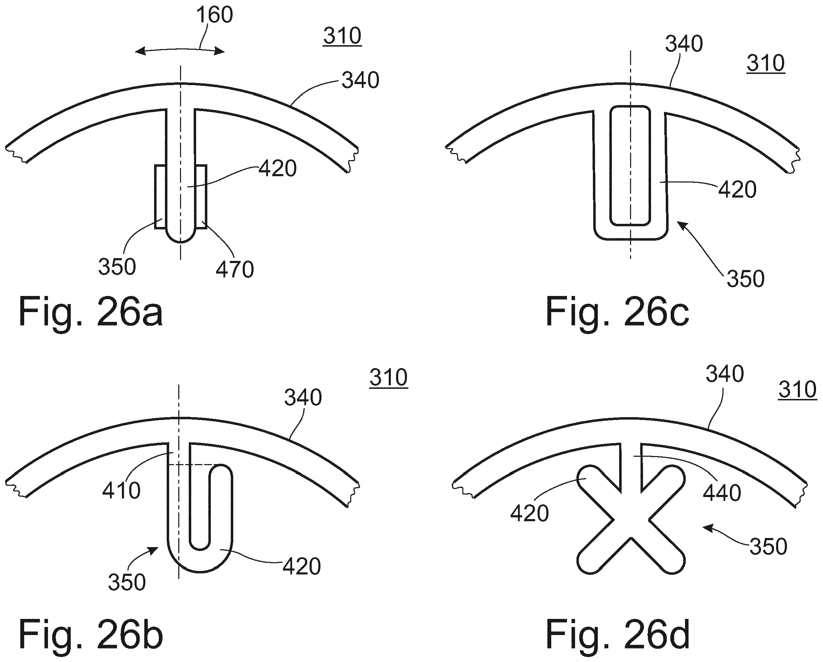

Lediglich der Vollständigkeit halber soll an dieser Stelle bereits erwähnt werden, dass natürlich anstelle der bisher beschriebenen als Hohlkörper ausgestalteten Dämpfungsabschnitte 420 diese auch aus Vollmaterial ausgeführt sein können. Hierbei können nicht nur die bisher beschriebenen hohlzylinderförmigen bzw. hohlzylindersegmentförmigen Ausgestaltungen gewählt werden, sondern diverse Variationen hinsichtlich Geometrie und Beschaffenheit gewählt werden. Einige dieser Variationen sind exemplarisch in den Fig. 26a bis 26d skizziert.

So zeigen die Fig. 26a bis 26d jeweils einen Ausschnitt aus einem Dämpfungsbauteil 310 mit einer Dämpfungsstruktur 350 und einem Dämpfungsabschnitt 420, die unmittelbar oder mittelbar mit der Trägerstruktur 340 verbunden sind. Im Falle des Dämpfungsbauteils 310 aus Fig. 26a ist der Dämpfungsabschnitt 420 stegförmig ausgebildet und erstreckt sich im Wesentlichen entlang der radialen Richtung. Dieser weist zu beiden Seiten entlang der Umfangsrichtung 160 eine Beschichtung 470 der Oberflächen des Dämpfungsabschnitts 420 auf. Diese auch als Dämpfungsschicht bezeichnete Beschichtung 470 kann hierbei aus unterschiedlichen Materialien gefertigt sein, beispielsweise aus einem Gummi oder einem anderen Elastomer, um nur ein Beispiel zu nennen. Die Beschichtung kann hierbei mithilfe unterschiedlicher Techniken auf den Dämpfungsabschnitt 420 aufgebracht werden. Ebenso kann es möglich sein, die betreffende Beschichtung nicht nur in dem Bereich des Dämpfungsabschnitts 420 aufzubringen, der mit den Tilgermassen 110 in Kontakt treten kann, es kann vielmehr auch möglich, gegebenenfalls aber ratsam sein, das gesamte Dämpfungsbauteil, beispielsweise zur Darstellung gewünschter Steifigkeits-, Festigkeits-, Gleit- oder andere Funktionseigenschaften zu beschichten.

Fig. 26b zeigt eine weitere Ausgestaltung einer Dämpfungsstruktur 350, bei der der Dämpfungsabschnitt 420 im Wesentlichen U-förmig ausgestaltet ist und bei der nur ein Schenkel des Dämpfungsabschnitts 420 über einen Verbindungsabschnitt 440 mit der Trägerstruktur 340 verbunden ist.

Fig. 26c zeigt demgegenüber eine weitere Ausgestaltung, bei der die Dämpfungsstruktur bzw. der Dämpfungsschnitt 420 durch einen hohlkastenförmigen Abschnitt mit einer in einer Ebene senkrecht zu der Drehachse 140 verlaufenden Außenkontur in Form eines Polygons bzw. Rechtecks ausgeführt ist.

Fig. 26d zeigt schließlich eine Ausgestaltung einer Dämpfungsstruktur 350, bei der Dämpfungsabschnitt 420 kreuzförmig ausgestaltet ist und ebenso über einen Verbindungsabschnitt 440 mit der Trägerstruktur 340 verbunden ist.

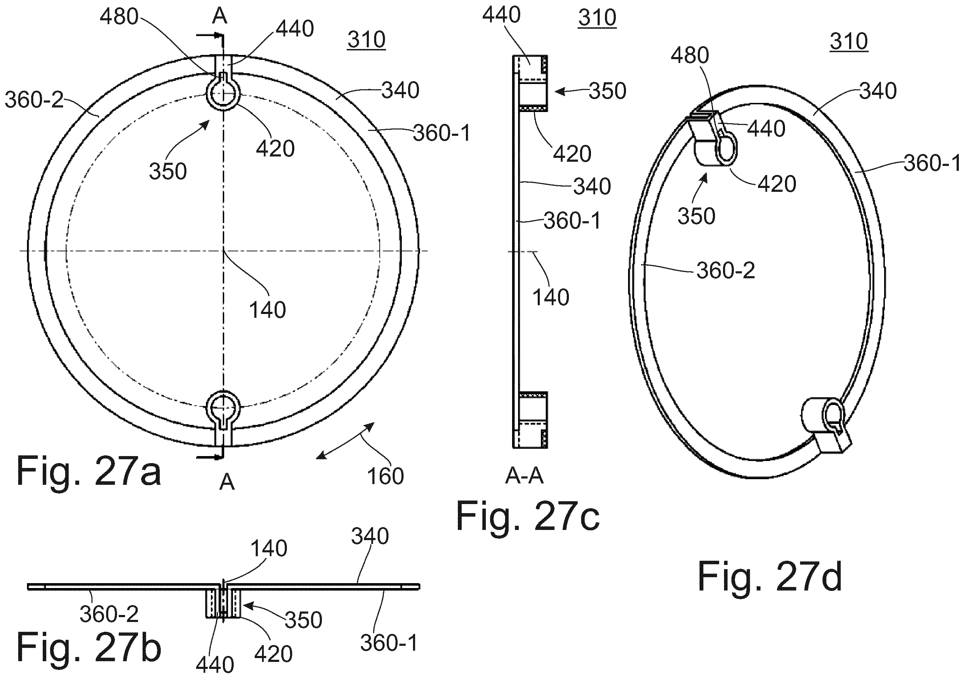

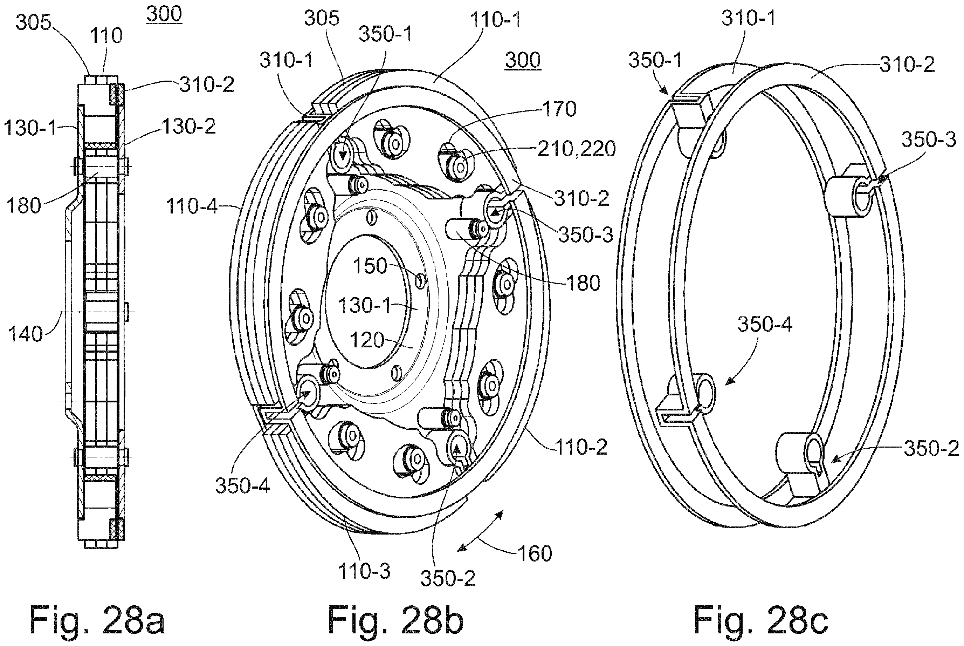

Die Fig. 27a bis D sowie 28a bis C illustrieren eine weitere Variante eines Distanzbauteils 310 sowie eines entsprechenden Tilgerschwingungsdämpfers 300 gemäß einem Ausführungsbeispiel. Bei dieser Variante handelt es sich um ein Distanzbauteil 310 mit nur zwei einander gegenüberliegenden Dämpfungsabschnitten 420. Bei der Verwendung einer solchen Variante kann es gegebenenfalls ratsam sein, zwei Distanzbauteile 310 im Rahmen eines Tilgerschwingungsdämpfers zu verbauen, wie dies in den Fig. 28a bis 28c angedeutet ist. Die beiden gegebenenfalls identisch ausgestalteten Dämpfungsbauteile 310 können hierbei beispielsweise um 90°gedreht zueinander verbaut werden. Fig. 27a, 27b, 27c und 27d zeigen hierbei eine Aufsicht, eine Seitenansicht, eine Schnittdarstellung durch die in Fig. 27a gezeigte Schnittebenen A-A sowie eine perspektivische Darstellung durch das Dämpfungsbauteil 310, welches dem in Fig. 24a bis 24d Dämpfungsbauteil 310 sehr stark ähnelt. Es unterscheidet sich von dem in Fig. 24 gezeigten Dämpfungsbauteil 310 im Wesentlichen dadurch, dass nunmehr anstelle vierer Dämpfungsstrukturen 350 nunmehr das Dämpfungsbauteil 310 nur noch zwei einander gegenüberliegende, also um 180° versetzt zueinander angeordnete Dämpfungsstrukturen 350 aufweist, wobei diese im Wesentlichen identisch zu denen aus Fig. 24 ausgestaltet sind. Lediglich die Verbindungsabschnitte 440 weisen hierbei eine zusätzliche kleine Ausnehmung 480 an einem radial innenliegenden Bereich auf, der beispielsweise zur Gewichtsreduzierung, jedoch auch zur Anpassung einer mechanischen Eigenschaft des betreffenden Dämpfungsbauteils 310 implementiert sein kann.

Die Fig. 28a und 28b zeigen hierbei die gesamte Baugruppe des Tilgerschwingungsdämpfers 300 gemäß einem Ausführungsbeispiel einer Schnittdarstellung sowie in einer isometrischen bzw. perspektivischen Darstellung, bei der jedoch zur Steigerung der Übersichtlichkeit wiederum das zweite Führungsbauteil 130-2 nicht dargestellt ist. Die konstruktive Ausgestaltung des Tilgerschwingungsdämpfers 300 entspricht hierbei im Wesentlichen der des Tilgerschwingungsdämpfers 300, wie dieser in den Fig. 16, 17a und 17b gezeigt ist. Allerdings unterscheiden sich die beiden Tilgerschwingungsdämpfer durch die Verwendung unterschiedlicher Dämpfungsbauteile 310. Während bei der in den Fig. 16, 17a und 17b gezeigten Anordnung ein einziges Dämpfungsbauteil 310 verwendet wurde, kommen hier zwei Dämpfungsbauteile 310-1, 310-2 zum Einsatz, die im Wesentlichen um 90° zueinander verdreht an entgegengesetzten Seiten entlang der Drehachse 140 Enden des Tilgerschwingungsdämpfers 300 integriert sind. Das erste Dämpfungsbauteil 310-1 weist hierbei die zwei Dämpfungsstrukturen 350-1 und 350-2 auf, während das zweite Dämpfungsbauteil 310-2 die beiden Dämpfungsstrukturen 350-3 und 350-4 aufweist. Die Fig. 28c zeigt hierbei die Orientierung der beiden Dämpfungsbauteile 310-1, 310-2 zueinander ohne die weiteren Komponenten des Tilgerschwingungsdämpfers 300 darzustellen.

Bei diesem Tilgerschwingungsdämpfer 300 handelt es sich also um einen solchen, der wenigstens vier Tilgermassen 110 und wenigstens zwei Dämpfungsbauteile 310 umfasst. Die Dämpfungsbauteile 310 sind hierbei gerade so angeordnet und ausgestaltet, dass jede der Tilgermassen 110 bei einer Bewegung entlang einer ersten Richtung entlang der Umfangsrichtung 160 mit einer Dämpfungsstruktur 350 eines anderen Dämpfungsbauteils 310 in Kontakt treten kann als bei einer Bewegung entlang einer der ersten Richtung entgegengesetzten zweiten Richtung.

Genauer gesagt sind die beiden Dämpfungsbauteile gerade so angeordnet, dass eine erste Dämpfungsstruktur des zweiten Dämpfungsbauteils 310 zwischen der ersten Tilgermasse 110-1 und der benachbart zu diesen angeordneten zweiten Tilgermasse 110-2 angeordnet ist. Ebenso ist eine zweite Dämpfungsstruktur 350-4 des zweiten Dämpfungsbauteils 310-2 zwischen der dritten Tilgermasse 110-3 und der benachbart zu dieser angeordneten vierten Tilgermasse 110-4 angeordnet. Auch die erste Dämpfungsstruktur 350-1 des ersten Dämpfungsbauteils ist zwischen der vierten Tilgermasse 110-4 und der benachbart zu dieser angeordneten ersten Tilgermasse 110-1 angeordnet.

Gleiches gilt ebenso für die zweite Dämpfungsstruktur 350-2 dieses Dämpfungsbauteils 350-1, welche zwischen der zweiten Tilgermasse 110-2 und der benachbart zu dieser angeordneten dritten Tilgermasse 110-3 angeordnet ist. Die Dämpfungsstrukturen 350 sind hierbei alle gerade so ausgebildet und angeordnet, dass die betreffenden Tilgermassen 110, zwischen denen diese angeordnet sind, mit ihnen in Kontakt treten können, um das bereits zuvor beschriebene Berühren der zwei benachbarten Tilgermassen gegebenenfalls unterbinden zu können.

Auch hier können Dämpfungsbauteile 310 beispielsweise als Ringelemente zur Verbesserung der Akustik bei drehzahladaptiven Tilgern (DAT), wie sie beispielsweise bei hydrodynamischen Wandlern oder auch anderen Anfahrelementen zum Einsatz kommen können, zum Einsatz gebracht werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichen

- 100: konventioneller Tilgerschwingungsdämpfer
- 110: Tilgermasse
- 120: Flanschbereich
- 130: Führungsbauteil
- 140: Drehachse
- 150: Flanschbereich
- 160: Umfangsrichtung
- 170: Führungslaufbahn
- 180: Distanzniet
- 190: gebogener Abschnitt
- 200: ausgestülpter Abschnitt
- 210: Wälzkörper
- 220: Rolle
- 230: Bahnende
- 240: Fliehkraft
- 250: Gewichtskraft
- 260: Kollisionsort
- 300: Tilgerschwingungsdämpfer
- 305: Einzeltilgermasse
- 310: Dämpfungsbauteil
- 320: Aussparung
- 330: zentrale Ausnehmung
- 340: Trägerstruktur
- 350: Dämpfungsstruktur
- 360: Umfangsabschnitt
- 370: Führungsabschnitt
- 380: Führungsstruktur
- 390: Vorsprung
- 400: Gegenführungsstruktur
- 410: Ausnehmung
- 420: Dämpfungsabschnitt
- 430: Symmetrieebene
- 440: Verbindungsabschnitt
- 450: Axialabschnitt
- 460: Teilkreis
- 470: Beschichtung
- 480: Ausnehmung

## Patentansprüche

1. Tilgerschwingungsdämpfer (300), beispielsweise für einen Antriebsstrang eines Kraftfahrzeugs, zur Dämpfung eines Schwingungsanteils einer Drehbewegung, mit folgenden Merkmalen:
wenigstens drei Tilgermassen (110), die derart ausgebildet sind, um in Abhängigkeit von der Drehbewegung eine Schwingung auszuführen, um den Schwingungsanteil derselben zu dämpfen;
wenigstens einem Führungsbauteil (130), das ausgebildet ist, um die wenigstens drei Tilgermassen (110) derart beweglich zu führen, dass die Tilgermassen (110) entlang einer zu einer Drehachse (140) der Drehbewegung senkrechten Umfangsrichtung (160) versetzt angeordnet sind und die Schwingungen ausführen können;
einem gegenüber dem wenigstens einen Führungsbauteil (130) um die Drehachse (140) der Drehbewegung verdrehbaren Dämpfungsbauteil (310), das eine Trägerstruktur (340) und wenigstens zwei mit der Trägerstruktur (340) verbundene Dämpfungsstrukturen (350) umfasst, die sich von der Trägerstruktur (340) radial erstrecken und so ausgebildet und angeordnet sind, dass jeweils eine Dämpfungsstruktur (350) der wenigstens zwei Dämpfungsstrukturen (350) durch eine elastische Verformung bei einem in Kontakt treten mit einer von zwei benachbarten Tilgermassen (110) ein Berühren der zwei benachbarten Tilgermassen (110) unterbindet, und/oder dass durch ein in Kontakt treten einer Tilgermasse (110) der wenigstens drei Tilgermassen (110) mit einer Dämpfungsstruktur (350) der wenigstens zwei Dämpfungsstrukturen (350) das Dämpfungsbauteil derart um die Drehachse (140) verdrehbar ist, dass eine weitere Dämpfungsstruktur (350) der wenigstens zwei Dämpfungsstrukturen (350) mit einer weiteren Tilgermasse (110) der wenigstens drei Tilgermassen (110) in Kontakt tritt,
**dadurch gekennzeichnet, dass** das Dämpfungsbauteil (310) radial beweglich ausgestaltet ist.

2. Tilgerschwingungsdämpfer (300) nach Anspruch 1, bei dem die Dämpfungsstrukturen (350) jeweils wenigstens einen Dämpfungsabschnitt (420) umfassen, der ausgebildet und angeordnet ist, um mit wenigstens einer der benachbarten Tilgermassen (110) in Kontakt zu treten, und um sich hierbei elastisch zu verformen.

3. Tilgerschwingungsdämpfer (300) nach Anspruch 2, bei dem die Dämpfungsstruktur (350) ferner wenigstens einen Verbindungsabschnitt (440) aufweist, der den wenigstens einen Dämpfungsabschnitt (420) mit der Trägerstruktur (350) verbindet.

4. Tilgerschwingungsdämpfer (300) nach einem der Ansprüche 2 oder 3, bei dem die Dämpfungsstruktur (350) einen ersten Dämpfungsabschnitt (420) und einen zweiten Dämpfungsabschnitt (420) umfasst, wobei der erste Dämpfungsabschnitt ausgebildet und angeordnet ist, um mit einer ersten Tilgermasse (110) in Kontakt zu treten, wobei der zweite Dämpfungsabschnitt ausgebildet und angeordnet ist, um mit einer zu der ersten Tilgermasse (110) benachbart angeordneten zweiten Tilgermasse in Kontakt zu treten.

5. Tilgerschwingungsdämpfer (300) nach einem der vorhergehenden Ansprüche, der wenigstens vier Tilgermassen (110) und wenigstens zwei Dämpfungsbauteile (310) umfasst, wobei die Dämpfungsbauteile (310) so angeordnet und ausgestaltet sind, dass jede Tilgermasse (110) bei einer Bewegung entlang einer ersten Richtung entlang der U mfangsrichtung (160) mit einer Dämpfungsstruktur (350) eines anderen Dämpfungsbauteils (310) in Kontakt treten kann als bei einer Bewegung entlang einer der ersten Richtung entgegengesetzten zweiten Richtung.

6. Tilgerschwingungsdämpfer (300) nach einem der vorhergehenden Ansprüche, bei dem die Trägerstruktur (340) ausgebildet ist, um die wenigstens zwei Dämpfungsstrukturen (350) miteinander zu verbinden.

7. Tilgerschwingungsdämpfer (300) nach einem der vorhergehenden Ansprüche, bei der das Dämpfungsbauteil (310) aus einem Kunststoff, beispielsweise einem spritzgießfähigen Kunststoff, und/oder einem metallischen Werkstoff gefertigt ist, so dass ggf. eine Kombination eines Metallrings mit aufgespritztem Kunststoff entsteht.

8. Tilgerschwingungsdämpfer (300) nach einem der vorhergehenden Ansprüche, bei der die Dämpfungsstrukturen (350) in einem Bereich, in dem sie während des Betriebs des Tilgerschwingungsdämpfers(300) mit einer Tilgermasse (110) in Kontakt treten können, eine Beschichtung aus einem Duroplast, einem Thermoplast, einem Elastomer oder einem Gummi aufweisen, sodass eine Geräuschentwicklung im Vergleich zu einer rein metallischen Materialpaarung reduziert wird.

9. Tilgerschwingungsdämpfer (300) nach einem der vorhergehenden Ansprüche, bei dem die Trägerstruktur (340) ausgebildet ist, um das Dämpfungsbauteil (310) gegenüber dem wenigstens einen Führungsbauteil (130) drehbar zu lagern.

10. Tilgerschwingungsdämpfer (300) nach Anspruch 9, bei dem das Dämpfungsbauteil (350) ausgebildet ist, um entlang der Umfangsrichtung (160) der Drehbewegung eine Verdrehung des Dämpfungsbauteils (310) gegenüber dem wenigstens einen Führungsbauteil (130) um einen maximalen Verdrehwinkel zu ermöglichen und eine Verdrehung des Dämpfungsbauteils (310) gegenüber dem wenigstens einen Führungsbauteil (130) um einen den maximalen Verdrehwinkel überschreitenden Winkel zu unterbinden.

## Claims

1. Absorber-type vibration damper (300), for example for a drive train of a motor vehicle, for damping a vibration component of a rotational movement, having the following features:
at least three absorber masses (110) which are configured in such a way as to carry out a vibration in a manner which is dependent on the rotational movement, in order to damp the vibration proportion of the said rotational movement;
at least one guide component (130) which is configured so as to guide the at least three absorber masses (110) movably in such a way that the absorber masses (110) are arranged offset along a circumferential direction (160) which is perpendicular with respect to a rotational axis (140) of the rotational movement, and that the said absorber masses (110) can carry out the vibrations;
a damping component (310) which can be rotated about the rotational axis (140) of the rotational movement with respect to the at least one guide component (130) and comprises a carrier structure (340) and at least two damping structures (350) which are connected to the carrier structure (340), extend radially from the carrier structure (340), and are configured and arranged in such a way that in each case one damping structure (350) of the at least two damping structures (350) suppresses contact of the two adjacent absorber masses (110) by way of an elastic deformation in the case of coming into contact with one of two adjacent absorber masses (110), and/or that the damping component can be rotated about the rotational axis (140) by way of an absorber mass (110) of the at least three absorber masses (110) coming into contact with a damping structure (350) of the at least two damping structures (350) of the damping component, in such a way that a further damping structure (350) of the at least two damping structures (350) comes into contact with a further absorber mass (110) of the at least three absorber masses (110), **characterized in that** the damping component (310) is of radially movable configuration.

2. Absorber-type vibration damper (300) according to Claim 1, in which the damping structures (350) comprise in each case at least one damping section (420) which is configured and arranged so as to come into contact with at least one of the adjacent absorber masses (110) and so as to be deformed elastically in the process.

3. Absorber-type vibration damper (300) according to Claim 2, in which, furthermore, the damping structure (350) has at least one connecting section (440) which connects the at least one damping section (420) to the carrier structure (350).

4. Absorber-type vibration damper (300) according to either of Claims 2 and 3, in which the damping structure (350) comprises a first damping section (420) and a second damping section (420), the first damping section being configured and arranged so as to come into contact with a first absorber mass (110), the second damping section being configured and arranged so as to come into contact with a second absorber mass which is arranged adjacently with respect to the first absorber mass (110).

5. Absorber-type vibration damper (300) according to one of the preceding claims which comprises at least four absorber masses (110) and at least two damping components (310), the damping components (310) being arranged and configured in such a way that, in the case of a movement along a first direction, each absorber mass (110) can come into contact along the circumferential direction (160) with a damping structure (350) of a different damping component (310) than in the case of a movement along a second direction which is opposed to the first direction.

6. Absorber-type vibration damper (300) according to one of the preceding claims, in which the carrier structure (340) is configured so as to connect the at least two damping structures (350) to one another.

7. Absorber-type vibration damper (300) according to one of the preceding claims, in which the damping component (310) is manufactured from a plastic, for example a plastic which can be injection moulded, and/or a metallic material, with the result that a combination of a metal ring with plastic which is injection moulded onto it is possibly produced.

8. Absorber-type vibration damper (300) according to one of the preceding claims, in which the damping structures (350) have a coating comprising a thermoset, a thermoplastic, an elastomer or a rubber in a region, in which they can come into contact with an absorber mass (110) during the operation of the absorber-type vibration damper (300), with the result that a development of noise is reduced in comparison with a purely metallic material pairing.

9. Absorber-type vibration damper (300) according to one of the preceding claims, in which the carrier structure (340) is configured so as to mount the damping component (310) rotatably with respect to the at least one guide component (130).

10. Absorber-type vibration damper (300) according to Claim 9, in which the damping component (350) is configured so as to make a rotation of the damping component (310) possible with respect to the at least one guide component (130) by a maximum rotary angle along the circumferential direction (160) of the rotational movement, and so as to suppress a rotation of the damping component (310) with respect to the at least one guide component (130) by an angle which exceeds the maximum rotary angle.

## Revendications

1. Amortisseur d'oscillations à absorbeur (300), par exemple pour une chaîne cinématique d'un véhicule automobile, pour l'amortissement d'une partie des oscillations d'un mouvement de rotation, comprenant les caractéristiques suivantes :
au moins trois masses d'absorbeur (110) qui sont réalisées de manière à effectuer un mouvement d'oscillation en fonction du mouvement de rotation afin d'en amortir une partie des oscillations ;
au moins un composant de guidage (130) qui est réalisé de manière à guider le mouvement des au moins trois masses d'absorbeur (110) de telle sorte que les masses d'absorbeur (110) soient disposées de manière décalée le long d'une direction périphérique (160) perpendiculaire à un axe de rotation (140) du mouvement de rotation et puissent effectuer les oscillations ;
un composant d'amortissement (310) pouvant tourner par rapport à l'au moins un composant de guidage (130) autour de l'axe de rotation (140) du mouvement de rotation, lequel comprend une structure de support (340) et au moins deux structures d'amortissement (350) connectées à la structure de support (340), qui s'étendent radialement depuis la structure de support (340) et qui sont réalisées et disposées de telle sorte qu'une structure d'amortissement (350) des au moins deux structures d'amortissement (350), par déformation élastique lors de la mise en contact avec l'une de deux masses d'absorbeur adjacentes (110), supprime à chaque fois un contact des deux masses d'absorbeur adjacentes (110), et/ou de telle sorte que par une mise en contact d'une masse d'absorbeur (110) des au moins trois masses d'absorbeur (110) avec une structure d'amortissement (350) des au moins deux structures d'amortissement (350), le composant d'amortissement puisse être tourné autour de l'axe de rotation (140) de telle sorte qu'une structure d'amortissement supplémentaire (350) des au moins deux structures d'amortissement (350) vienne en contact avec une masse d'absorbeur supplémentaire (110) des au moins trois masses d'absorbeur (110), **caractérisé en ce que** le composant d'amortissement (310) est réalisé de manière déplaçable radialement.

2. Amortisseur d'oscillations à absorbeur (300) selon la revendication 1, dans lequel les structures d'amortissement (350) comprennent chacune au moins une portion d'amortissement (420) qui est réalisée et disposée de manière à venir en contact avec au moins l'une des masses d'absorbeur adjacentes (110), afin de se déformer ainsi élastiquement.

3. Amortisseur d'oscillations à absorbeur (300) selon la revendication 2, dans lequel la structure d'amortissement (350) présente en outre au moins une portion de liaison (440) qui relie l'au moins une portion d'amortissement (420) à la structure de support (350).

4. Amortisseur d'oscillations à absorbeur (300) selon l'une quelconque des revendications 2 et 3, dans lequel la structure d'amortissement (350) comprend une première portion d'amortissement (420) et une deuxième portion d'amortissement (420), la première portion d'amortissement étant réalisée et disposée de manière à venir en contact avec une première masse d'absorbeur (110), la deuxième portion d'amortissement étant réalisée et disposée de manière à venir en contact avec une deuxième masse d'absorbeur disposée en position adjacente à la première masse d'absorbeur (110).

5. Amortisseur d'oscillations à absorbeur (300) selon l'une quelconque des revendications précédentes, comprenant au moins quatre masses d'absorbeur (110) et au moins deux composants d'amortissement (310), les composants d'amortissement (310) étant disposés et configurés de telle sorte que chaque masse d'absorbeur (110), lors d'un déplacement le long de la direction périphérique (160) dans une première direction, puisse venir en contact avec une structure d'amortissement (350) d'un composant d'amortissement (310) autre que dans le cas d'un déplacement dans une deuxième direction opposée à la première direction.

6. Amortisseur d'oscillations à absorbeur (300) selon l'une quelconque des revendications précédentes, dans lequel la structure de support (340) est réalisée de manière à relier l'une à l'autre les au moins deux structures d'amortissement (350).

7. Amortisseur d'oscillations à absorbeur (300) selon l'une quelconque des revendications précédentes, dans lequel le composant d'amortissement (310) est fabriqué à partir d'un plastique, par exemple un plastique pouvant être moulé par injection, et/ou à partir d'un matériau métallique, de telle sorte que l'on obtienne éventuellement une combinaison d'une bague métallique avec un plastique surmoulé.

8. Amortisseur d'oscillations à absorbeur (300) selon l'une quelconque des revendications précédentes, dans lequel les structures d'amortissement (350), dans une région dans laquelle elles peuvent venir en contact avec une masse d'absorbeur (110) pendant le fonctionnement de l'amortisseur d'oscillations à absorbeur (300), présentent un revêtement constitué d'un matériau duroplastique, thermoplastique, élastomère ou d'un caoutchouc, de telle sorte qu'un développement de bruit soit réduit par rapport à un appariement de matériaux purement métallique.

9. Amortisseur d'oscillations à absorbeur (300) selon l'une quelconque des revendications précédentes, dans lequel la structure de support (340) est réalisée de manière à supporter à rotation le composant d'amortissement (310) par rapport à l'au moins un composant de guidage (130).

10. Amortisseur d'oscillations à absorbeur (300) selon la revendication 9, dans lequel le composant d'amortissement (350) est réalisé de manière à permettre, le long de la direction périphérique (160) du mouvement de rotation, une rotation du composant d'amortissement (310) par rapport à l'au moins un composant de guidage (130) autour d'un angle de rotation maximal et à supprimer une rotation du composant d'amortissement (310) par rapport à l'au moins un composant de guidage (130) autour d'un angle dépassant l'angle de rotation maximal.
